(19) Europäisches Patentamt
European Patent Office
Office européen des brevets

(11) EP 2 256 237 B1

(12) **EUROPEAN PATENT SPECIFICATION**

(45) Date of publication and mention of the grant of the patent:
**27.02.2013 Bulletin 2013/09**

(21) Application number: **09724008.9**

(22) Date of filing: **10.03.2009**

(51) Int Cl.:
***D01F 6/60*** *(2006.01)*
***B60R 21/16*** *(2006.01)*
***C08G 69/26*** *(2006.01)*
***D02G 3/02*** *(2006.01)*
***D02J 1/22*** *(2006.01)*
***D03D 1/02*** *(2006.01)*
***D03D 15/00*** *(2006.01)*

(86) International application number:
**PCT/JP2009/054478**

(87) International publication number:
**WO 2009/119302 (01.10.2009 Gazette 2009/40)**

(54) **POLYAMIDE 56 FILAMENT, AND FIBER STRUCTURE AND AIR-BAG BASE CLOTH EACH COMPRISING THE SAME**

POLYAMID-56-FILAMENT SOWIE FASERSTRUKTUR UND AIRBAG-STOFF DAMIT

FILAMENT DE POLYAMIDE 56 ET STRUCTURE DE FIBRE ET TISSU DE BASE DE COUSSIN DE SÉCURITÉ GONFLABLE COMPRENANT CHACUN CELUI-CI

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **26.03.2008 JP 2008079598**

(43) Date of publication of application:
**01.12.2010 Bulletin 2010/48**

(73) Proprietor: **Toray Industries, Inc.**
**Tokyo 103-8666 (JP)**

(72) Inventors:
- **FUKUDOME, Kousuke**
**Mishima-shi**
**Shizuoka 411-8652 (JP)**
- **MOCHIZUKI, Katsuhiko**
**Mishima-shi**
**Shizuoka 411-8652 (JP)**

(74) Representative: **Webster, Jeremy Mark et al**
**Mewburn Ellis LLP**
**33 Gutter Lane**
**London**
**EC2V 8AS (GB)**

(56) References cited:
**JP-A- 2002 194 079**
**JP-A- 2003 292 612**
**JP-A- 2004 075 932**
**JP-A- 2004 208 646**
**JP-A- 2006 144 163**
**JP-A- 2009 068 132**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 256 237 B1

## Description

[Technical field]

The present invention relates to polyamide 56 filaments with a small single fiber fineness. More particularly, this invention relates to polyamide 56 filaments with high strength not only in ordinary states but also after boiling water treatment, and yet low elastic modulus and excellent flexibility, and in addition, excellent heat resistance and durability. This invention further relates to a fiber structure containing said filaments, airbag fabric and resin pellets suitable for producing said filaments.

[Background art]

As safety devices for protecting passengers of automobiles, the installation of airbag devices is increasing at a rapid pace. In addition to the conventional airbag devices for drivers' seats and other front seats, recently, side airbag devices, knee airbag devices, curtain airbag devices, etc. are also developed and installed.

An airbag is usually a sewn bag and is folded and accommodated inside an automobile part such as a steering wheel. When an impact is applied to a car, the shock is detected by a sensor, and a high temperature gas is generated explosively from an inflator, to instantaneously inflate the airbag, for preventing the passenger from being moved by the collision, to thereby assure the safety of the passenger.

Therefore, the fabric used for the airbag (hereinafter may be referred to simply as an airbag fabric) is required to have such properties as low air permeability (in order to allow the bag to be instantaneously inflated, the fabric is required to be small in air permeability), high strength (in order to endure the instantaneous inflation, the fabric is required to be high in tensile strength, tear tenacity, burst strength, etc.), impact absorbability (lest the passenger should be injured when the inflated airbag hits the passenger, the fabric is required to be highly able to absorb energy), heat resistance (the fabric is required to endure the high temperature gas generated from the inflator), durability (the fabric is required to be durable without declining in such properties as strength even in a high-temperature high-humidity environment as in a desert), and flexibility (the fabric is required to be so flexible as to allow the accommodation volume thereof to be reduced, since the air bag is usually accommodated in a narrow space as in a steering wheel, instrument panel, etc.). High weave density fabrics formed of polyamide 66 filaments are used, since they have all of these properties satisfactorily.

Non-coated fabrics formed of said high weave density fabrics only and coated fabrics coated with elastomers such as silicone resins are known. The former is more disadvantageous than the latter in view of air permeability but has such features as high flexibility and excellent accommodation capability. On the other hand, though the latter is inferior to the former in accommodation capability, the latter has an advantage that the inflation speed can be easily enhanced owing to low air permeability. Therefore, in response to the regions where the airbags are accommodated, these fabrics are selectively used.

Especially recently, airbag devices are installed in more regions, and tend to be required to have higher accommodation capability so that they can be installed in more narrow spaces. Therefore, the fabrics are required to be further more flexible than before. Further, the performance of inflators is progressively improved to dramatically enhance the inflation speed of airbags, but on the other hand, airbag fabrics are required to have higher energy absorbability for preventing that the passengers are exposed to the excessive impact forces and frictional forces of the inflated airbags hitting the passengers.

For example, patent document 1 discloses a heat-shrunken non-coated woven fabric formed of synthetic filaments with the overall fineness kept in a specific range and having weave symmetrical in warp and weft directions. As a particular example, a woven fabric formed of polyamide 66 filaments with high strength is disclosed. Owing to the effect attributable to the overall fineness of filaments kept in a specific range and to the highly symmetric weave, a thin woven fabric with high strength can also be formed. However, since polyamide 66 filaments with high strength have high elastic modulus still after they have been heat-shrunken, the bending stiffness of the fibers constituting the fabric is high, and the fabric is insufficient in view of flexibility. Further, in the case where the woven fabric is heat-shrunken, the shrinking forces of the fibers excessively bind yarns together, causing the fabric to be hardened, and if the fabric is insufficiently flexible, not only the accommodation capability but also the impact absorbability of the airbag decline. In severe cases, the impact at the time of inflation may injure the passenger as the case may be.

Accordingly attempts are made to extremely reduce the single fiber fineness of polyamide 66 filaments as a means for enhancing the flexibility and impact absorbability of the airbag fabric, for lowering the apparent bending stiffness of filaments. However, filaments with a small single fiber fineness are likely to generate fuzz in the yarn forming process (spinning and stretching process) and in the weaving process, and the fuzz becomes a defect of airbags. Therefore, the operation performance and yield surface as large problems.

On the other hand, an airbag fabric formed of multifilaments with high strength and low elastic modulus is disclosed (see patent document 2). Patent document 2 proposes that filaments with low elastic modulus formed of, for example, polybutylene terephthalate can be used to form an airbag fabric with high flexibility compared with the airbag fabric formed of polyamide 66 filaments. However, since a polyester such as polybutylene terephthalate has a low melting point, the high temperature gas of the inflator may cause holes to be formed in the fabric as the case may be. Otherwise, even if holes are not formed, a high performance inflator may cause the fabric to be burst owing to high speed inflation as the case may be. These problems occur since the abovementioned polyester-based polymer is lower in strength than the polyamide 66 and is also low in impact resistance, i.e., low in the capability to follow high speed deformation.

As described above, if polyester filaments with low elastic modulus formed of polyethylene terephthalate or the like are used, the fabric can be made flexible, but since such properties as heat resistance and burst strength must also be taken into consideration from a comprehensive viewpoint, no practical airbag fabric formed of such polyester filaments has been successfully developed. So far, since the relation between the strength and elastic modulus of synthetic fibers is generally decided by the molecular structural features of the polymer, it has been technically difficult to lower the elastic modulus of polyamide 66 filaments as described in patent document 2. Of course, a modifying means such as copolymerizing the polyamide 66 with another monomer can also be considered, but this means involves a problem that the heat resistance of the airbag fabric cannot be satisfied since the melting point of fibers declines.

That is, the airbag fabric formed of the conventional polyamide 66 filaments is not satisfactory enough in view of flexibility and impact absorbability.

Meanwhile, recently environment awareness surges on a global scale, and it is highly demanded to develop fiber materials derived from other than petroleum. The conventional synthetic fibers of polyamides and others are mainly produced from petroleum resources, and the exhaustion of petroleum resources in future and the global warming caused by mass consumption of petroleum resources are taken up as large issues.

If plant resources that grow by taking carbon dioxide from air are used as raw materials, carbon dioxide can be recycled with an expectation to inhibit global warming and to solve the problem of resource exhaustion. Therefore, in recent years, plastics using plant resources as starting materials, i.e., biomass-derived plastics (hereinafter referred to as "biomass plastics") attract attention.

Typical biomass plastics include aliphatic polyesters such as polylactic acid, and research and development is energetically conducted. However, since such properties as strength, heat resistance, impact resistance and hydrolysis resistance are lower than those of polyamide fibers, biomass plastics could not be applied to the areas requiring high levels of safety properties such as airbag fabrics.

As a novel biomass plastic material, polypentamethylene adipamide (polyamide 56) obtained by heat-polymerizing 1,5-pentamethylenediamine produced by use of biomass and adipic acid is disclosed (see patent documents 3 and 4). The polyamide 56 produced by a heat polymerization method (non-patent document 1) has been known, but it is merely reported that the polyamide 56 produced by heat polymerization is lower in melting point and hence lower in heat resistance than the polyamide 56 produced by an interfacial polymerization method (non-patent documents 2 and 3). On the other hand, an interfacial polymerization method is a complicated process, and it is difficult to establish an interfacial polymerization method as an industrial production process. Therefore, highly pure 1,5-pentamethylenediamine obtained, for example, by enzyme reaction using lysine decarboxylase is used as described in patent document 3, or a specific polymerization method is employed as described in patent document 4, to successfully produce a polyamide 56 resin with a high melting point and a practical polymerization degree for the first time by a heat polymerization method. Said polyamide 56 resin is excellent in molten storage stability and also good in spinnability and stretchability, and therefore suitable as a fiber material, and the polyamide 56 filaments obtained by melt-spinning and stretching said polyamide 56 resin are excellent in mechanical properties, heat resistance, etc. However, in the case where said polyamide 56 resin is used to form filaments with a small overall fineness and a small single fiber fineness required as the filaments of an airbag fabric, such filaments have a problem in view of the strength of fibers.

Further, since filaments formed of the polyamide 56 are excellent in transparency and high in strength (patent document 5), it is disclosed that a monofilament with a large fineness suitable, for example, as a fishing line can be produced. However, if it is attempted to produce filaments with a small overall fineness and a small single fiber fineness as required for an airbag fabric, yarn breaking frequently occurs in the spinning process and the stretching process, and the obtained fibers have much fuzz and are likely to be low in strength. Further, the obtained fibers are likely to be shrunken by heat treatment such as boiling water treatment, and after they have been shrunken, the strength further declines.

Therefore, even if they are woven into a woven fabric, the fabric has fuzz as a defect, and is likely to be high in air permeability. Further, immediately after being woven, the fabric has low strength, and the heat history in scouring and final setting further lowers the strength. Therefore, the fabric obtained does not have the properties required as an airbag fabric in view of air permeability and mechanical properties.

[Patent document 1] Japanese Patent 2950954 (claims)
[Patent document 2] Japanese Patent 3180524 (claims)

[Patent document 3] JP 2003-292612 A (claims, [0045])
[Patent document 4] JP 2004-075932 A (claims, [0034])
[Patent document 5] JP 2006-144163 A (claims)
[Non-patent document 1] J. Polym. Sci. 2, 306 (1947)
[Non-patent document 2] J. Polym. Sci. 50, 87 (1961)
[Non-patent document 3] Macromolecules, 30, 8540 (1998)

[Disclosure of the invention]

[Problem to be solved by the invention]

The problem to be solved by the invention is to provide polyamide 56 filaments capable of forming an airbag fabric more excellent in flexibility and impact absorbability than an airbag fabric formed of the conventional polyamide 66 filaments and also excellent in low air permeability, high strength, heat resistance and durability in good balance, and further provides a fiber structure containing said filaments and an airbag fabric.

[Means for solving the problem]

The inventors made an intensive study on the inhibition of fuzz and the enhancement of mechanical properties and heat shrinkage properties of polyamide 56 filaments with a small fineness, and as a result, succeeded in forming polyamide 56 filaments with a high relative viscosity in sulfuric acid and a small molecular weight distribution (Mw/Mn), to produce polyamide 56 filaments sufficiently enhanced in the orientation degree of polyamide 56 molecular chains and in the degree of crystallinity in the yarn forming process by the synergism of the high relative viscosity and the small molecular weight distribution, having little fuzz though being small in fineness, and also having excellent mechanical properties and heat shrinkage properties.

The inventors further made a deep study, and as a result, surprisingly, could successfully obtain filaments dramatically lowered in elastic modulus by heat-shrinking the filaments containing the polyamide 56 by wet heat treatment such as boiling water treatment. Further, the inventors found that if the heat shrinkage properties of the filaments are kept in specific ranges, filaments with high strength but low elastic modulus could be obtained even after shrinkage treatment. As a result, the inventors found that if a woven fabric formed of said polyamide 56 filaments is heat-shrunken in the process of scouring, final setting, etc., an airbag fabric more excellent in flexibility and impact absorbability than the airbag fabric formed of the conventional polyamide 66 filaments and also excellent in low air permeability, high strength, heat resistance and durability ca be obtained. Thus, this invention has been completed.

This invention can be achieved by polyamide 56 filaments characterized by having a relative viscosity in sulfuric acid of 3 to 8, (measured at a concentration of 0.25g/100ml of 98 wt% sulfuric acid at 25°C) an Mw/Mn ratio of 1.5 to 3, a single fiber fineness of 0.1 to 7 dtex, a strength of 7 to 12 cN/dtex, a shrinkage rate of 5 to 20% after having been subjected to boiling water treatment at 98°C for 30 minutes, a strength of 5 to 11 cN/dtex after the boiling water treatment and a stress at 10% elongation of 0.3 to 1.5 cN/dtex after the boiling water treatment.

[Effects of the invention]

The polyamide 56 filaments of this invention are an environmentally friendly material, since they contain a polyamide 56 as a biomass plastic material. Further, since the polyamide 56 filaments are excellent in mechanical properties, heat resistance, wear resistance and durability, the filaments can be widely used for clothing and industrial materials, and a fiber structure containing the filaments can also be provided.

Further, the filaments are heat-shrunken by such a means as wet heat treatment into filaments with high strength and low elastic modulus, and the woven fabric obtained by weaving said filaments is subsequently heat-treated by scouring, final setting, etc. It can be suitably used for airbags as a fabric more excellent in flexibility and impact absorbability than the woven fabric formed of the conventional polyamide 66 filaments and also excellent in low air permeability, high strength, heat resistance and durability.

[Brief description of the drawings]

[Fig. 1] is a typical view of a direct spinning, stretching and heat treatment apparatus equipped with a single-screw kneader.
[Fig. 2] is a typical view showing a mode of airbag.

[Fig. 3] is a typical view showing an impact absorbability measuring instrument.

[Meanings of symbols]

1: hopper
2: single-screw extruder
3: polymer pipe
4: gear pump
5: spinning block
6: spinning pack
7: spinnerette
8: heating cylinder
9: cooling device (annular type)
10: yarn (filaments)
11: oiling device
12: first rolls
13: second rolls
14: third rolls
15: fourth rolls
16: fifth rolls (final heating rolls)
17: sixth rolls
18: entangling nozzle
19: winder
20: cheese package
21: fabric of passenger side
22: fabric of inflator side
23: opening
24: vent hole
25: airbag
26: rubber balloon
27: iron ball

[The best modes for carrying out the invention]

It is preferred that the polyamide 56 filaments of this invention are such that a polyamide 56 consisting of pentamethylene adipamide units accounts for 90 mol% or more of recurring units. A pentamethylene adipamide unit is a structural unit consisting of 1,5-pentamethylenediamine and adipic acid. To such an extent that the effects of this invention are not impaired, the polyamide 56 filaments may contain less than 10 mol% of a comonomer component, but it is preferred that more pentamethylene adipamide units are contained, since the regularity of the molecular chains can be so enhanced that the orientation and crystallization in the film forming process can occur more easily to provide filaments excellent in mechanical properties and heat resistance. The larger content of pentamethylene adipamide units is also preferred for the reason that in the case where the polyamide 56 filaments are used as a coated airbag coated with an elastomer such as silicone rubber, the adhesiveness between the elastomer and the woven fabric can be maintained for a long period of time, that is, excellent adhesiveness durability can be obtained. The reason is estimated to be that the molecular weight of pentamethylene adipamide units as recurring units is smaller than that of hexamethylene adipamide units contained in the conventional polyamide 66, etc., and therefore that the concentration of amide bonds per unit weight is higher to increase the bonds formed between the fibers and the elastomer (hydrogen bonds, covalent bonds, etc.). In view of the above, it is more preferred that pentamethylene adipamide units account for 94 mol% or more. More preferred is 96 mol% or more, and most preferred is 98 mol% or more. Further, the polyamide 56 filaments of this invention may also contain less than 10 wt% of another component described later.

It is necessary that the filaments of the present invention have a relative viscosity in sulfuric acid of 3 to 8 as an indicator of the molecular weight. It is preferred that the relative viscosity in sulfuric acid is higher, that is, the molecular weight is higher, since the strength of the filaments becomes higher. The reason is considered to be that if the molecular weight is higher, the amount of the ends (likely to be structural defects of filaments) of the molecular chains existing per unit volume is smaller, and further that since the molecular chains are longer, each molecular chain interacts with more molecular chains (physical entanglement, hydrogen bonds, van der Waals forces, etc.), allowing spinning stresses and stretching stresses to be uniformly transferred, and therefore that the molecular chains are uniformly oriented in the process for producing filaments. On the other hand, it is preferred that the relative viscosity in sulfuric acid is kept in an appropriate range, since melt spinning at an appropriate spinning temperature becomes possible to inhibit the thermal decomposition of the polymer in the spinning machine, for assuring good yarn formability and inhibiting the coloration of the fibers. The relative viscosity kept in the appropriate range is also preferred since the dispersion degree (Mw/Mn) can also be kept small owing to inhibited thermal decomposition. A more preferred range is 3.1 to 7, and a further more preferred range is 3.2 to 6. An especially preferred range is 3.3 to 5, and the best range is 3.4 to 4.

Further, it is very important that the filaments of this invention are narrow in the molecular weight distribution, and it is necessary that the dispersion degree (Mw/Mn) as an indicator of molecular weight distribution is 1.5 to 3. In this case, Mw stands for weight average molecular weight, and Mn stands for number average molecular weight. The ratio of weight average molecular weight to number average molecular weight Mw/Mn being smaller means that the molecular weight distribution is narrower. Filaments with a high relative viscosity in sulfuric acid and with a narrow molecular weight distribution of 3 or lower as Mw/Mn as described above are preferred, since filaments with high strength, with small shrinkage rate in boiling water treatment and with high strength kept still after boiling water treatment can be obtained. The reason is estimated to be that if Mw/Mn, i.e., the distribution of molecular chain lengths is small, the numbers of molecular chains interacting with each other and the interacting forces (physical entangling forces, hydrogen bond forces, van der Waals forces, etc.) of respective molecular chains become generally equal, causing the spinning stresses and stretching stresses to be uniformly applied to the respective molecular chains in the film forming process, as a result, that the molecular chains of amorphous phases are uniformly oriented to form many highly dense oriented crystal phases. Further, owing to the effect of the uniformly oriented molecular chains, many amorphous chains (inter-tying molecules) for connecting the crystal phases each other exist in the amorphous phases, and the molecular chain lengths of said inter-typing molecules are relatively equal. Therefore, it is estimated that many of them exist in tensioned states (motions are constrained by crystal phases). That is, since many highly dense oriented crystal phases are contained and tied by many tensioning inter-tying molecules, they act synergetically to provide polyamide 56 filaments with high strength, with small shrinkage rate even in heat treatment such as boiling water treatment and with high strength kept even after the heat treatment. It is more preferred that Mw/Mn is 2.8 or lower. More preferred is 2.6 or lower, and especially preferred is 2.4 or lower. It is preferred that Mw/Mn is lower, and a ratio of 1.5 or higher is a level to allow production.

It is preferred that the filaments of this invention for an airbag fabric have an overall fineness of 200 to 600 dtex. It is preferred that the overall fineness is 600 dtex or smaller for such reasons that even a high weave density fabric can be formed into a highly flexible thin fabric, and therefore that in the case where it is used as an airbag fabric, it can be used as a fabric with high accommodation capability and excellent impact absorbability. On the other hand, it is preferred that the overall fineness is 200 dtex or larger for such reasons that a woven fabric with sufficiently high tensile strength can be obtained, and therefore that a fabric satisfying the strength required as an airbag fabric, etc. can be formed. A more preferred range is 250 to 550 dtex, and a further more preferred range is 300 to 500 dtex.

Further, it is preferred that the filaments of this invention have a single fiber fineness of 0.1 to 7 dtex. It is preferred that the single fiber fineness is 7 dtex or smaller for such reasons that the bending stiffness of single fibers declines to also lower the bending stiffness as multifilaments, and as a result that the woven fabric can have higher flexibility. Further, the single fiber fineness of 7 dtex or smaller is also preferred for such reasons that since a smaller single fiber fineness results in a larger specific surface area of fibers, the forces of binding the multifilaments constituting the weave each other become high, consequently that the woven fabric formed of such filaments is less likely to be deformed in weave texture by external forces (tensile forces, frictional forces, impact forces, etc.), accordingly that in the case where the filaments are used as an airbag fabric, when the fabric is inflated by the inflator, the weave around sewn portions can be prevented from being deformed to cause gas leak, and that an airbag with low air permeability can be formed at a good yield. On the other hand, it is preferred that the single fiber fineness is 0.1 dtex or larger for such reasons that the generation of fuzz in the yarn forming process can be inhibited to allow stretching at a high ratio, and therefore that filaments with high strength and unlikely to be shrunken by heat treatment such as boiling water treatment can be formed. A more preferred range is 1 to 6 dtex, and a further more preferred range is 1.5 to 4 dtex.

Meanwhile, the number of filaments in this invention can be selected to suit each purpose and application if the abovementioned overall fineness and single fiber fineness can be kept in the respective ranges. A preferred range is 10 to 1000.

Further, it is preferred that the filaments of this invention have a strength of 7 cN/dtex or higher. It is preferred that the strength is 7 cN/dtex or higher for such reasons that even if the weave tension in the weaving process is enhanced, fuzz is unlikely to be generated, and therefore that a high weave density fabric can be obtained with a good capability of smoothly undergoing the production process. Therefore, more preferred is 7.5 cN/dtex or higher, and further more preferred is 8 cN/dtex or higher. A higher strength is preferred, but if it is attempted to produce filaments too high in strength, yarn breaking and fuzz are likely to occur due to high stretching tension in the yarn forming process (stretching process). Therefore, more preferred is 11.5 cN/dtex or lower, and further more preferred is 11 cN/dtex or lower.

The polyamide 56 of this invention provides filaments with such a high strength, but if the prior art is used to produce polyamide 56 filaments small in both overall fineness and single fiber fineness, fuzz and yarn breaking are likely to occur in the stretching process. Therefore, it is necessary to lower the stretching ratio and it is difficult to produce filaments with a strength of 7 cN/dtex or higher. The inventors made an intensive study and as a result, found that 1,5-pentamethylenedimaine as a raw material of the polyamide 56 is likely to be volatilized or cyclized in the polymerization process, that the polyamide 56 is not so high in molten storage stability, that crystallinity is lower than the conventional polyamide 66, and therefore that because of these features, in the polymerization process and the yarn forming process, the molecular weight distribution is likely to widen and that especially polyamide 56 filaments with a high molecular weight are more than 3 in Mw/Mn, making it difficult to uniformly orient the molecular chains and inducing fuzz and yarn breaking in the spinning and stretching process. When the specific production method as described later was employed, polyamide 56 filaments with a high molecular weight and a narrow molecular weight distribution could be formed for the first time. Thus, a success was made in obtaining filaments with a small fineness and a high strength. Further, surprisingly, it was found that polyamide 56 filaments with an Mw/Mn ratio of 3 or lower could have a strength higher than that of the conventional polyamide 66. The reason is estimated to be that spherulites are unlikely to be formed in the yarn forming process, since the crystallinity of the polyamide 56 is low, and that filaments unlikely to contain structural defects can be obtained.

Further, it is preferred that the shrinkage rate of the polyamide 56 filaments of this invention after having been subjected to boiling water treatment at 98°C for 30 minutes is 5 to 20%. It is preferred that the shrinkage rate by the boiling water treatment is 20% or lower for such reasons that the orientation degree of molecular chains does not decline extremely during the boiling water treatment, and therefore that filaments with high strength kept even after the boiling water treatment can be obtained as described later. Further, since the filaments can be sufficiently shrunken in the processing to heat-shrink the woven fabric, a flexible woven fabric can be obtained. As described before, since the polyamide 56 contains more amide bonds per unit volume than the conventional polyamides such as polyamide 66, it is a polymer with a highly hydrophilic molecular structure. Therefore, if the conventional polyamide 56 filaments are heat-treated especially in the presence of water (boiling water treatment, steam treatment, etc.), much water goes into less dense amorphous phases, to lower the interactions between molecular chains, thereby lowering the orientation degree of amorphous chains, and filaments with a shrinkage rate by boiling water treatment of higher than 20% are likely to be obtained. However, the filaments of this invention can be easily enhanced in molecular orientation owing to the effect of the narrow molecular weight distribution and contain many highly dense oriented crystal phases and further the amorphous phases contain many inter-tying molecules constrained in molecular motions by the crystal phases. Therefore, due to the synergism of them, the filaments can be small in the shrinkage rate by boiling water treatment.

On the other hand, it is preferred that the shrinkage rate by the boiling water treatment is 5% or higher for such reasons that the woven fabric heat-shrunken can have a high weave density, and that in the weaving process, a high weave density fabric can be produced with the weave tension kept in an appropriate range. In this case, it is not necessarily required to weave at high tension when the high weave density fabric is produced. Therefore the generation of fuzz and shrinkage marks in the weaving process can be inhibited, and a woven fabric with few defects can be produced with a good capability of smoothly undergoing the process. Further, in general, if very highly shrunken filaments are heat-shrunken to enhance the weave density, the filaments constituting the weave are excessively constrained mutually by the heat shrinkage forces, and therefore the woven fabric tends to be hardened. However, it was found that since the polyamide 56 filaments of this invention are low in the stress at 10% elongation after boiling water treatment as described later, that is, since the filaments can have low elastic modulus, the flexibility of the woven fabric can be easily secured even if the filaments are highly constrained mutually. Therefore, the forces for mutually constraining the multifilaments constituting the weave can also be enhanced compared with the woven fabric formed of the conventional polyamide 66 filaments, preferably it does not happen that the weave near sewn portions is deformed by the impact forces acting when the airbag is inflated. For these reasons, it is more preferred that the shrinkage rate by the boiling water treatment is 7 to 18%, and a more preferred range is 8 to 15%.

It is preferred that the strength of the filaments of this invention after the boiling water treatment is 5 to 11 cN/dtex. It is preferred that the strength after the boiling water treatment is 5 cN/dtex or higher, since a woven fabric with sufficient strength can be obtained even after it has been sufficiently heat-shrunken by scouring and final setting. It is preferred that the strength after the boiling water treatment is higher, but it is preferred that the strength is 11 cN/dtex or lower, since the strength of the woven fabric can be kept in an appropriate range. A more preferred range is 5.5 to 10 cN/dtex, and a further more preferred range is 6 to 9 cN/dtex. An especially preferred range is 6.5 to 8.5 cN/dtex.

Further, it is preferred that the stress at 10% elongation of the polyamide 56 filaments of this invention after the boiling water treatment is 0.3 to 1.5 cN/dtex. The stress at 10% elongation is an indicator of the elastic modulus of filaments, and a lower stress is considered to mean that the filaments are more flexible. It is preferred that the stress at 10% elongation after the boiling water treatment is 1.5 cN/dtex or lower for the reason that if the woven fabric is heat-shrunken to achieve a shrinkage rate of 3% or lower after the boiling water treatment of the woven fabric, the woven fabric obtained becomes excellent in flexibility and impact absorbability. It is more preferred that the stress at 10% elongation after the boiling water treatment is 1.3 cN/dtex or lower, and further more preferred is 1.1 cN/dtex or lower.

On the other hand, it is preferred that the stress at 10% elongation after the boiling water treatment is 0.3 cN/dtex or higher, since the woven fabric heat-shrunken is unlikely to be deformed by external forces. More preferred is 0.4 cN/dtex or higher, and further more preferred is 0.5 cN/dtex or higher. The stress at 10% elongation of the polyamide 56 filaments of this invention in ordinary states (not treated with boiling water) is not so different from that of the conventional polyamide 66 filaments, but after boiling water treatment, the stress at 10% elongation of the polyamide 56 filaments is 1.5 cN/dtex or lower, indicating that the filaments are very flexible. It is difficult for the polyamide 66 filaments to achieve this level, and this level can be achieved by the molecular structural feature of the polyamide 56. In the hexamethylene adipamide units constituting the polyamide 66, since both the number of carbon atoms of a diamine unit and the number of carbon atoms of a dicarboxylic acid unit are six, the polyamide 66 has a very highly regular molecular structure, and therefore the positions of amide bonds are likely to be identical between the molecular chains adjacent to each other. Therefore, boiling water treatment once weakens the hydrogen bond forces between molecules, but if water is discharged outside the system after shrinkage, most molecular chains form strong hydrogen bonds again. On the other hand, in the pentamethylene adipamide units constituting the polyamide 56 filaments of this invention, the number of amide bonds per unit volume is large, and therefore the polyamide 56 is very highly hydrophilic and has a feature that the molecular chains are less regular than those of the polyamide 66, since the number of carbon atoms of a diamine unit is 5 while the number of carbon atoms of a dicarboxylic acid unit is 6. Because of high hydrophilicity, the boiling water treatment causes a relatively large amount of water to be taken into the amorphous phases, being likely to lower the hydrogen bond forces between molecular chains or likely to break the hydrogen bonds. Further, the regularity of molecular chains is low. Therefore, it can be considered that even if water is discharged after shrinkage, some molecular chains do not restore the inter-molecular hydrogen bond forces available before the boiling water treatment, and that stabilization in a weak bond force state occurs. For these reasons, the polyamide 56 filaments become adequately low in the hydrogen bond force between molecular chains after boiling water treatment, and become very low in elastic modulus.

On the other hand, it is preferred that the stress at 10% elongation of polyamide 56 filaments, i.e., the stress at 10% elongation of the filaments before being subjected to the boiling water treatment is higher for such reasons that the warp tension and weft tension can be set at high levels in the warping process and the weaving process, and therefore that a high weave density fabric can be easily produced. However, if it is attempted to obtain filaments with too high stress at 10% elongation, yarn breaking and fuzz are likely to be caused in the film forming process. Therefore, it is preferred that the stress at 10% elongation of polyamide 56 filaments is 1.8 to 4.5 cN/dtex. A more preferred range is 1.9 to 4.2 cN/dtex, and a further more preferred range is 2 to 4 cN/dtex.

It is preferred that the filaments of this invention are high in the melting point as an indicator of heat resistance. It is preferred that the melting point is 240°C or higher. More preferred is 250°C or higher. Furthermore, it is preferred that the melting heat quantity as an indicator of the heat quantity required for melting fibers is higher. Preferred is 60 J/g or higher, and more preferred is 70 J/g or higher. In the case where the melting point and the melting heat quantity are high, even if the filaments are exposed to a high temperature material such as the high temperature gas of an inflator, melting and boring do not occur.

Further, it is preferred that the elongation rate of the filaments of this invention is 10 to 50% for the reason that when a textile product is produced, the capability of smoothly undergoing the process is good. It is preferred that the lower limit is 12% or higher. More preferred is 15% or higher, and further more preferred is 18% or higher. It is preferred that the upper limit is 40% or lower. More preferred is 30% or lower, and further more preferred is 25% or lower. Especially preferred is 23% or lower.

It is preferred that the unevenness of filaments of this invention is small for such reasons that the variations in the warp tension and weft tension in the warping process and the weaving process can be inhibited, that the fuzz in the warping process and the weaving process is not generated, and that a woven fabric small in the difference of physical properties between warp and weft directions can be obtained. Therefore, it is preferred that U% (normal mode) as an indicator of fiber unevenness is 3% or less. More preferred is 2% or less, and further more preferred is 1.5% or less. An especially preferred range is 0.5 to 1%.

The filaments of this invention can also be treated to be entangled as required, and the CF value (Coherence Factor) can be selected in a range from 3 to 30.

As the filaments of this invention, the cross-sectional form of a single fiber can be any of various forms such as round form, Y form, multi-lobed form, polygonal form, flat form, hollow form and cross-in-square form, but since a woven fabric with higher strength and lower air permeability can be stably obtained, a round form or flat form is preferred. A round form is most preferred. The respective single fibers can be identical to or different from each other in cross-sectional form, but it is preferred that they are identical.

As each of the filaments of this invention, to such an extent that the intended effects of this invention are not impaired, a conjugate single fiber such as a core-sheath type conjugate fiber (single-core, multi-core, or partially exposed core) or a bimetal conjugate fiber can be used, or an alloy fiber alloyed with another polymer can also be used. In view of a filament with higher strength, a filament containing a polyamide 56 component alone is preferred. Examples of other polymers that can be conjugated or alloyed together are enumerated below.

For example, polyesters (polyethylene terephthalate, polytrimethylene terephthalate, polybutylene terephthalate, polyethylene naphthalate, polylactic acid, etc.), polyamides (polyamides m such as polyamide 6, the number m of carbon atoms in each recurring unit being 4 to 12, polyamides mn such as polyamide 66, the number m of carbon atoms in each recurring unit being 4 to 12 and the number n of carbon atoms being 4 to 12, etc.), polycarbonate, polystyrene, polypropylene, polyethylene, polyoxymethylene, polymethyl methacrylate, polyethylene glycol and the like can be enumerated. Homopolymers, copolymers (the abovementioned polymers including the components enumerated below as comonomers), etc. can be selected as appropriate.

Further, the filaments of this invention can also be mixed, spun or twisted with other fibers. Examples of other fibers include natural fibers such as cotton, hemp, wool and silk, regenerated fibers such as rayon and cuprammonium rayon, semi-synthetic fibers such as acetates, and synthetic fibers containing polyamides (polyamides m such as polyamide 6, the number m of carbon atoms in each recurring unit being 4 to 12, polyamides mn such as polyamide 66, the number m of carbon atoms in each recurring unit being 4 to 12 and the number n of carbon atoms being 4 to 12, etc.), polyesters (polyethylene terephthalate, polytrimethylene terephthalate, polybutylene terephthalate, polylactic acid, etc.), polyacrylonitrile, polypropylene, polyvinyl chloride, etc. as homopolymers and copolymers (the abovementioned polymers including the components enumerated below as comonomers).

Further, the filaments of this invention may contain small mounts of, for example, an antioxidant, heat-resistant stabilizer (hindered phenol-based compound, hydroquinone-based compound, thiazole-based compound, phosphorus-based compound such as phenylphosphonic acid, imidazole-based compound such as 2-mercaptobenzimidazole, substitution product thereof, copper halide, iodine compound, etc.), weather resisting agent (based on resorcinol, salicylate, benzotriazole, benzophenone, hindered amine, etc.), pigment (cadmium sulfide, phthalocyanine, carbon black, etc.), gloss enhancing agent (titanium oxide, calcium carbonate, etc.), dye (nigrosine, aniline black, etc.), crystal nucleating agent (talc, silica, kaolin, clay, etc.), plasticizer (octyl p-oxybenzoate, N-butylbenzenesulfonamide, etc.), antistatic agent (alkyl sulfate type anionic antioxidant agent, quaternary ammonium salt type cationic antistatic agent, nonionic antistatic agent such as polyoxyethylene sorbitan monostearate, betaine-based amphoteric antistatic agent, etc.), flame retarder (melamine cyanurate, hydroxide such as magnesium hydroxide or aluminum hydroxide, ammonium polyphosphate, brominated polystyrene, brominated polyphenylene oxide, brominated polycarbonate, brominated epoxy resin, combination consisting of any of these bromine-based flame retarders and antimony trioxide, etc.).

Further, the polyamide 56 of this invention can also be copolymerized with a further other compound in addition to 1,5-pentamethylenediamine and adipic acid, to such an extent the object of this invention may not be impaired, and may contain structural units derived, for example, from the following components.

The polyamide 56 may contain structural units derived, for example, from an aliphatic carboxylic acid (oxalic acid, malonic acid, succinic acid, glutaric acid, pimelic acid, suberic acid, azelaic acid, sebacic acid, undenanoic diacid, dodecanoic diacid, brassylic acid, tetradecanoic diacid, pentadecanoic diacid, octadecanoic diacid, etc.), alicyclic dicarboxylic acid (cyclohexanedicarboxylic acid, etc.), and aromatic dicarboxylic acid (terephthalic acid, isophthalic acid, naphthalenedicarboxylic acid, diphenyldicarboxylic acid, anthracenedicarboxylic acid, phenanthrenedicarboxylic acid, diphenyletherdicarboxylic acid, diphenoxyethanedicarboxylic acid, diphenylethanedicarboxylic acid, 1,4-cyclohexanedicarboxylic acid, 5-sodiumsulfoisophthalic acid, 5-tetrabutylphosphoniumisophthalic acid, etc.).

Further, the polyamide 56 can contain structural units derived from an aliphatic diamine such as ethylenediamine, 1,3-diaminopropane, 1,4-diaminobutane, 1,7-diaminoheptane, 1,8-diaminooctane, 1,9-diaminononane, 1,10-diaminodecane, 1,11-diaminoundecane, 1,12-diaminododecane, 1,13-diaminotridecane, 1,14-diaminotetradecane, 1,15-diaminopentadecane, 1,16-diaminohexadecane, 1,17-diaminoheptadecane, 1,18-diaminooctadecane, 1,19-diaminononadecane, 1,20-diaminoeicosane, or 2-methyl-1,5-pentamethylenediamine, alicyclic diamine such as cyclohexanediamine or bis-(4-aminohexyl)methane, or aromatic diamine such as xylylenediamine.

The polyamide 56 can contain structural units derived from an aromatic, aliphatic or alicyclic diol compound such as ethylene glycol, propylene glycol, butylene glycol, pentanediol, hexanediol, 1,4-cyclohexanedimethanol, neopentyl glycol, hydroquinone, resorcin, dihydroxybiphenyl, naphthalenediol, anthracenediol, phenanthrenediol, 2,2-bis(4-hydroxyphenyl)propane, 4,4'-dihydroxydiphenyl ether, or bisphenol S.

Further, the polyamide 56 can contain structural units derived from an aromatic, aliphatic or alicyclic hydroxycarboxylic acid having a hydroxyl group and a carboxylic acid per one compound such as lactic acid, 3-hydroxypropionate, 3-hydroxybutyrate, 3-hydroxybutyrate-valerate, hydroxybenzoic acid, hydroxynaphthoeic acid, hydroxyanthracenecarboxylic acid, hydroxyphenanthrenecarboxylic acid, or (hydroxyphenyl)vinylcarboxylic acid.

Furthermore, the polyamide 56 can contain structural units derived from an amino acid such as 6-aminocaproic acid, 11-aminoundecanoic acid, 12-aminododecanoic acid or paraaminomethylbenzoic acid, or a lactam such as ε-caprolactam or ε-laurolactam.

The polyamide 56 filaments of this invention are small in overall fineness and single fiber fineness, and therefore have excellent mechanical properties, heat resistance, wear resistance and durability, being able to be used as any of various fiber structures such as fabrics (woven fabrics, knitted fabrics, nonwoven fabrics, pile fabrics, etc.), strings (dip cords, ropes, tapes, fishing nets, braids, etc.), and being widely suitably used for industrial applications and closing applications. For example, they can be suitably used as fiber structures constituting interior and exterior materials and safety parts of vehicles such as automobiles and aircraft, including airbags, rubber reinforcing fibers, seat belts, sheets, mattresses, etc. Furthermore, they are suitable for industrial applications as fishing nets, ropes, safety belts, slings, tarpaulins, tents, bag fabrics, braids, protection sheets, canvases, sewing threads, etc., grass protection sheets for agricultural use, waterproof sheets for architectural materials, etc. Moreover, they can be suitably used for clothing applications requiring strength and wear resistance such as outdoor wear and sports wear. The fiber structures may contain fibers other than polyamide 56 filaments, but in order to use the excellent properties of the polyamide 56 filaments of this invention, it is preferred that the content of the polyamide 56 filaments of this invention is 50 wt% or more. More preferred is 70 wt% or more, and further more preferred is 90 wt% or more.

The filaments of this invention having the abovementioned properties also have an adequate shrinkage rate by boiling water treatment and also have high strength and low elastic modulus after boiling water treatment. Therefore, if the filaments are heat-shrunken at any stage, a fiber structure having high strength and also flexibility can be obtained. Further, it is preferred that a fiber structure obtained from the filaments is heat-shrunken, since the fiber structure can be made to have higher density. If the filaments of this invention are, for example, warped and woven to obtain a woven fabric that is then heat-shrunken by such heat treatment as scouring and final setting for using those features, a high weave density fabric excellent in flexibility, impact absorbability, mechanical properties, heat resistance and durability can be obtained, and a woven fabric most suitable as an airbag fabric can be formed. Of course, said woven fabric can also be used for industrial applications and clothing applications other than as the airbag fabric.

The airbag fabric obtained by using the filaments of this invention is explained below.

An airbag fabric refers to a fabric to be sewn into an airbag, and the airbag fabric of this invention is characterized by containing a woven fabric containing the polyamide 56 filaments of this invention. Further, the airbag fabric of this invention can be preferably used as either a non-coated fabric or a coated fabric, since the non-coated fabric and the coated fabric are required to have both high strength and low elastic modulus which are the features of the polyamide 56 filaments of this invention.

For example, it is preferred to use the fabric of this invention as a non-coated fabric, since the non-coated fabric can exhibit the features of the filaments of this invention with high strength and low elastic modulus to the maximum extent, as an airbag fabric excellent in accommodation capability and impact absorbability. It is preferred to employ the preferred weave described later, since a non-coated fabric low in air permeability and excellent in mechanical properties, heat resistance and durability can be obtained.

On the other hand, it is preferred that the fabric of this invention is used as a coated fabric for such reasons that the excellent adhesiveness of polyamide 56 filaments can be used and that even if the elastomer content per unit area is kept smaller than that of the coated fabric formed of the conventional polyamide 66 filaments, sufficient adhesion durability can be exhibited. It is preferred that the elastomer content is smaller, since the fabric can be made more flexible. Preferred is 20 g/m$^2$ or less, and more preferred is 15 g/m$^2$ or less. A further more preferred range is 5 to 10 g/m$^2$. In this case, the elastomer used for coating can be a publicly known conventional chloroprene resin, silicone resin or urethane resin, etc.

The weave can be selected from plain weave, satin weave, twill leave, etc., but plain weave is preferred, since a woven fabric with lower air permeability and high density can be obtained with a good capability of smoothly undergoing the process.

The number of warp yarns and the number of weft yarns of the woven fabric are respectively in a range from 30 to 100 yarns/2.54 cm, and it is preferred to select the respective numbers of yarns for ensuring that the cover factor described later can be kept in a preferred range. The number of warp yarns can be equal to or different from the number of weft yarns, but it is preferred that the symmetry in warp and weft directions is higher, since differences in physical properties such as strength and flexibility between warp and weft directions are unlikely to occur. Higher symmetry is preferred for such reasons that the air permeability becomes lower and that the capability of smoothly undergoing the weaving process can be enhanced. Therefore, it is preferred that the difference between the number of warp yarns and the number of weft yarns is 0 to 15 yarns/2.54 cm. A more preferred range is 0 to 10 yarns/2.54 cm, and a further more preferred range is 0 to 5 yarns/2.54 cm.

The overall fineness and single fiber fineness of the polyamide 56 filaments used as warp yarns can be equal to or different from those used as weft yarns, but it is preferred that the warp yarns and the weft yarns are identical to each other in the overall fineness and single fiber fineness, since anisotropy of properties is unlikely to occur in a woven fabric with higher symmetry as described above.

It is preferred that the overall fineness of each component yarn of the airbag fabric of this invention is 200 to 600 dtex. It is preferred that the overall fineness of each component yarn of the fabric is 600 dtex or smaller, since even a high weave density fabric can be formed into a thin woven fabric with high flexibility and therefore with high accommodation capability and excellent impact absorbability. Further on the other hand, it is preferred that the overall fineness of each component yarn of the fabric is 200 dtex or higher, since the mechanical properties of the fabric such as tensile strength and tear tenacity reach the levels not inferior to those of a practical fabric. A more preferred range is 250 to 550 dtex, and a further more preferred range is 300 to 50 dtex.

Further, it is preferred that the single fiber fineness of each component yarn of the fabric is 0.1 to 7 dtex. It is preferred that the single fiber fineness of each component yarn of the fabric is 7 dtex or smaller for such reasons that the bending stiffness of single fibers declines to enhance the flexibility of the fabric, for providing a fabric with excellent accommodation capability. Further, a single fiber fineness of 7 dtex or smaller is preferred for such reasons that the specific surface area of fibers becomes large to enhance the force of constraining the filaments constituting the fabric mutually, for enabling the avoidance of such inconvenience that the weave around sewn portions is deformed when the fabric is inflated by the inflator, thus providing an airbag with low air permeability. On the other hand, it is preferred that the single fiber fineness is 0.1 dtex or larger, since the mechanical properties of the fabric such as tensile strength and tear tenacity can be enhanced. In view of the above, it is more preferred that the single fiber fineness of each component yarn of the fabric is 1 to 6 dtex, and a further more preferred range is 1.5 to 4 dtex. A higher weave density fabric is preferred, since the fabric has lower air permeability and higher strength. It is preferred that the cover factor (K) as an indicator of weave density is 1500 or more. More preferred is 1700 or more, and a further more preferred range is 1900 to 2700.

Further, it is preferred that the unit-area weight of the airbag fabric of this invention is 150 to 250 g/m$^2$, since the fabric is excellent in mechanical properties, flexibility and light weight in good balance.

It is preferred that the airbag fabric of this invention is 0 to 3% in the shrinkage rate of the fabric after being subjected to boiling water treatment at 98°C for 30 minutes. It is preferred that the fabric produced by a loom is heat-shrunken to ensure that the fabric may have a shrinkage rate of 0 to 3% by the boiling water treatment for such reasons that both the high strength and low elastic modulus as features of the polyamide 56 filaments can be used and that a flexible fabric can be obtained. The shrinkage rate kept in the abovementioned range is also preferred for such reasons that dimensional change is unlikely to occur even if the fabric is exposed to a high-temperature high-humidity environment for a long period of time, and therefore that sewn seams are not wrinkled to prevent gas leak at the time of inflation. A more preferred range is 0 to 2%, and a further more preferred range is 0 to 1%. The fabric with a low shrinkage rate after boiling water treatment like this can be obtained by employing the preferred production method described later. In this case, the shrinkage rate of the fabric by boiling water treatment is defined in each of the warp and weft directions of the woven fabric, and it is preferred that the respective shrinkage rates are kept within the abovementioned range. Further, it is preferred that the differences of physical properties between the warp direction and the weft direction are small when the air bag is produced by sewing, and it is preferred that the difference in the shrinkage rate between the warp direction and the weft direction is 1.5% or less. More preferred is 1% or less, and a further more preferred range is 0 to 0.5%.

Further, it is preferred that the strength of the component yarns of the fabric is higher, since the tensile strength and tear tenacity of the fabric become higher. A preferred range is 5 to 10 cN/dtex. The polyamide 56 filaments of this invention decline less in strength even after boiling water treatment. Therefore, even if the fabric has a low shrinkage rate of 0 to 3% achieved by boiling water treatment, the strength of the component yarns is 5 cN/dtex or higher preferably. A more preferred range is 5.5 to 10 cN/dtex, and a further more preferred range is 6 to 10 cN/dtex. In this case, the fabric includes component warp yarns and component weft yarns, and it is preferred that the strengths of both the component warp yarns and component weft yarns are kept in the abovementioned range. Further, it is preferred that the difference between the strength of each component warp yarn and the strength of each component weft yarn is smaller, since the difference in the tensile strength or tear tenacity of the fabric between the warp and weft directions can be smaller, and even if the fabric is sewn to produce an airbag, physical properties are unlikely to be anisotropic. Therefore, it is preferred that the difference between the strength of each component warp yarn and the strength of each component weft yarn is 1 cN/dtex, and a more preferred range is 0 to 0.5 cN/dtex.

Furthermore, it is preferred that component yarns of the airbag fabric of this invention have a stress of 0.3 to 2 cN/dtex at 10% elongation. It is preferred that the stress of the component yarns at 10% elongation is 2 cN/dtex or lower, since the airbag fabric becomes excellent in flexibility and impact absorbability. Further, it is preferred that the stress of component yarns at 10% elongation is 0.3 cN/dtex or higher, since the woven fabric is unlikely to be deformed by external forces. A more preferred range is 0.4 to 1.8 cN/dtex, and a further more preferred range is 0.5 to 1.3 cN/dtex. If the polyamide 56 filaments of this invention are treated with boiling water as described above, the stress at 10% elongation of the filaments become very low. Therefore, if the woven fabric formed of said filaments is decreased to a shrinkage rate of 0 to 3% by boiling water treatment, the stress at 10% elongation of component yarns can be kept in the abovementioned range. In this case, since it is preferred that the differences in the physical properties of the woven fabric between warp and weft directions are smaller, it is preferred that both the stress at 10% elongation of each component warp yarn and the stress at 10% elongation of each component weft yarn are kept in the abovementioned range, and it is preferred that the difference between the stress at 10% elongation of each component warp yarn and that of each component weft yarn is 0.3 cN/dtex or lower, and a more preferred range is 0 to 0.2 cN/dtex.

It is preferred that the tensile strength of the airbag fabric of this invention is 500 N/cm or higher. More preferred is 600 N/cm or higher, and further more preferred is 650 N/cm or higher. A higher tensile strength is preferred, but it is preferred that the tensile strength is 1000 N/cm or lower for such reasons that the unit-area weight of the woven fabric can be decreased and that a thin and flexible fabric can be obtained.

Further, it is preferred that the tear tenacity of the fabric is higher, since the fabric is unlikely to be burst by the impact of the gas jetted from the inflator. A tear tenacity of 180 N or higher is preferred. More preferred is 220 N or higher, and further more preferred is 250 N or higher. On the other hand, it is preferred that the tear tenacity is kept in an appropriate range for such reasons that the weave around sewn portions is unlikely to be deformed even by the impact force acting when the airbag is inflated, and therefore that an airbag with low air permeability can be obtained. Therefore, a tear tenacity of 500 N or lower is preferred, and more preferred is 400 N or lower.

It is preferred that the thickness of the airbag fabric of this invention is 0.2 to 0.4 mm. An airbag fabric with the thickness kept in such a range is preferred for such reasons that the fabric has sufficient heat resistance against the high temperature gas jetted from the inflator and is excellent also in flexibility, being able to be applied also to a small car requiring severe accommodation capability.

It is preferred that the air permeability of the airbag fabric of this invention is low. Preferred is 40 $cc/cm^2/sec$ or lower, and more preferred is 30 $cc/cm^2/sec$ or lower. Further more preferred is 20 $cc/cm^2/sec$ or lower, and an especially preferred range is 0 to 10 $cc/cm^2/sec$. It is preferred that the air permeability is 40 $cc/cm^2/sec$ or lower for such reasons that when the airbag is inflated by collision or the like, the air in the airbag is unlikely to leak outside and that the airbag inflation speed becomes high. Further, an air permeability of 40 $cc/cm^2/sec$ or lower is preferred, since the high temperature gas is unlikely to flow toward the passenger for assuring the safety of the passenger.

It is preferred that the bending resistance of the airbag fabric of this invention measured according to JIS L 1096 (1999) (8.19.1.A method, 45° cantilever method) is lower, since the fabric becomes excellent in accommodation capability. Preferred is 70 mm or lower, and more preferred is 65 mm or lower. A further more preferred range is 20 to 60 mm. If each component yarn is smaller in stress at 10% elongation, overall fineness and single fiber fineness, a fabric with low bending resistance can be obtained. Further, if the fabric is smaller in cover factor, thickness and coating amount of elastomer, the fabric is lower in bending resistance.

The airbag fabric of this invention is excellent in tensile strength and tear tenacity and also excellent in flexibility, impact absorbability, heat resistance and durability. Therefore, it can be applied to all types of airbags such as driver's seat airbag, other front seat airbag, side airbag, knee airbag, inflatable curtain airbag, etc.

A preferred method for producing the polyamide 56 filaments of this invention is explained below.

The process for producing the polyamide 56 filaments of this invention can be classified into a monomer synthesis process, polymerization process, and yarn forming process (spinning and stretching process), and it is preferred to employ specific production methods in the respective processes. In order to produce filaments having a relative viscosity in sulfuric acid of 3 to 8 and an Mw/Mn ratio of 1.5 to 3 which are constituent features of this invention, the production method in the polymerization process is most important. If the polyamide 56 resin obtained by a specific polymerization method is provided for melt spinning, polyamide 56 filaments with a relative viscosity in sulfuric acid of 3 or higher and a small Mw/Mn ratio of 3 or smaller can be spun. As a result, in the yarn forming process, the molecular chains can be uniformly oriented, and the filaments with excellent properties of this invention can be produced with a good capability of smoothly undergoing the process. Preferred modes are explained below successively starting from the monomer synthesizing process.

In the monomer synthesizing process, it is preferred that 1,5-pentamethylenediamine is synthesized from a biomass-derived compound such as glucose or lysine by enzyme reaction, yeast reaction or fermentation reaction, etc. The abovementioned method is preferred for such reasons that the contents of such compounds as 2,3,4,5-tetrahydropyridine and piperidine are so small as to allow the production of highly pure 1,5-pentamethylenediamine, and therefore that since the polyamide 56 resin has high molten storage stability, the molecular weight is unlikely to decline in the melt spinning process, for inhibiting the increase of Mw/Mn. Further, since the material is derived from biomass, it is advantageously excellent in environment adaptability. Particularly, preferred is the polyamide 56 obtained by polymerizing 1,5-pentamethylenediamine, or 1,5-pentanediamine-hydrochloride or 1, 5-pentamethylenediamine·adipate disclosed in JP 202-223771 A, JP 2004-000114 A, JP 2004-208646 A, JP 2004-290091 A, JP 2004-298034 A, JP 2002-223770 A or JP 2004-222569 A, etc. It is more preferred to polymerize 1,5-pentamethylenediamine-adipate, since a more highly pure raw material can be easily obtained. Further, as adipic acid, another diamine component and dicarboxylic acid component, those produced by publicly known conventional methods can be used.

As a method for determining whether or not the polyamide 56 filaments of this invention, a fiber structure containing said filaments, airbag fabric or resin pellets have been synthesized from a biomass-derived compound, there is ASTM D6866 based on the principle of C14 (radiocarbon) radioactive dating. Particularly, the biomass concentration in a sample can be measured by a method of drying a sample (polymer) to remove water, weighing, burning the sample, to generate $CO_2$, adsorbing it by an adsorbent via chemical operation, and measuring by a liquid scintillation counter, a method of converting the $CO_2$ generated by burning into carbon graphite and measuring by accelerator mass spectrometry, or a method of synthesizing benzene from the $CO_2$ generated by burning and measuring by a liquid scintillation counter, etc.

The polymerization method for obtaining the polyamide 56 resin used for producing the filaments of this invention is explained below.

The polyamide 56 filaments of this invention are as high as 3 or higher in the relative viscosity in sulfuric acid and as very narrow as 3 or lower in the Mw/Mn as an indicator of molecular weight distribution. If it is attempted to produce the polyamide 56 with such a high molecular weight by a heat polymerization method only, the polymerization reaction delays, and the inside of the polymerization reactor must be kept at a high temperature (240°C or higher) for a long period of time. Therefore, compared with the heat polymerization of the conventional polyamide 66, the polymerization time period tends to be longer. The reasons are estimated to be that since the boiling point of 1,5-pentamethylenediamine as a raw material of the polyamide 56 resin is low, 1,5-pentamethylenediamine is likely to be evaporated to flow outside the system at a high temperature, that the intramolecular deammoniation reaction of 1,5-pentamethylenediamine occurs to cause changing into basic amines such as 2,3,4,5-tetrahydropyridine, piperidine and ammonia, and therefore that the mole balance between the diamine and the dicarboxylic acid in the polymerization reactor is likely to be lost. Further, if the polyamide 56 resin with a relative viscosity in sulfuric acid of 3 or higher produced by a heat polymerization method only is used for melt spinning, the Mw/Mn of the spun polyamide 56 filaments exceeds 3, and it is very difficult to produce filaments with small overall fineness, small single fiber fineness and high strength as in this invention.

The reasons are that a polyamide 56 resin with an Mw/Mn ratio of higher than 3 is produced due to the thermal decomposition occurring in the latter period of polymerization due to polymerization delay, and that even if a resin with an Mw/Mn ratio of 3 or lower is obtained, it contains a large amount of basic amines, and therefore is low in heat resistance and becomes large in the molecular weight distribution due to the thermal decomposition in the melt spinning process.

Therefore, in order to produce polyamide 56 filaments with a relative viscosity in sulfuric acid of 3 or higher and an Mw/Mn ratio of 3 or lower as in this invention, it is essential that a polyamide 56 resin with a relative viscosity in sulfuric acid of 2.9 or lower is produced as a raw material beforehand by a heat polymerization method, pelletized and enhanced in polymerization degree by a solid phase polymerization method. Further, since the polyamide 56 is lower in heat resistance and lower in crystallinity than the conventional polyamide 66, it is required to precisely control the polymerization conditions in the solid phase polymerization. Especially in order to let the polymerization reaction take place uniformly in the solid phase polymerization, it is important to keep the concentration balance between amino end groups and carboxyl end groups in a specific range, and preferred is a two-stage polymerization method in which a polyamide 56 resin is produced with the amounts of said end groups controlled and adjusted by a heat polymerization method and is subsequently subjected to solid phase polymerization.

As described above, in the production of the polyamide 56 filaments of this invention, it is important at first to keep the concentration balance between amino end groups and carboxyl end groups in a specific range by strictly controlling the production conditions of the polyamide 56. A preferred heat polymerization method and a preferred solid phase polymerization method are explained below.

The heat polymerization method of this invention is a pressure/heat polymerization method performed in the presence of water, and an aqueous solution containing a diamine and adipic acid as raw materials is heated for dehydration and condensation, to obtain a polyamide 56 resin, and includes a raw material preparation step (preparing an aqueous solution containing raw materials and supplying it into a polymerization reactor), concentration step (heating the inside of the polymerization system under slight pressurization, to volatilize the water in the aqueous solution, for concentrating the raw materials), pressure raising step (keeping the polymerization system internally closed, and heating the aqueous solution containing the raw materials, to generate water vapor, for raising the pressure to a desired level in the following pressure control step), pressure control step (keeping the inside of the polymerization system at a constant pressure, while heating to producing a prepolymer), pressure release step (releasing the pressure to return to a normal pressure and raising the temperature in the polymerization system to higher than the melting point of the prepolymer), pressure reduction step (heating to higher than the melting point of the produced polymer, and keeping at a reduced pressure for causing polycondensation to take place), and discharge step (injecting an inert gas into the polymerization reactor, to discharge the produced polymer, and pelletizing).

As described above, 1,5-pentamethylenediamine (boiling point: approx. 180°C) as a raw material of the polyamide 56 resin is lower in boiling point than 1,6-hexamethylenediamine (boiling point: approx. 200°C) as a raw material of the conventional polyamide 66 and is likely to be evaporated at the temperature of heat polymerization. Therefore, in the latter period of polymerization, the mole balance between amino end groups and carboxyl end groups in the polymerization reactor is likely to be lost for causing polymerization delay. Further, if the polymerization time period becomes longer, the formation of basic amines by the intramolecular deammoniation reaction of 1,5-pentamethylenediamine tends to be induced, and therefore it is preferred to take any measure for keeping the mole balance between 1,5-pentamethylenediamine and adipic acid in the latter period of polymerization in the heat polymerization method. It is preferred to produce a polyamide 56 resin having amino end groups and carboxyl end groups in good balance and to provide it for the subsequent solid phase polymerization. More particularly, it is preferred to produce a polyamide 56 resin with the amino end group concentration and the carboxyl end group concentration kept in the following relation by a heat polymerization method and to provide it for solid phase polymerization.

$$0.3 \leq [NH_2]/([NH_2] + [COOH]) \leq 0.7$$

$[NH_2]$ : Amino end group concentration in the polyamide 56 resin to be provided for solid phase polymerization (eq/ton)
[COOH] : Carboxyl end group concentration in the polyamide 56 resin to be provided for solid phase polymerization (eq/ton)

In this case, it is more preferred that the polyamide 56 resin to be provided for solid phase polymerization complies with $0.4 \leq [NH_2]/([NH_2] + [COOH]) \leq 0.6$.

Further, it is preferred that the polyamide 56 resin produced by a pressure/heat polymerization method performed in the presence of water has a relative viscosity in sulfuric acid of 2 to 2.9. It is preferred that the relative viscosity in sulfuric acid is 2.9 or lower, since the thermal decomposition caused by polymerization delay and the formation of basic amines can be inhibited. On the other hand, it is preferred that the relative viscosity in sulfuric acid is 2 or higher for such reasons that the discharge state of the polymer in the discharge step is stable and that a polyamide 56 resin uniform in pellet size can be produced. A more preferred range is 2.1 to 2.85 and a further more preferred range is 2.2 to 2.8.

To keep the mole balance between 1,5-pentamethylenediamine and adipic acid in the latter period of polymerization, a method of supplying an excessive amount of 1,5-pentamethylenediamine relatively to adipic acid at the start of polymerization, for compensating for the loss of 1, 5-pentamethylenediamine volatilized by heat polymerization or a method of keeping the temperature reached in heat polymerization, polymerization time period, etc. in specific ranges, for inhibiting the volatilization of 1,5-pentamethylenediamine in heat polymerization may be employed, but when the inventors made a deep study, they found that it is difficult to produce a polyamide 56 resin having amino end groups and carboxyl end groups existing in good balance by these methods only.

The inventors further made an intensive study, and as a result, found that since 1,5-pentamethylenediamine is especially highly hydrophilic, it is likely to be volatilized with the evaporation of water, and therefore that if water is evaporated by heating the aqueous solution containing the raw materials to a high temperature already in the initial stage of polymerization when polymerization reaction little takes place, the volatilized amount of 1, 5-pentamethylenediamine tends to be very large. Particularly it was found that if the liquid temperature is higher than 150°C in the initial stage of polymerization, 1,5-pentamethylenediamine is especially likely to be volatilized together with the evaporation of water.

Therefore, in the method of producing a polyamide 56 resin by heat polymerization, it is preferred that when a raw material aqueous solution is prepared from raw monomers in the raw material preparation step, the monomer concentration is kept at 55 to 80 wt% and that subsequently in the concentration step, the temperature of said aqueous solution is set at 100 to 150°C, while the raw monomer concentration is concentrated to a range from 80 to 95 wt%. Then, after undergoing the pressure raising step, pressure control step, pressure release step, pressure reduction step, and discharge step, a polyamide 56 resin is produced.

It is preferred that the concentration of the raw material aqueous solution is set at 55 wt% or higher, since the amount of water evaporated in the subsequent concentration step can be small to decrease the volatilized amount of 1,5-pentamethylenediamine. In this case, the raw monomers refer to the monomers constituting the polyamide 56 of this invention and include 1,5-pentamethylenediamine, adipic acid and the abovementioned other comonomers. Further, the raw monomer concentration refers to the value obtained by dividing the total weight of the raw monomers by the weight of the aqueous solution and multiplying the quotient by 100. On the other hand, in view of the heat resistance of the piping and energy consumption, it is preferred that the concentration of the raw material aqueous solution is 80 wt% or lower, since the temperature for keeping warm the piping in which the aqueous solution flows can be controlled in an adequate range. A more preferred range is 60 to 80 wt%, and a further more preferred range is 65 to 80 wt%.

Meanwhile, the salt of 1,6-hexamethylenediamine and adipic acid as raw materials of the general polyamide 66 is not so high in the solubility in water, and therefore if the salt concentration is too high, there is a problem that the salt is recrystallized as a precipitate. Therefore, it is necessary to adjust the salt concentration in the aqueous solution at approximately 50 wt%, and if the temperature of the aqueous solution is low even when the concentration is 50 wt% or lower, recrystallization occurs. Therefore, any measure such as keeping the pipe line warm is necessary. For this reason, it has been considered technically difficult to raise the salt concentration of the aqueous solution in the raw material preparation step. On the contrary, the salt of 1,5-pentamethylenediamine and adipic acid as raw materials of the polyamide 56 has been found to be very high in the solubility in water. For example, it was found that an aqueous solution containing 50 wt% of an equimolar salt of 1, 6-hexamethylenediamine and adipic acid as the raw materials of a polyamide 66 resin starts recrystallization when the temperature of the solution becomes lower than 40°C, but that an aqueous solution containing 50 wt% of an equimolar salt of 1, 5-pendamethylenediamine and adipic acid does not cause recrystallization even at a solution temperature of 5°C, and remains a uniform solution. Because of this novel feature, it was found that a raw material aqueous solution with a high concentration can be prepared beforehand for allowing a higher concentration to be achieved without little volatilizing 1,5-pentamethylenediamine.

It is preferred that the temperature of the aqueous solution in the raw material preparation step is in a range from 10 to 70°C for such reasons that the solubility of the salt of 1, 5-pentamethylenediamine and adipic acid in water can be enhanced and that the energy consumption required for keeping the pipe line warm can be kept small. A more preferred range is 20 to 60°C.

In the heat polymerization method of this invention, it is preferred that the raw material preparation step is followed by a step of concentrating the aqueous solution containing the raw materials (concentration step), and it is preferred that after the concentration of the aqueous solution is raised to a range from 80 to 95 wt% in the concentration step, the aqueous solution is provided for the pressure raising step. It is preferred that the concentration of the aqueous solution is 80 wt% or higher, since the volatilized amount of 1,5-pentamethylenediamine in the polymerization process can be kept small. On the other hand, it is preferred that the concentration of the aqueous solution is 95 wt% or lower, since the prepolymer is likely to be produced in the pressure control step. Therefore, it is more preferred that the concentration of the aqueous solution at the end of the concentration step is 83 to 93 wt%, and a further more preferred range is 85 to 90 wt%. It is preferred to keep the temperature of the aqueous solution in this case at 150°C or lower, and if concentration is performed in said temperature range, water can be positively evaporated while the volatilization of 1,5-pentamethylenediamine inhibited. More preferred is 140°C or lower, and further more preferred is 130°C or lower. An especially preferred range is 100 to 120°C. Further, for the same reason, it is preferred to adjust the valve of the polymerization reactor for keeping the pressure (gauge pressure) in the polymerization reactor in a range from 0.05 to 0.5 MPa. A more preferred range is 0.1 to 0.4 MPa. The concentration time period can be selected to keep the concentration of the aqueous solution in the abovementioned range, and a time period of 0.5 to 5 hours is preferred.

In the abovementioned preferred heat polymerization method of this invention, since the concentration of the aqueous solution of the salt supplied into the polymerization reactor is high, the absolute amount of volatilized water is small, and since the aqueous solution is concentrated at a relatively low temperature under slight pressurization in the concentration step, the amount of 1,5-pentamethylenediamine volatilized in the polymerization process can be greatly decreased. Therefore, in the heat polymerization method complying with the abovementioned requirements, it is preferred to keep the ratio of the number of moles of 1, 5-pentamethylenediamine and the number of moles of adipic acid existing in the raw material aqueous solution in the raw material preparation step in a range from 0. 95 to 1.05, and to adjust such conditions as internal temperatures, internal pressures and treatment time periods in the pressure control step, pressure release step and pressure reduction step, since a polyamide 56 resin in which the abovementioned amino end groups and carboxyl end groups exist in good balance can be produced. Further, if any ones of the amine compounds, carboxylic acid compounds, etc. enumerated before and respectively copolymerizable with the polyamide 56 are used together, the polymerization reaction can be controlled to adjust the end groups.

Furthermore, since it is preferred to promote the polymerization reaction for inhibiting the volatilization of 1,5-pentamethylenediamine, it is preferred to add a polymerization promoter in any stage of the process for producing the polyamide 56 resin. As the polymerization promoter, a phosphorus-based compound having a high promotion effect and acting as a heat resistant stabilizer is preferred, and phenylphosphonic acid can be suitably used.

For the steps other than the abovementioned steps in the polymerization process, publicly known methods of, for example, JP 2003-292612 A and JP 2004-075932 A can be employed, and a preferred production method is explained below more particularly.

In the pressure raising step, it is preferred to keep the polymerization system internally closed, and to heat the aqueous solution containing the raw materials for generating water vapor, to raise the pressure to a desired pressure in the pressure control step described later. It is preferred that the time period required for raising the pressure is in a range from 0.1 to 2 hours. This is preferred for such reasons that the temperature in the polymerization reactor can be uniformly enhanced and that the cyclization reaction of 1,5-pentamethylenediamine can be inhibited.

In the pressure control step, it is preferred to keep the polymerization system internally in a certain pressurized state while heating for producing a prepolymer. In this case, it is preferred to keep the pressure (gauge pressure) in the reactor at 1 to 2 MPa, for inhibiting the volatilization of 1,5-pentamethylenediamine and for allowing easy formation of the prepolymer. The pressure in the reactor can be adjusted by adjusting the opening of the valve connected with the outside. It is preferred that the temperature in the reactor is 180 to 280°C, and a more preferred range is 200 to 270°C.

In the pressure release step, it is preferred to release the pressure in the polymerization reactor for returning to the normal pressure and to keep the temperature in the polymerization reactor at higher than the melting point of the prepolymer. It is preferred to adjust the time period required for pressure release in a range from 0.1 to 3 hours, since the 1,5-pentamethylenediamine remaining unreactive is unlikely to be volatilized. A more preferred range is 0.2 to 2 hours, and a further more preferred range is 0.3 to 1 hour. Further, it is preferred to raise the temperature in the polymerization reactor to higher than the melting point of the prepolymer, taking the abovementioned time period. Particularly a range from 220 to 270°C is preferred. A more preferred range is 230 to 260°C.

In the pressure reduction step, it is preferred to raise the temperature in the polymerization reactor to higher than the melting point of the produced polymer by heating, since polycondensation is likely to take place. On the other hand, it is preferred to keep the temperature lower than an adequate level, since the thermal decomposition of the polymer can be inhibited. A more preferred temperature range in the polymerization reactor is 240 to 300°C.

Further, it is preferred that the pressure in the polymerization reactor is kept low for such reasons that the water generated in the polycondensation can be removed outside the system to facilitate the progression of reaction and that the reaction homogeneity can be maintained under an adequate reduced pressure. Therefore, it is preferred to adjust the pressure (gauge pressure) in the polymerization reactor in a range from -5 to -50 kPa. The polymerization time period in the pressure reduction step can be selected in a range in which a polyamide 56 resin with a desired relative viscosity in sulfuric acid can be obtained. However, a range from 0.1 to 2 hours is preferred, since the thermal decomposition in the polymerization reactor can be inhibited.

In the discharge step, it is only required to inject an inert gas such as nitrogen into the polymerization reactor for raising the pressure (gauge pressure) in the polymerization reactor to a range from 0.1 to 2 MPa, for discharging the polymer. It is preferred to cool the discharged polymer with water, and cut to achieve a pellet size preferred for the solid phase polymerization as described later.

A preferred solid phase polymerization method is explained below.

A polyamide 56 resin is low in crystallization rate compared with the conventional polyamide 66 resin, and if it is rapidly heated to a high temperature, pellets are partially fused to each other, and in a severe case, the pellets may become lumpy, not allowing homogeneous solid phase polymerization to take place as the case may be. Therefore, it is preferred to at first dry and preliminarily crystallize the pellets of polyamide 56 resin obtained by a heat polymerization method at an internal temperature of 80 to 120°C under reduced pressure or nitrogen flow while stirring the pellets, taking 1 to 10 hours.

Subsequently it is preferred to perform solid phase polymerization at an internal temperature of 130 to 200°C under reduced pressure for 1 to 48 hours while stirring the pellets, for producing a polyamide 56 resin with a desired relative viscosity in sulfuric acid. In this case, it is preferred to reduce the pressure in the reactor to 399 Pa or lower in order that the solid phase polymerization can take place uniformly in the outer and inner layers of pellets. It is more preferred to reduce the pressure to 133 Pa or lower. It is preferred to gradually stepwise enhance the temperature in the reactor while performing the solid phase polymerization, and it is preferred that the heating rate after reaching an internal temperature of 130°C is 1 to 20°C/hr, and a more preferred range is 2 to 10°C/hr. Further, if the highest internal temperature reached is lower, the thermal decomposition in the solid phase polymerization process can be inhibited, and as a result, polyamide 56 filaments narrow in molecular weight distribution can be produced. Therefore, it is more preferred that the internal temperature in solid phase polymerization is 195°C or lower. Further more preferred is 190°C or lower, and especially preferred is 185°C or lower.

The form of the pellets of the polyamide 56 resin provided for solid phase polymerization can be selected from square form, round form, etc., but it is preferred that the pellet size (mg/pellet) is smaller, since the unevenness in polymerization degree between the inner and outer layers of each pellet is unlikely to be caused in the solid phase polymerization. On the other hand, it is preferred that the pellet size is adequate, since the fusion between pellets is unlikely to occur even if they are exposed to a high temperature. Therefore, it is preferred that the pellet size is 2 to 70 mg/pellet. It is more preferred that the lower limit is 5 mg/pellet or larger. Further more preferred is 8 mg/pellet or larger, and especially preferred is 10 mg/pellet or larger. It is more preferred that the upper limit is 50 mg/pellet or smaller, and further more preferred is 30 mg/pellet or smaller. Further, it is preferred that the pellet sizes are equal, since the solid phase polymerization reaction takes place uniformly among the pellets. It is preferred that the CV% of pellet sizes is 20% or less, and a more preferred range is 0 to 10%.

Further, when the filaments of this invention are produced, the polyamide 56 resin pellets obtained after solid phase polymerization are used, and it is preferred that the size of the polyamide 56 resin pellets obtained after solid phase polymerization is 2 to 70 mg/pellet. If the pellet size is in this range, the abovementioned relative viscosity in sulfuric acid of 3 to 8 and the dispersion degree (Mw/Mn) of 1.5 to 3 as an indicator of molecular weight distribution can be achieved. It is preferred that the pellet size (mg/pellet) of polyamide 56 resin is smaller, since any unevenness in polymerization degree between the inner and outer layers of each pellet is unlikely to occur in the solid phase polymerization, and on the other hand, it is preferred that the size is not smaller than a certain level, since the fusion between pellets is unlikely to occur even if they are exposed to a high temperature, to enhance the handling convenience of the pellets. It is more preferred that the lower limit is 5 mg/pellet or larger. Further more preferred is 8 mg/pellet or larger, and especially preferred is 10 mg/pellet or larger. It is more preferred that the upper limit is 50 mg/pellet or smaller, and further more preferred is 30 mg/pellet or smaller.

The yarn formation method of this invention is explained below.

The polyamide 56 filaments of this invention can be produced by using the polyamide 56 resin produced by the heat polymerization method and the solid phase polymerization method as described above, to form spun fibers with a relative velocity in sulfuric acid of 3 to 8 and an Mw/Mn ratio of 1.5 to 3, solidifying the spun fibers by cooling air, applying a water-free oil, taking up at 300 to 2000 m/min, stretching at a stretching ratio to ensure that the elongation rate of the obtained filaments may become 10 to 50%, heat-treating at a final heat treatment roll temperature of 210 to 250°C, relaxing at a relaxation ratio of 0. 8 to 0. 95, and winding.

In this case, first of all, it is essential to inhibit the thermal decomposition in the process of melt and spinning the polyamide 56 resin, for spinning polyamide 56 filaments with an Mw/Mn ratio of 3 or lower. For this purpose, it is preferred to heat and dry the polyamide 56 resin, for achieving a water content of 1000 ppm or less, before providing the resin for melt spinning. Meanwhile, if an ordinary polyamide 66 is too low in water content, gelation is induced during molten storage and yarn breaking tends to occur. However a polyamide 56 is unlikely to cause gelation, and for inhibiting the thermal deterioration during molten storage, a lower water content is preferred. A water content of 600 ppm or less is more preferred, and a further more preferred range is 10 to 400 ppm. The reason why the polyamide 56 is more unlikely to cause gelation during molten storage than the polyamide 66 is not clear, but the reason is considered to be that the number of carbon atoms of methylene chains bound to amino end groups is small. That is, it is estimated that since amino end groups are bound to methylene chains each with 6 carbon atoms in the polyamide 66, the molecular chains near the amino ends are likely to be cyclized and that if thermal decomposition occurs, the cyclization products are liberated to induce gelation, but that in the case of polyamide 56 resin, since the number of carbons of a methylene chain is 5, cyclization is unlikely to occur due to steric hindrance, causing little gelation.

Further, it is preferred that the spinning temperature in the melt spinning is 260 to 310°C. It is preferred to set the spinning temperature at 310°C or lower, since the thermal decomposition of the polyamide 56 can be inhibited. More preferred is 300°C or lower, and further more preferred is 295°C or lower. On the other hand, it is preferred that the spinning temperature is 260°C or higher, since the polyamide 56 shows sufficient melt flowability, to uniform the discharged quantities of respective discharge holes, for allowing stretching at a high ratio. More preferred is 270°C or higher, and further more preferred is 275°C or higher.

Further, since the polyamide 56 is lower in heat resistance than the polyamide 66, it is preferred that the residence time period in the melt spinning process (the period from the time when the polyamide 56 resin is molten to the time when it is discharged from the spinnerette) is shorter in order to inhibit the decline of molecular weight and the increase of Mw/Mn respectively caused by thermal decomposition. It is preferred that the residence time period is 30 minutes or shorter. A more preferred time period is 15 minutes or shorter, and a further more preferred time period range is 0.5 to 7 minutes.

Further, in the melt spinning process, it is preferred that a single-screw and/or a double-screw extruder is provided in the melt portion. It is preferred that the abovementioned extruder is provided for the reason that since the polyamide 56 resin can be introduced into the polymer piping, gear pump and spinning pack while an adequate pressure is applied to the polyamide 56 resin, the thermal decomposition of the polyamide 56 can be inhibited without allowing that the polyamide 56 abnormally dwells in those passages.

Further, it is preferred to filter the polyamide 56 resin using a nonwoven SUS fabric filter, sand filter or the like before it is discharged from the spinnerette, since spinning operation can be stabilized.

The form of the holes of the spinnerette can be selected in response to the sectional form of the single fibers constituting the filaments to be produced. However, if it is intended to uniformly discharge the polymer as the single fibers with a round sectional form in a preferred mode of this invention, it is preferred to select the hole diameter in a range from 0.1 to 0.4 mm and the hole length in a range from 0.1 to 5 mm. Further, multiple spinnerettes can also be used in such a manner that the first spinnerette is used to enhance the polymer metering capability.

After spun fibers with a relative viscosity in sulfuric acid of 3 to 8 and an Mw/Mn ratio of 1.5 to 3 as described above, the spun fibers are solidified by cooling air, taken up, stretched and heat-treated to obtain the filaments of this invention. In this case, it is preferred to inhibit the moisture absorption of the polyamide 56 filaments in the yarn forming process. The reason is that since the polyamide 56 mainly comprises highly hydrophilic pentamethylene adipamide units, the fibers are likely to absorb moisture, that the unstretched yarns to be stretched are likely to carry much water, and that if the fibers contain water, there is a tendency that since the interaction forces among the molecular chains of the polyamide 56 decline and are dispersed, it is difficult to uniformly orient the molecular chains in the spinning and stretching process. For inhibiting the moisture absorption of the filaments, it is preferred to continuously perform melt spinning, stretching and heat treatment.

Further, the spun fibers can be cooled generally by a solidification method of using cooling water or a solidification method of using cooling air, but in view of inhibition of moisture absorption, solidification by use of cooling air is preferred. As cooling air, it is more preferred to use air with a temperature of 15 to 25°C and a relative humidity of 20 to 70% at a velocity of 0.3 to 1 m/second for cooling. Similarly as the indoor temperature and humidity environment for performing melt spinning and stretching, a temperature of 20 to 30°C and a relative humidity as low as possible in a range from 20 to 65% are preferred. Further, in this case, it is preferred that the temperature is controlled within ±3°C and that the humidity is controlled within ±5%. The device for generating cooling air can be either of uniflow type or annular type, but in view of uniform cooling among single fibers, annular type is preferred.

It is preferred that the cooling start point is as far away from the spinnerette face as possible downward in the vertical direction, since the strength of filaments can be enhanced. On the other hand, if the point is too far away, the cooling of filaments is insufficient, and the filaments may become uneven as the case may be. Therefore, it is preferred that the cooling start point is 0.05 to 0.5 m from the spinnerette face. A more preferred range is 0.1 to 0.4 m, and a further more preferred range is 0.12 to 0.3 m.

In this case, it is preferred to install a heating cylinder between the spinnerette face and the cooling start point, for reheating the spun fibers and for subsequently cooling by cooling air. It is preferred to reheat by the heating cylinder, since thinning in a high temperature range is induced to cause more uniform orientation. It is preferred that the temperature of the heating cylinder is +20 to 100°C for such reasons that the spun fibers can be efficiently reheated and that the thermal decomposition of the spun fibers can also be inhibited.

Further, if the abrasion by the take-up roll, guides, etc. is large, the obtained filaments tend to decline in strength and tend to have fuzz. Therefore, it is preferred to deposit a spinning oil before the spun fibers are taken up. Furthermore, to inhibit the moisture absorption of the polyamide 56, it is preferred to use a water-free oil. The water-free oil can be obtained by diluting the active ingredient of oil such as smoothening agent, antistatic agent or emulsion by a mineral oil with 12 to 20 carbon atoms, and a publicly known conventional water-free oil can be used. It is preferred that the deposited amount is such that the amount of the active ingredient of oil is 0.1 to 2 wt% based on the weight of the obtained crimped yarns.

The spun fibers with a water-free oil deposited are taken up as unstretched yarns. It is preferred that the take-up speed in this case is 300 to 2000 m/min. It is preferred that the take-up speed is 300 m/min or higher, since the spinning tension can be adequately enhanced to reduce the swaying of spun fibers. On the other hand, it is preferred that the take-up speed is kept in an adequate range, since stretching at a high ratio can be performed to provide filaments with a high strength. A more preferred take-up speed range is 500 to 1500 m/min, and a further more preferred range is 700 to 1200 m/min.

It is preferred to stretch the unstretched yarns in succession to ensure that the obtained filaments may have an elongation rate of 10 to 50%. It is more preferred that the lower limit is 12% or higher. Further more preferred is 15% or higher and especially preferred is 18% or higher. It is more preferred that the upper limit is 40% or lower. Further more preferred is 30% or lower and especially preferred is 25% or lower. Most preferred is 23% or lower.

The stretching ratio (= winding speed/take-up speed) can be selected in a range from 2 to 7 times to achieve the abovementioned elongation rate. At first, filaments are produced at a specific stretching ratio, and the elongation rate of the obtained filaments is measured. Then, backward calculation is made from the elongation rate, for readjusting the stretching ratio. This procedure is repeated to decide the stretching ratio for obtaining the filaments with the abovementioned elongation rate.

As for the heat source in the stretching process, it is important to inhibit the moisture absorption of filaments. Therefore, it is preferred to use dry heat sources for stretching and heat treatment such as heated rolls, hot plates, dry heating furnace or laser. It is more preferred to use heated rolls, since excellent heating efficiency can be achieved. Wet heat sources such as hot water and steam allow the polyamide 56 filaments to absorb moisture in the stretching process, and intermolecular interactions become weak in a tendency to make it difficult to uniformly orient.

It is preferred to stretch in two or more stages for such reasons that while intermolecular interactions are enhanced, higher orientation can be achieved, and that the molecular chains can be uniformly oriented to form oriented dense crystal phases. Three or more stages are more preferred, and four or more stages are further more preferred. Five stages or more are especially preferred.

For uniformly orienting the molecular chains of highly hygroscopic polyamide 56 filaments in the stretching process, it is preferred that the stretching temperature is 100 to 245°C and that the stretching ratio is 1.3 times or higher. In the case where stretching is performed in multiple stages, the stretching ratio in a low temperature range of lower than 100°C (stretching of first stage) is set at a low level, and the stretching ratio in a high temperature range of 100°C or higher (stretching of second and subsequent stages) is set at a high level. In the case where the take-up speed is high, since the yarn swaying on the rolls can be inhibited due to the effect of crystallites formed in the unstretched yarns, the stretching temperature of the first roll (stretching of first stage) can also be set at 100°C or higher. It is preferred that stretching is performed after the fibers have been heated to a temperature of 100°C or higher for the reasons that since stretching is performed after the fibers have been heated to higher than the boiling point of water, the water absorbed as moisture in the fibers till then is eliminated outside the system to enhance intermolecular interactions, and accordingly that stretching stresses are uniformly transmitted to the amorphous chains, to enhance the uniformity of orientation. On the other hand, it is preferred that the stretching temperature is kept at 245°C or lower for such reasons that the motility of amorphous chains is kept in an adequate range and that the amorphous chains are highly oriented without being relaxed in orientation. A more preferred stretching temperature range is 120 to 235°C, and a further more preferred range is 140 to 225°C. For the conventional polyamide 66 fibers, it has been a preferred method to set the stretching ratio at a low level in a high stretching temperature range of 100°C or higher (stretching of second and subsequent stages) and to stretch at a ratio as high as possible in a low temperature range of lower than 100°C (stretching of first stage), in order that fibers with high strength and good surface appearance can be obtained with a good capability of smoothly undergoing the process. This is attributable to the high crystallinity of the polyamide 66, and the reason is that spherulites are formed in the filaments on the heated rolls with a stretching temperature of 100°C or higher, to lower stretchability. On the other hand, in the case of polyamide 56 filaments, owing to the low crystallinity thereof, spherulites are unlikely to be formed even on the heated rolls with a stretching temperature of 100°C or higher. Therefore, since priority is given to the elimination of adverse effects due to high moisture absorbability, it is preferred to set the stretching ratio at a low level in a low temperature range of lower than 100°C (stretching of first stage) and to set the stretching ratio at a high level in a high temperature range of 100°C or higher (stretching of second and subsequent stages). It is preferred that the stretching ratio in a stretching temperature range of 100 to 245°C is as high as possible, and further it is more preferred that the stretching ratio in the abovementioned stretching temperature range is 1.5 times or higher. A further more preferred ratio is 1.7 times or higher and an especially preferred ratio is 2 times or higher. The most preferred ratio is 2.3 times or higher.

In this case, the stretching temperature is defined as follows. For example, in the case where heated rolls are used as heat sources and where stretching is performed between two heated rolls, the stretching temperature is defined as the temperature of the roll on the upstream side. In the case where a hot plate is disposed between the rolls for performing stretching, the stretching temperature is defined as the temperature of the hot roll. In the case where a heating furnace is disposed between the rolls for performing stretching, the stretching temperature is defined as the temperature of the heating furnace. Further, in the case where a carbonic acid gas laser or the like is used as a heat source for performing stretching, the fiber temperature measured by a thermometer such as an infrared radiation thermometer is defined as the stretching temperature.

For example, in the case where non-heated rolls and heated rolls are used and where stretching of multiple stages is performed between multiple rolls, the stretching ratio in a stretching temperature range from 100 to 245°C can be calculated, for example, as follows. In the case where stretching of 5 stages is performed by undergoing a first roll through a sixth roll before final winding, let's assume that the first roll is set at a temperature of 25°C, the second roll at 60°C, the third roll at 145°C, the fourth roll at 210°C, the fifth roll at 230°C, and the sixth roll at 25°C, that stretching is performed with stretching ratio $r_1$ set by the speed ratio between the first roll and the second roll, with stretching ratio $r_2$ set by the speed ratio between the second roll and the third roll, with stretching ratio $r_3$ set by the speed ratio between the third roll and the fourth roll, and with stretching ratio $r_4$ set by the speed ratio between the fourth roll and fifth roll, and that relaxation treatment is performed with relaxing ratio $r_5$ set by the speed ratio between the fifth roll and the sixth roll. In this case, the stretching ratio in a stretching temperature range from 100 to 245°C is obtained as a combined value of the stretching ratios applied between the third roll and the fifth roll. The ratio of less than 1 like the relaxing ratio $r_5$ applied as relaxation treatment between the fifth roll and the six roll is neglected. That is, in the abovementioned case, the stretching ratio in a stretching temperature range from 100 to 245°C is $r_3 \times r_4$.

Further, if stretching of multiple stages is performed with the stretching temperature raised stepwise in a range of lower than 245°C, stretching can be performed while the oriented amorphous chains are partially oriented and crystallized, and therefore molecular chains are pulled from the crystal phases, to form many inter-tying molecules connecting the crystal phases with each other. Thus, filaments with high strength and low shrinkage rate achieved by boiling water treatment can be obtained.

It is especially very important that the highest heat treatment temperature is 210 to 250°C, and it is preferred that the polyamide 56 molecules highly oriented by the abovementioned melt spinning and stretching method is heat-set at a temperature of 210°C or higher, since oriented amorphous phases are efficiently crystallized, to form many highly dense crystal phases in extremely extended chain states, for assuring filaments with high strength and low shrinkage rate achieved by boiling water treatment. However, in the case of polyamide 56 filaments with an Mw/Mn ratio of more than 3, the molecular orientation of the stretched yarns to be subjected to heat treatment is likely to be uneven, and if the highest heat treatment temperature is 210°C or higher, yarn swaying and fiber splitting occur heavily making continuous sampling difficult. Further, in the case of polyamide 56 filaments with a relative viscosity in sulfuric acid of lower than 3, since the interaction force acting on each molecule is insufficient, if the highest heat treatment temperature is 210°C or higher, the highly oriented states of amorphous chains cannot be maintained and relaxed in a tendency to lower the strength. Therefore, only in the case where the polyamide 56 filaments are 3 or higher in the relative viscosity in sulfuric acid and 3 or lower in Mw/Mn, stable stretching at the highest heat treatment temperature of 210°C or higher can be performed, and the polyamide 56 filaments with excellent mechanical properties intended in this invention can be produced.

On the other hand, if the highest heat treatment is higher than 250°C, fibers are fused to the rolls to cause yarn breaking, thereby lowering the capability of smoothly undergoing the process as the case may be, or disturbing the oriented states of amorphous chains, thus lowering the strength of the filaments as the case may be, though crystallization can be promoted.

In view of the above, it is more preferred that the highest heat treatment temperature is 215 to 245°C, and a further more preferred range is 220 to 240°C.

In this case, the highest heat treatment temperature refers to the temperature of the heat treatment applied at the highest temperature among the heat treatments applied in the stage before the stretched yarns are wound. For example, in the abovementioned case of stretching using first to sixth rolls, the temperature of the heat treatment applied by the fifth roll corresponds to the highest heat treatment temperature. Further, since it is preferred to stepwise enhance the stretching temperature, it is preferred to apply said highest heat treatment by the final heated roll (the fifth roll in the abovementioned case).

After stretching is performed as described above, it is preferred to apply relaxation treatment in succession using the speed ratio between the final heated roll and the final roll. The relaxation treatment refers to a case where the ratio defined as the ratio of the final roll speed/final heated roll speed is less than 1. It is preferred that the relaxation ratio is 0.8 to 0.95 time. It is preferred that the relaxation ratio is 9.95 time or lower for such reasons that the uneven strains applied to the amorphous chains in the stretching process are averaged to stabilize the amorphous chains, and therefore that the shrinkage rate by boiling water treatment declines. More preferred is 0.93 time or lower, and further more preferred is 0.91 time or lower. It is preferred that the relaxation ratio is lower, but it is preferred that the relaxation ratio is 0.8 or higher for such reasons that adequate fiber tension can be exhibited between rolls and that a good capability of smoothly undergoing the process is assured. More preferred is 0.83 or higher, and further more preferred is 0.86 or higher.

Further, when the polyamide 56 filaments are wound by a winder after relaxation treatment, it is preferred that the winding tension is 0.05 to 0.15 cN/dtex. It is preferred that the winding tension is 0.15 cN/dtex or lower, since too tight winding of packages can be avoided, and it is preferred that the winding tension is 0.05 cN/dtex or higher, since the package form becomes good. A more preferred winding tension range is 0.07 to 0.13 cN/dtex, and a further more preferred range is 0.09 to 0.11 cN/dtex.

Further, at any given stage before the filaments are wound, entanglement treatment can also be applied. The frequency and pressure of entanglement treatment can be adjusted in such a manner as to keep the CF value of crimped yarns in a range from 3 to 30.

The abovementioned production method allows the production of polyamide 56 filaments small in overall fineness and single fiber fineness, high in strength and adequate in the shrinkage rate by boiling water treatment. Further, since said filaments have high strength and low elastic modulus still after boiling water treatment, they are most suitable for high weave density fabrics such as airbag fabrics.

The method for producing the airbag fabric of this invention is explained below. As the method for producing the airbag fabric of this invention, any of publicly known conventional production methods can be used, and a more preferred production method is explained below.

As the loom for warping and weaving the polyamide 56 filaments of this invention, a water jet loom, air jet room or rapier loom, etc. can be used, and a water jet loom or air jet loom is preferred, since a high weave density fabric can be formed with good productivity. As textile weave, as described above, plain weave, twill weave, plain gauze, satin weave, combinations thereof, etc. can be employed. Among them, plain weave is most preferred, and hollow weave is preferred. The counts of warp and weft can be selected to ensure that the cover factor of the obtained airbag fabric can be kept in the abovementioned range.

In the warping process and the weaving process, higher warp tension and higher weft tension are preferred, since a high weave density fabric can be obtained with a good capability of smoothly undergoing the process. On the other hand, it is preferred to keep the warp tension in an adequate range, since the problem of filament elongation deformation and the problem of fuzz generation do not occur for allowing a high weave density fabric with good surface appearance to be formed. Therefore, it is preferred to adjust the warp tension and the weft tension in a range from 0.05 to 0.6 cN/dtex. A more preferred range is 0.1 to 0.5 cN/dtex.

It is preferred to heat-shrink the woven fabric produced as described above by wet heat treatment, since the stress at 10% elongation of component yarns of the finally obtained fabric can be kept at 2cN/dtex or lower. The method of wet heat treatment can be selected from warm water, pressurized hot water, steam, etc. The wet heat treatment can be performed in one stage or two or more stages. Further, giving a publicly known conventional scouring agent for scouring simultaneously with the wet heat treatment is also a preferred method. It is preferred to apply tension treatment and/or relaxation treatment with the wet heat treatment temperature kept in a range from 60 to 150°C for a treatment period of 0.01 to 90 minutes. If the treatment is performed in these ranges, the shrinkage rate by boiling water treatment of the finally obtained fabric and the strength and stress at 10% elongation of component yarns of the fabric can be controlled in the preferred ranges of this invention. If treatment is performed in a relaxation state at a higher treatment temperature for a longer treatment time period within the abovementioned ranges, a fabric with a low shrinkage rate after boiling water treatment and formed of component yarns with low strength and low stress at 10% elongation is likely to be obtained. On the other hand, if the treatment is performed in a tension state under conditions of lower treatment temperature and shorter treatment time period, a fabric with a high shrinkage rate after boiling water treatment and formed of component yarns with high strength and high stress at 10% elongation tends to be obtained.

The wet heat treatment can be performed in succession after the weaving process or in a distinctly separate process after completion of the weaving process. Further, either a batch method or a continuous method can be employed, but in view of excellent productivity, it is preferred that the wet heat treatment is performed continuously while the fabric is supplied to and delivered from the wet heat treatment zone. In this case, it is preferred to control the shrinkage degrees in the warp and weft directions during the wet heat treatment in addition to the abovementioned adjustment of treatment temperature and treatment period. The shrinkage degree in the warp direction can be controlled by changing the supply rate and delivery rate of the woven fabric to and from the wet heat treatment, while the distance between both the edges of the woven fabric in the warp direction is fixed during the wet heat treatment. Further, the shrinkage degree in the weft direction can be controlled by adjusting the distances from the fixed portions of the woven fabric at both the edges to the weave width identified before the wet heat treatment.

Further, it is preferred to heat-set the woven fabric in the final setting step. It is preferred that the final setting temperature is 80 to 200°C. A more preferred range is 120 to 180°C, and the final setting time period can be, as appropriate, selected in a range from 0.1 to 30 minutes. Further, it is preferred to dry while tension is kept in such a manner as to maintain the dimensions achieved at the time of the aforementioned wet heat treatment.

Meanwhile, after the wet heat treatment, the woven fabric may be dried, as required, before the final setting step. It is preferred that the drying temperature is in a range from 80 to 200°C. A more preferred range is 100 to 170°C. Further, it is preferred that the treatment time period is selected, as appropriate, in a range from 0.1 to 30 minutes. The drying of the woven fabric can be performed in a relaxed state or in a tensioned state.

To obtain a fabric with lower air permeability, the obtained woven fabric can also be processed by a calender. It is preferred that the calendering is performed at a temperature of 180 to 220°C and a pressure of 3000 to 10000 N/cm and at a speed of 4 to 50 m/min. The woven fabric can also be calendered on one side only or on both sides for control of air permeability.

According to the abovementioned production method, a non-coated airbag fabric as an embodiment of this invention can be obtained.

The production of a coated airbag fabric as another embodiment is explained below. In the case of a coated fabric, a non-coated fabric is coated with an elastomer and heat-set to prepare a coated airbag fabric. As the method of coating a woven fabric on the surface with an elastomer, for example, can be employed a method of immersing the woven fabric in a resin solution vessel and subsequently removing the extra resin using a mangle, vacuum or coating knife, etc. for uniforming, or a method of spraying a resin using a spray device or foaming device. Among these methods, a knife coating method using a coating knife is preferred in view of coating a small amount of a resin uniformly.

Further, it is preferred that the elastomer used for coating is excellent in flame retardancy, heat resistance, air impermeability, etc. For example, silicone resin, chloroprene resin, polyurethane resin, polyamide resin, etc. are suitable, and a silicone resin is preferred, since uniform coating can be easily performed with a less coating amount.

Meanwhile, the order of the abovementioned higher-order processing steps can be changed, as appropriate, to such an extent that the effects of this invention are not impaired.

As described above, according to the method for producing an airbag fabric of this invention, an airbag fabric of this invention, i.e., a non-coated airbag fabric or a coated airbag fabric can be obtained. Any of these fabrics can be used to constitute an airbag device according to a publicly known conventional method.

[Examples]

This invention is explained below in detail in reference to examples. Meanwhile, the following measuring methods were used in the following examples.

A. Relative viscosity in sulfuric acid

Zero point two five gram of a sample (resin, filament or component yarn) was dissolved into 100 ml of 98 wt% sulfuric acid, to make 1 g, and an Ostwald viscometer was used to measure flow time (T1) at 25°C. In succession, the flow time (T2) of 98 wt% sulfuric acid only was measured. The ratio of T1 to T2, i.e., T1/T2 is the relative viscosity in sulfuric acid.

B. Mw/Mn

A sample (resin, filament or component yarn) was washed with hot water of 90°C for 30 minutes, and dried in vacuum at 90°C, to achieve a water content of 1000 ppm. The sample was dissolved in hexafluoroisopropanol, to obtain a test solution. It was measured by gel permeation chromatography (GPC), to obtain weight average molecular weight in terms of PMMA (Mw) and number average molecular weight (Mn), for finally obtaining Mw/Mn. The measuring conditions were as follows.

- GPC instrument: Waters 510

- Columns: Two Shodex GPC HFIP-806M columns were connected.
- Solvent: Hexafluoroisopropanol
- Temperature: 30°C
- Flow velocity: 0.5 ml/min
- Sample concentration: 2 mg/4 ml
- Filtration: 0.45 μm-DISMIC 13HP (Toyo Roshi)
- Injected amount: 100 μl
- Detector: Differential refractometer RI (Waters 410)
- Standard: PMMA (concentration: sample 0.25 mg/solvent 1 ml)
- Measuring time: 62 minutes

C. Amino end group concentration

One gram of a sample (resin, filament or component yarn) was dissolved into 50 mL of phenol/ethanol mixed solution (phenol/ethanol = 80/20) with shaking at 30°C, and the solution was neutralized and titrated by 0.02N hydrochloric acid. The amount of 0.02N hydrochloric acid used was identified. Further, the abovementioned phenol/ethanol mixed solvent (the same amount as above) only was neutralized and titrated by 0.02N hydrochloric acid, and the amount of 0.02N hydrochloric acid used was identified. From the difference between the amounts, the amount of amino end groups per 1 ton of the sample was obtained.

D. Carboxyl end group concentration

Zero point five gram of a sample (resin, filament or component yarn) was dissolved into 20 ml of benzyl alcohol of 196±1°C, and the solution was neutralized and titrated by 0.02N potassium hydroxide ethanol solution. The amount of 0.02N potassium hydroxide ethanol solution used was identified. Further, 20 ml of the abovementioned benzyl alcohol only was neutralized and titrated by 0.02N potassium hydroxide ethanol solution, and the amount of 0.02N potassium hydroxide ethanol solution used was identified. From the difference between the amounts, the amount of carboxyl end groups per 1 ton of the sample was obtained.

E. Melting point and melting heat quantity

On the differential scanning calorimetric curve obtained by measuring 10 mg of a sample (resin, filament or component yarn) using a differential scanning calorimeter DSC-7 produced by Perkin Elmer at a heating rate of 16°C/min, the peak showing an extremal value on the endothermic side was decided as the melting peak, and the temperature giving the extremal value was identified as the melting point (°C). Meanwhile, in the case where there are multiple extremal values, the extremal value on the higher temperature side was identified as the melting point. The heat capacity was obtained by integration from the area of the melting peak (in the case where there were multiple melting peaks, the heat capacities were added), to be identified as the melting heat quantity.

F. Water content

Karl Fischer coulometric titration water content meter (trace level water determination device AQ-2000 and water vaporizer EV-200 respectively produced by Hiranuma Sangyo Co., Ltd.) was used for measurement at a water vaporization temperature of 180°C in a dry nitrogen gas stream.

G. Size of pellets and CV% of pellet sizes

Thirty pellets were selected at random, and the weight of each pellet (mg/pellet) was measured as $x_i$ (i = 1 to 30). From the following formulae, the pellet size ($x_{ave}$ in mg/pellet) and CV% of pellet sizes were obtained.

$$X_{ave} = \frac{1}{30} \times \sum_{1}^{30} x_i$$

$X_{ave}$: Pellet size (mg/pellet)

$$\text{CV\% of pellet sizes} = \frac{100}{x_{ave}} \times \sqrt{\sum_{1}^{30} \frac{(x_i - x_{ave})^2}{29}}$$

$X_{ave}$: Pellet size (mg/pellet)

$X_i$:Each measured value (mg/pellet)

H. Overall fiber fineness and single fiber fineness

When the sample was filaments, a hank with an overall length of 10 m was taken using a sizing reel of 1 m per circumference, and the weight of said hank was measured and multiplied by 1000, to obtain the overall fineness. The overall fineness was divided by the number of filaments to obtain a single fiber fineness.

When the sample was a component yarn taken from a fiber structure, the ends of the component yarn were tied together to prepare a looped hank with a circumferential length of 60 cm in such a manner that the knot could not be loosened. Further, in an atmosphere with a temperature of 25°C and a relative humidity of 55%, said hank was allowed to stand without any load for 24 hours, to be conditioned. Then, it was suspended from a hook with the knot kept at the bottom end in the same environment, and a load of 0.08 cN/dtex was applied to the bottom end of the hank. The position corresponding to a hank length of 25 cm (50 cm in circumferential length) was marked. The load was removed, and the hank was cut off at the position of the mark, to obtain a 50 cm component yarn (not containing the knot). Further, the 50 cm component yarn was weighed, and the weight was multiplied by 20000 times, to obtain the overall fineness of the component yarn. The measurement was performed 10 times, and the measured values were averaged. In this case, since the overall fineness of the component yarn could not be found in the initial measurement, a temporary overall fineness was obtained beforehand for deciding the load to be used for measurement. That is, 50 kg was selected as the load for the abovementioned measurement (for a hank of one circumference), to obtain the temporary overall fineness, and from the temporary overall fineness, the load (0.08 cN/dtex) was decided. The measurement of temporary overall fineness was performed 10 times, and the measured values were averaged. Subsequently the number of filaments constituting the component yarn was counted, and the total fineness of the component yarn was divided by the number of filaments, to obtain the single fiber fineness.

I. Strength, elongation rate and stress at 10% elongation

The S-S curve of a sample (filament or component yarn) was measured using Tensilon UCT-100 produced by Orientec Co., Ltd. according to JIS L 1017 (1995) , 7.5 Tensile Strength and Elongation Rate, (1) Measuring Method of Standard Condition Test. Before the measurement, the sample was allowed to stand in an environment with a temperature of 25°C and a relative humidity of 55% without any load for 48 hours, to be conditioned. Further, with the sample placed in the same environment, the S-S curve was measured at an initial load of 0.08 cN/dtex with a sample length of 250 mm at a stress rate of 300 m/min.

The strength was obtained by dividing the tenacity at the point showing the maximum tenacity on the S-S curve by the overall fineness. The elongation rate was obtained by dividing the elongation at the point showing the maximum tenacity on the S-S-curve by the sample length and multiplying the quotient by 100. The stress at 10% elongation was obtained by dividing the tenacity at 10% elongation by the overall fineness. For each item, measurement was performed 10 times, and the measured values were averaged.

J. Shrinkage rate achieved by applying boiling water treatment at 98°C for 30 minutes

From a package that was allowed to stand in an atmosphere with a temperature of 25°C and with a humidity of 55% for 24 hours, a sizing reel with 1 m per circumference was rotated by 10 revolutions to obtain a hank, and the ends of the hank were tied together, to prepare a looped hank in such a manner that the knot could not be loosened.

The looped hank was allowed to stand in an atmosphere with a temperature of 25°C and with a humidity of 55% without any load for 24 hours, to obtain a sample. The looped hank was suspended from a hook in the same temperature, and a load of 0.08 cN/dtex was applied to the looped hank, to measure the hank length as the original length L1. Then, the looped hank was immersed in boiling water (98°C) for 30 minutes without any load, and taken out, and the hank treated with boiling water was dried at a room temperature of 25°C and a relative humidity of 55% for 24 hours. The dried looped hank was suspended from a hook, and a load of 0.08 cN/dtex was applied to the bottom end of the looped hank, to measure the hank length as the treated length L2. Further, using L1 and L2, the shrinkage rate by boiling water treatment was obtained from the following formula.

$$\text{Shrinkage rate by boiling water treatment (\%)} = [(L1 - L2)/L1] \times 100$$

K. Strength and stress at 10% elongation after boiling water treatment

Filaments unreeled from a package that was allowed to stand in an atmosphere with a temperature of 25°C and a relative humidity of 55% for 24 hours were cut out, and both the ends of the filaments were tied together to prepare a looped hank with a circumferential length of 1 meter in such a manner that the knot could not be loosened. The looped hank was allowed to stand in an atmosphere with a temperature of 25°C and a relative humidity of 55% for 24 hours without any load, and subsequently immersed in boiling water (98°C) for 30 minutes without any load, and taken out. The hank treated with boiling water was dried at a room temperature of 25°C and a relative humidity of 55% for 24 hours. The filaments treated with boiling water were used as a sample, and according to the method described in section I above, the strength after boiling water treatment and the stress at 10% elongation after boiling water treatment were obtained. As the overall fineness of the filaments after boiling water treatment, the following value was used.

$$\text{Overall fineness of filaments after boiling water treatment} = \text{Overall fineness of filaments} \times (1 + \text{shrinkage rate by boiling water treatment}/100)$$

L. Dry shrinkage rate

According to the measuring method of JIS L 1017 (1995), 7.10 Dry Shrinkage Rate, (2) Dry Shrinkage Rate after Heating (Method B), the dry shrinkage rate of a sample (filament) was measured. At first, a sizing reel of 1 m per circumference was rotated by 10 revolutions to take a hank, and the ends of the filament was tied together, to prepare a looped hank in such a manner that the knot could not be loosened. The looped hank was allowed to stand in an environment with a temperature of 25°C and a relative humidity of 55% for 48 hours without any load, to be conditioned. Subsequently in the same environment, the looped hank for measurement of sample length was suspended from a hook, and a load of 0.08 cN/dtex was applied to the looped hank, to measure the hand length as the original length L3. Further, the load was removed, and the looped hank was placed in gear oven GPHH-200 produced by Tabai Espec, and subjected to dry heat treatment without any load in an atmospheric temperature of 150°C for 30 minutes. Subsequently the looped hank treated with dry heat was taken out of the oven, and allowed to stand again in an environment with a temperature of 25°C and a relative humidity of 55% without any load for 48 hours, to be conditioned. Then, in the same environment, the looped hank treated with dry heat was suspended from a hook and a load of 0.08 cN/dtex was applied to the looped hank, to measure the hank length as the treated length L4. Using L3 and L4, the dry heat shrinkage rate was obtained from the following formula. Measurement was performed five times, and the measured values were averaged.

$$\text{Dry heat shrinkage rate} = (L3 - L4)/L3 \times 100$$

M. U%

UT4-CX/M produced by Zellweger Uster was used to measure U% (normal) at a yarn speed of 200 m/min for 1 minute.

N. Number of fuzz pieces

A fuzz tester (DT-104) produced by Toray Industries, Inc. was used to measure the number of fuzz pieces per 100, 000 m. An F type detector was used for measuring at a yarn speed of 300 m/min and a tension of 0.08 cN/dtex tension for 180 minutes. Ten packages were measured, and the detected total number of fuzz pieces was divided by a total measurement length of 540,000 m (54,000 m x 10 packages), and the quotient was multiplied by 10, to obtain the number of fuzz pieces per 100,000 m. The target level of this invention is 5 fuzz pieces or less per 100,000 m, and 0 or less is the best.

O. Number of yarn breaking times

The number of yarn breaking times that occurred when 100 kg of filaments were formed by spinning and stretching was counted. Less yarn breaking times were judged to mean better yarn formability.

P. Shrinkage rate of the fabric subjected to boiling water treatment at 98°C for 30 minutes

According to JIS L 1096 (1999), 8.64.4 Dimensional Changes of Woven Fabrics, Method B (Boiling Water Immersion Method), the shrinkage rate of the fabric subjected to boiling water treatment was measured.

At first in an environment with a temperature of 25°C and a relative humidity of 55%, an airbag fabric was allowed to stand for 24 hours, and an airbag fabric square of 25 cm x 25 cm was cut out as a sample. Further, as shown in Fig. 58 of JIS L 1096 (1999) 8.64.4, measuring sections of 20 cm were marked on the sample, and in a relaxed state, the sample was immersed in water of 98°C for 30 minutes and taken out. The sample taken out was lightly pressed to be drained, and naturally dried in an environment with a temperature of 25°C and a relative humidity of 55% for 24 hours. On the sample treated with boiling water, the lengths of the measuring sections were measured (L5: warp direction, L6: weft direction). Further, from the following formulae, the shrinkage rates of the fabric subjected to boiling water treatment were obtained.

$$\text{Shrinkage rate of a fabric in warp direction by boiling water treatment (\%)} = (20 - L5)/20 \times 100$$

$$\text{Shrinkage rate of a fabric in weft direction by boiling water treatment (\%)} = (20 - L6)/20 \times 100$$

Q. Tensile strength of fabric

According to JIS L 1099 (1999), 8.12.1 Tensile Strength and Elongation Rate, Standard Condition, Method A (Strip Method), the tensile strength of an airbag fabric was measured using Tensilon UCT-100 produced by Orientec Co., Ltd.

An airbag fabric was allowed to stand in an environment with a temperature of 25°C and a relative humidity of 55% for 24 hours, and a 3 cm wide specimen was cut out of the fabric. The specimen was pulled at a stress rate of 20 cm/min with a grip interval of 20 cm in the same environment, and the strength (N) at which the specimen was broken was measured. Measurement was performed in the warp direction and in the weft direction respectively five times, and the measured values were averaged to obtain the tensile strength in each direction.

R. Tear tenacity of fabric

According to JIS L 1096 (1999), 8.15.1 Tear Tenacity, Method A-1 (Single-Tongue Method), the tear tenacity of an airbag fabric was measured.

An airbag fabric was allowed to stand in an environment with a temperature of 25°C and a relative humidity of 55% for 24 hours, and a specimen of 10 cm x 25 cm was cut out of the fabric. A slit of 10 cm was made at right angles to the short side at the center of the short side, and the specimen was torn using Tensilon UCT-100 produced by Orienteck Co., Ltd. with a grip interval of 10 cm at a stress rate of 10 cm/min in the same temperature and humidity environment.

The maximum load (N) in this case was measured. Measurement was performed in the warp direction (in the direction to cut the warp yarns) and the weft direction (in the direction to cut the weft yarns) respectively five times, and the measured values were averaged to obtain the tensile tenacity in each direction.

S. Numbers of warp yarns and weft yarns

According to JIS L 1096 (1999), 8.6.1 Methods for Measuring the Densities of Woven fabrics, measured were the number of warp yarns (yarns/2.54 cm) and the number of weft yarns (yarns/2.54 cm). A sample (airbag fabric) was allowed to stand in an environment with a temperature of 25°C and a relative humidity of 55% for 24 hours, and in the same environment, the number of warp yarns in a 10cm section and the number of weft yarns in a 10 cm section were counted and converted into the number warp yarns per 2.54 cm and the number of weft yarns per 2.54 cm. Measurement was performed respectively five times, and the measured values were averaged.

T. Thickness

According to JIS L 1096 (1999), 8.5.1 Methods for Measuring the Thicknesses of Woven Fabrics, the thickness of an airbag fabric was measured. A sample (airbag fabric) was allowed to stand in an environment with a temperature of 25°C and a relative humidity of 55% for 24 hours, and in the same environment, the thickness of the sample was measured at a pressure of 23.5 kPa using a thickness gauge (Schopper type thickness gauge produced by Yasuda Seiki Seisakusho Ltd.) at five different places, and the measured values were averaged.

U. Air permeability

According to JIS L 1096 (1999), 8.27.1, Method A, the air permeability of an airbag fabric was measured. An airbag fabric was allowed to stand in an environment with a temperature of 25°C and a relative humidity of 55% for 24 hours, and a 20 cm long 15 cm wide sample was cut out of the fabric. In the same environment, an air permeability tester (FX3300-III produced by Textest Co.) was used to measure the rate of air (cc/cm$^2$/sec) passing through the sample with a measuring area of 38 cm$^2$ at a test pressure of 19. 6 kPa. Twenty different samples were measured, and the measured values were averaged to obtain the air permeability of the fabric.

V. Bending resistance

According to JIS L 1096 (1999), 8.19.1, Method A (45° Cantilever Method), the bending resistance of an airbag fabric was measured. An airbag fabric was allowed to stand in an environment with a temperature of 25°C and a relative humidity of 55% for 24 hours, and a specimen of 2 cm x 15 cm was cut out of the fabric. The bending resistance of the specimen was measured using a cantilever tester in the same environment. Measurement was performed in the warp direction (warp yarns were parallel to the long sides of the sample) and in the weft direction (weft yarns were parallel to the long sides of the sample) respectively five times, and the measured values were averaged.

W. Accommodation capability

A 50 cm x 50 cm airbag fabric was folded in the warp direction and then in the weft direction to obtain a sample folded into four. Five such samples were prepared. The five specimens were overlaid on a horizontal base and subsequently an iron plate of 30 cm x 30 cm with a weight of 300 g was placed on them. The stack was allowed to stand for 5 minutes for stabilization, and subsequently the height of the five specimens of the airbag fabric was measured. The measured height was divided by the value measured using the airbag fabric of Reference Example 1 and the quotient was multiplied by 100, for evaluation of accommodation capability. A smaller value indicates that the accommodation capability of the airbag fabric is higher. Measurement was performed five times using different samples, and the measured values were averaged.

X. Inflatability

Two circular sheets with a diameter of 725 mm were cut from an airbag fabric by a punching method, and three circular reinforcing sheets with a diameter of 200 mm obtained from the same fabric were laminated at the center of one of the circular sheets. Along the circular lines of 110 mm, 145 mm and 175 mm in diameter, the laminate was sewn by a lock stitch sewing machine using sewing threads of polyamide 66 fibers of 470 dtex/1x3 as the needle thread and the bobbin thread, and a hole with a diameter of 90 mm was formed as an opening for installing an inflator. At positions of 255 mm from the central portion and opposite to each other in bias directions, one each circular reinforcing sheet with a diameter of 75 mm obtained from the same fabric was applied, and along the circular lines of 50 mm and 60 mm in diameter, the laminate was sewn by a lock stitch sewing machine using sewing threads of polyamide 66 fibers of 470 dtex/1x3 as the needle thread and the bobbin thread, and two vent holes with a diameter of 40 mm were formed. Then with the circular reinforcing sheet side kept outside, the other circular sheet was overlaid with the warp axis shifted by 45°, and along the circular lines of 700 mm and 710 mm in diameter, the laminate was sewn by a double chain stitch sewing machine using sewing threads of polyamide 66 fibers of 1400 dtex/1 as upper and lower threads. The bag was turned inside out, to prepare a driver' s seat airbag with a volume of 60 L as shown in Fig. 2.

The driver's seat airbag was inflated experimentally by an electrically ignited inflator. The inflation did not cause the bag to be burst, and allowed the bag to be inflated in good balance without breaking or melting the fabric and without any air leak from the seams. The airbag was found to be good. An airbag that did not comply with any one of the abovementioned items was decided to be a defective product. The number of good products found acceptable after 100 inflation tests was employed as an inflatability indicator. The target level of this invention is 95 or more.

Y. Impact absorbability

A rubber balloon with a very thin wall thickness was placed inside the airbag prepared in Section X above, and the balloon was inflated to a volume of 60 L at an internal pressure of 19.6 kPa, to keep the airbag inflated. Then, as shown in Fig. 3, a pendulum formed of an iron ball (1 kg) was released at an angle of 45°, to collide with the air bag, and the angle a (°) at which the iron ball was bounced back by repulsion was measured. The obtained angle was divided by the angle of the pendulum bounced back from the airbag of Reference Example 1, and the quotient was multiplied by 100 to obtain an indicator of impact absorbability. A smaller value of impact absorbability was decided to indicate more excellent impact absorbability.

Z. Cover factor

The cover factor can be represented by the following formula.

$$K = N_W \times (0.9 \times D_W)^{0.5} + N_F \times (0.9 \times D_F)^{0.5}$$

$N_W$: Number of warp yarns (yarns/2.54 cm)
$D_W$: Overall fineness of warp yarn (dtex)
$N_F$: Number of weft yarns (yarns/2.54 cm)
$D_F$: overall fineness of weft yarn (dtex)

Further, as $D_W$ and $D_F$, the values of component yarns were used. Furthermore, $N_W$ and $N_F$ were measured according to the method stated in Section S above.

[Preparation example 1] (Preparation of lysine decarboxylase)

At first, E. coli strain JM109 was cultured as follows. One platinum loop of the strain was planted in 5 ml of LB medium, and pre-cultured by shaking at 30°C for 24 hours. Then, another 50 ml of LB medium was placed in a 500 ml Erlenmeyer flask and sterilized by steam at 115°C for 10 minutes. The abovementioned pre-cultured strain was sub-cultured in the medium for 24 hours at an amplitude of 30 cm and 180 rpm while the pH was adjusted to 6.0 by 1N hydrochloric acid aqueous solution. The biomass obtained like this was collected, ultrasonically crushed and centrifuged to prepare a cell-free extract. The lysine decarboxylase activity of the cell-free extract was measured according to an established method [Kenji Soda and Haruo Misono, Seikagaku Jikken Koza (= Lectures of Biochemical Experiments), vol. 11-jo, pages 179 to 191, 1976].

In the case where lysine is used as a substrate, the conversion by lysine monooxygenase, lysine oxidase and lysine mutase considered to be the main path can occur. Therefore, for the purpose of blocking the reaction system, the cell-free extract of E. coli strain JM109 was heated at 75°C for 5 minutes. Further, the cell-free extract was fractionated using 40% saturated ammonium sulfate and 55% saturated ammonium sulfate. The coarsely refined lysine decarboxylase solution was used to produce 1,5-pentamethylenediamine from lysine.

[Preparation example 2] (Preparation of 1,5-pentamethylenediamine)

An aqueous solution prepared to contain 50 mM lysine hydrochloride (produced by Wako Pure Chemical Industries, Ltd.), 0.1 mM pyridoxal phosphate (produced by Wako Pure Chemical Industries, Ltd.) and 40 mg/L-coarsely refined lysine decarboxylase (prepared in Preparation Example 1) was made to react at 45°C for 48 hours while the pH was maintained at 5.5 to 6.5 using 0.1N hydrochloric acid aqueous solution, to obtain 1,5-pentamethylenediamine hydrochloride. Sodium hydroxide was added to the aqueous solution, to convert 1, 5-pentamethylenediamine hydrochloride into 1,5-pentamethylenediaminem, and extraction was performed using chloroform, being followed by distillation under reduced pressure (1.33 kPa, 60°C), to obtain 1,5-pentamethylenediamine.

[Preparation example 3] (Preparation of an aqueous solution containing 50 wt% of the salt of 1,5-pentamethylenediamine and adipic acid)

An aqueous solution obtained by dissolving 102 g of the 1,5-pentamethylenediamine produced in Preparation Example 2 into 248 g of water was immersed in a water bath of 50°C with stirring, when adipic acid (produced by K.K. CaHC) was added by approximately 1 g each time and by approximately 0.2 g each time at near the neutral point, to examine the change in the pH of the aqueous solution in response to the added amount of adipic acid, for obtaining the neutral point. It was pH 8.32. The added amount of adipic acid at the neutral point was 146 g. An aqueous solution (496 g) containing 50 wt% of the equimolar salt of 1,5-pentamethylenediamine and adipic acid was prepared to achieve a pH of 8.32.

[Preparation example 4] (Preparation of an aqueous solution containing 70 wt% of the salt of 1,5-pentamethylenediamine and adipic acid)

An aqueous solution (354.3 g) containing 70 wt% of the equimolar salt of 1,5-pentamethylenediamine and adipic acid was prepared as described in Preparation Example 3, except that the amount of water was 104.3 g.

[Preparation Example 5] (Preparation of an aqueous solution containing 57 wt% of the salt of 1,5-pentamethylenediamine and adipic acid)

An aqueous solution (435.1 g) containing 57 wt% of the equimolar salt of 1,5-pentamethylenediamine and adipic acid was prepared as described in Preparation Example 3, except that the amount of water was 187.1 g.

(Working Example 1)

The aqueous solution containing 70 wt% of the equimolar salt of 1, 5-pentamethylenediamine and adipic acid of Preparation Example 4 was adjusted to a water temperature of 50°C while 1,5-pentamethylenediamine and water were added to the aqueous solution to adjust the ratio of the number of moles of 1,5-pentamethylenediamine to the number of moles of adipic acid (number of moles of 1,5-pentamethylenediamine/number of moles of adipic acid) to 1.007 and the raw monomer concentration in the aqueous solution to 70 wt%. Further, phenylphosphonic acid was added to the raw material aqueous solution to ensure that the obtained polyamide 56 resin could contain 100 ppm of phosphorus atoms, and subsequently the solution was supplied into a heating medium-heated polymerization reactor with its atmosphere substituted by nitrogen beforehand (raw material preparation step) .

Subsequently the reactor was internally purged with nitrogen, while the heating medium was heated to concentrate the aqueous solution (concentration step). In this case, with the temperature in the reactor kept at 125°C and with the pressure (gauge pressure) in the reactor kept at 0.2 MPa, concentration was performed till the concentration of the raw material in the aqueous solution became 90 wt%. The concentration of the aqueous solution in the reactor was determined from the amount of water distilled.

Further, the polymerization reactor was closed and the temperature of the heating medium was raised up to f 270°C, to raise the pressure (gauge pressure) in the reactor up to 1.7 MPa (pressure raising step). Then, the pressure (gauge pressure) in the reactor was controlled and maintained at 1.7 MPa till the temperature in the reactor became 250°C (pressure control step). Further, the temperature of the heating medium was changed to 285°C, and the pressure was released to atmospheric pressure, taking 60 minutes (pressure release step). Furthermore, the pressure (gauge pressure) in the reactor was reduced to -13.3 kPa, and when a predetermined stirring power was reached, the polymerization reaction was stopped (pressure reduction step). Finally the polymerization reactor was internally slightly pressurized by nitrogen to discharge the polymer, and the polymer was cooled with water and cut (discharge step). For achieving the predetermined stirring power, it was necessary to keep the pressure (gauge pressure) in the reactor at -13.3 kPa for 0.5 hours after the pressure was reached in the pressure reduction step.

The relative viscosity in sulfuric acid of the obtained polyamide 56 resin was 2.75, and the $[NH_2]/([NH_2] + [COOH])$ as an indicator of the balance between the amino end group concentration and the carboxyl end group concentration was 0.48. The size of pellets was 35 g/pellet, and the CV% of pellet sizes was 8%.

The obtained polyamide 56 resin was supplied into a vacuum dryer, and 5 wt% copper acetate aqueous solution was added to achieve 100 ppm as copper atoms based on the amount of the polyamide 56 resin, and the dryer was rotated to blend for approximately 1 hour. Further, 50 wt% potassium iodide aqueous solution was added to achieve 600 ppm as potassium atoms based on the amount of the polyamide 56 resin, and the dryer was rotated again to blend for approximately 1 hour. Subsequently, the dryer was rotated to stir the resin in the dryer, while under nitrogen flow the temperature in the dryer was raised up to 90°C and kept at 90°C for 5 hours for 5 hours to perform preliminary crystallization.

Further, after stopping the supply of nitrogen, the pressure reduction in the dryer was started. Subsequently the temperature in the dryer was raised again, and after the temperature in the dryer reached 130°C, the heater output was controlled to keep the heating rate at 5°C/hour, while the temperature in the dryer was raised to 170°C. Further, after the temperature in the dryer was kept at 170°C while the pressure in the dryer was kept at 133 Pa or lower for a predetermined time period, the polyamide 56 resin was taken out. In this case, the time period during which the pressure in the dryer was kept at 133 Pa or lower was adjusted to ensure that the relative viscosity in sulfuric acid of the obtained polyamide 56 resin could become 3.85. That is, the polyamide 56 resin was produced for various holding time periods, to obtain the correlation curve between the relative viscosity in sulfuric acid of the obtained polyamide 56 resin and the holding time period, and the holding time period that could achieve a relative viscosity in sulfuric acid of 3.85 was decided.

The relative viscosity in sulfuric acid of the obtained polyamide 56 resin was 3.85, and Mw/Mn was 2.17, the water content being 300 ppm.

The obtained 56 resin was melt-spun, stretched and heat-treated continuously to obtain polyamide 56 filaments using a spinning, stretching and heat treatment apparatus equipped with a single-screw kneader shown in Fig. 1.

At first, the resin was supplied into the hopper, and molten and kneaded by the single-screw kneader, being introduced into a spinning block. A gear pump was used to meter and discharge the polymer for introduction into a spinning pack contained in the apparatus, being spun from a spinnerette having 136 holes with round sectional form.

The filaments were reheated by the heating cylinder installed under the spinning block, and cooled and solidified by an annular cooling air generation device, and oiled by an oiling device. Subsequently, the filaments were taken up by a first roll, and with the speed of a second roll kept at 1.02 times the speed of the first roll, the unstretched filaments were stretched, then being stretched at the speed ratio between the second roll and a third roll, heat-treated by the third roll, re-stretched at the speed ratio between the third roll and a fourth roll, heat-treated again by the fourth roll, stretched again at the speed ratio between the fourth roll and a fifth roll (final heating roll), heat-treated again by the fifth roll, relaxed between the fifth roll and a sixth roll (final roll), then entangled by an entangling nozzle (0.2 MPa pressure) disposed between the sixth roll and a winder, and wound at a winding tension of 0.08 cN/dtex (the fineness of the wound filaments is used as the fineness), to obtain 136 polyamide 56 filaments of 350 decitex each, by spinning, stretching, heat-treating and crimping in one stage. The conditions of melt spinning, stretching and heat treatment were as follows.

- Kneader temperature: 275°C
- Spinning temperature: 285°C
- Residence time: 6 minutes
- Filter layer: Packed with 2 mm $\phi$ glass beads
- Filter: 10 $\mu$m nonwoven fabric filter
- Spinnerette: 136 holes, each with a hole diameter of 0.18 mm and a hole depth of 0.4 mm
- Discharged amount: 75.25 g/min (one yarn consisting of 136 filaments per pack)
- Heating cylinder: Temperature 310°C, heating cylinder length 0.15 m
- Cooling: Annular cooling air generation device used (cooling air generated inwardly), temperature 20°C, relative humidity 55%, air velocity 0.45 m/sec, cooling start position at 0.30 m below the spinnerette face
- Oil: 25 parts by weight of a mixture consisting of a fatty acid ester, nonionic surfactant, anionic surfactant and modified silicone as active ingredients of the oil, diluted by 75 parts by weight of a mineral oil with 14 carbon atoms. The deposition amount was adjusted to ensure that the ingredients other than the mineral oil could be deposited by 1 wt% based on the weight of the filaments.
- Melt spinning and stretching environment: 25°C, 55% RH
- First roll temperature: 25°C
- Second roll temperature: 50°C
- Third roll temperature: 140°C
- Fourth roll temperature: 180°C
- Fifth roll temperature: 230°C
- Sixth roll temperature: 25°C
- First roll speed: 450 m/min
- Second roll speed: 459 m/min
- Third roll speed: 1285 m/min

- Fourth roll speed: 1671 m/min
- Fifth roll speed: 2339 m/min
- Sixth roll speed: 2152 m/min
- Winding speed: 2150 m/min
- Stretching ratio: 4.78 times (stretching ratio in a stretching temperature range from 100 to 245°C: 1.82 times)

The polyamide 56 filaments of Working Example 1 were 3.82 in the relative viscosity in sulfuric acid, 2.21 in Mw/Mn, 255°C in melting point, 80 J/g in melting heat quantity, 9 cN/dtex in strength, 23% in elongation rate, 3.3 cN/dtex in the strain at 10% elongation, 12% in the shrinkage rate by boiling water treatment, 4% in dry shrinkage rate, and 0.9 in U%. Further, the filaments after boiling water treatment were had high strength and low elastic modulus, having a strength of 7.9 cN/dtex and a stress at 10% elongation of 0.8 cN/dtex. Working Example 1 was good in yarn formability and the obtained filaments had good surface appearance without fuzz (0 piece/100,000 m).

The polyamide 56 filaments of Working Example 1 were warped and subsequently woven using a water jet loom (ZW303 produced by Tsudakoma Corp.), to produce a plain weave (gray fabric). In this case, the loom was adjusted to have 53 yarns/2.54 cm each as the warp yarns and the weft yarns of the gray fabric. The cover factor of the gray fabric was 1881. The capability of smoothly undergoing the warping process and the weaving process was good.

The obtained woven fabric was supplied into hot water containing 0.5 g/L of sodium dodecylbenzenesulfonate and 0.5 g/L of soda ash, to be scoured in a relaxed state and heat-shrunken (hot water temperature 90°C, treatment time 1 minute), and subsequently dried in a relaxed state at 130°C for 1 minute. Further, the fabric was finally set at 180°C for 1 minute, while being restricted in the shrinkage in the warp and weft directions, to ensure that the shrinkage rates of the obtained airbag fabric by boiling water treatment (in warp and weft directions) could be 0.3%. Thus, the airbag fabric of Working Example 1 was obtained. The obtained airbag fabric had 59 yarns/2.54 cm each as warp yarns and weft yarns, a cover factor of 2213 and a thickness of 0.32 mm. The results of Working Example 1 are shown in Table 1.

Since the airbag fabric of Working Example 1 was high in the strength of the component yarns, it was a woven fabric having excellent tensile strength and tear tenacity and also low air permeability, thus being excellent in inflatability. Further, since the stress at 10% elongation of the component yarns was low, the airbag fabric was low in bending resistance, thus flexible, and also excellent in accommodation capability and impact absorbability.

(Reference Example 1)

An aqueous solution of 1.007 as the ratio of the number of moles of 1, 6-hexamethylenediamine to the number of moles of adipic acid (number of moles of 1,6-hexamethylenediamine/number of moles of adipic acid), 50 wt% in the raw monomer concentration of the aqueous solution and 50°C in water temperature was supplied into a heating medium-heated polymerization reactor with its atmosphere substituted by nitrogen beforehand, and the temperature of the heating medium was set at 280°C to start heating. The pressure in the polymerization reactor was adjusted to 1.47 MPa, and the reaction mixture was heated to 270°C. Then, the pressure in the reactor was gradually released, and further reduced, and subsequently at a predetermined stirring power, the polymerization reaction was stopped. The discharged strand was cooled with water and cut to obtain a polyamide 66 resin.

The obtained polyamide 66 resin was 2.85 in the relative viscosity in sulfuric acid, 0.42 in $[NH_2]/([NH_2] + [COOH])$ as an indicator of the balance between the amino end group concentration and the carboxyl end group concentration, 39 g/pellet in pellet size and 9% in the CV% of pellet sizes.

The obtained polyamide 66 resin was supplied into a vacuum dryer, and 5 wt% copper acetate aqueous solution was added to achieve 100 ppm as copper atoms based on the amount of the polyamide 66 resin, the dryer being rotated to blend for approximately 1 hour. Further, 50 wt% potassium iodide aqueous solution was added to achieve 600 ppm as potassium atoms based on the amount of the polyamide 66 resin, and the dryer was rotated again to blend for approximately 1 hour.

Subsequently the dryer was rotated to stir the resin in the dryer, while starting the pressure reduction in the dryer, and then the temperature in the dryer was raised again to 170°C. Further, after 170°C was reached, the pressure in the dryer was kept at 133 Pa or lower for a predetermined time period, and the polyamide 66 resin was taken out. The time period during which the pressure in the dryer was kept at 133 Pa or lower in this case was adjusted to ensure that the relative viscosity in sulfuric acid of the obtained polyamide 66 resin could become 3.85. That is, the polyamide 66 resin was produced for various holding time periods, to obtain a correlation curve between the relative viscosity in sulfuric acid of the obtained polyamide 66 resin and the holding time period, and the holding time period that could achieve a relative viscosity in sulfuric acid of 3.85 was decided. The obtained polyamide 66 resin was 3.85 in the relative viscosity in sulfuric acid and 2.2 in Mw/Mn.

Subsequently the obtained polyamide 66 resin was conditioned to have a water content of 600 ppm, and filaments were produced as described in Working Example 1. In this case, the kneader temperature was changed to 285°C, the spinning temperature, to 295°C, the heating cylinder temperature, to 320°C, and the second roll temperature, to 60°C. Further, the speeds of the first and second rolls were adjusted to let the obtained filaments have an elongation rate of 23%. The speed of the second roll was 1.02 times the speed of the first roll in this case.

The polyamide 66 filaments of Reference Example 1 were 3.81 in the relative viscosity in sulfuric acid, 2.26 in Mw/Mn, 8.6 cN/dtex in strength, 23% in elongation rate, 3.4 cN/dtex in the stress at 10% elongation, and 5.7% in the shrinkage rate by boiling water treatment. The filaments obtained after boiling water treatment had a strength of 8 cN/dtex and a stress at 10% elongation of 1.9 cN/dtex. The yarn formability was as good as that in Working Example, but the filaments had some fuzz (0.2 piece/100,000 m).

The obtained polyamide 66 filaments were used to produce an airbag fabric as described in Working Example 1, except that the number of warp yarns and the number of weft yarns of the water jet loom were adjusted to ensure that the airbag fabric obtained after final setting could have 59 yarns/2.54 cm each as warp yarns and weft yarns. The number of warp yarns and the number of weft yarns of the adjusted water jet loom were 56 yarns/2.54 cm each. The results of Reference Example 1 are shown in Table 1.

Since the filaments of Reference Example 1 were of polyamide 66, they were high in the stress at 10% elongation after boiling water treatment compared with those of Working Example 1. Therefore, even if the woven fabric obtained by weaving the filaments was heat-shrunken in the scouring, drying and final setting process with an intention to sufficiently lower the shrinkage rate of the obtained airbag fabric by boiling water treatment, the stress at 10% elongation of the filaments (component yarns) constituting the fabric was higher than that of Working Example 1. Therefore, the airbag fabric of Working Example 1 was lower in bending resistance, more flexible, excellent in accommodation capability and also excellent in impact absorbability.

(Comparative Example 1)

An aqueous solution containing 50 wt% of the equimolar salt of 1,5-pentamethylenediamine and adipic acid was supplied into a heating medium-heated polymerization reactor with its atmosphere substituted by nitrogen beforehand, and the heating medium temperature was set at 280°C to start heating. The pressure in the polymerization reactor was adjusted to 1.47 MPa, and the reaction mixture was heated to 270°C. Then, the pressure in the reactor was gradually released, and further the pressure (gauge pressure) in the polymerization reactor was reduced to -13.3 kPa. Subsequently at a predetermined stirring power, the polymerization reaction was stopped, and the discharged strand was cooled with water and cut, to obtain a polyamide 56 resin with a relative viscosity in sulfuric acid of 3.72. In Comparative Example 1, a polyamide 56 resin with a relative viscosity in sulfuric acid of 3 or higher was produced by a heat polymerization method only, and therefore to achieve a predetermined stirring power, it was necessary to hold a pressure (gauge pressure) of -13.3 kPa reached in the polymerization reaction for as long as 3 hours. The obtained polyamide 56 resin was as wide as 3.2 in the molecular weight distribution expressed by Mw/Mn and as low as 0.15 in $[NH_2]/([NH_2] + [COOH])$ as an indicator of the balance between the amino end group concentration and the carboxyl end group concentration, losing the mole balance n the polymerization reactor. Meanwhile the polyamide 56 resin was 35 g/pellet in pellet size and 8% in the CV% of pellet sizes.

The obtained polyamide 56 resin was vacuum-dried by a vacuum dryer at an internal temperature of 90°C, the polymer being dried down to a water content of 300 ppm.

It was attempted to produce polyamide 56 filaments using the polymer as described in Working Example 1, but since the fibers often broke after the third roller inclusive, no sampling could be made. Therefore the roll speeds of the third and subsequent rolls were changed, while the temperature of the fifth roll was lowered, and as a result, the filaments stably ran and could be continuously sampled. The winding speed was corrected to achieve a yarn tension of 0.08 cN/dtex between the sixth roll and the winder, and the discharged amount was corrected to ensure that the obtained filaments could have an overall fineness of 350 dtex. The roll speeds of Comparative Example 1 are shown below, and the results are shown in Table 1.

- First roll speed: 450 m/min
- Second roll speed: 459 m/min
- Third roll speed: 1377 m/min
- Fourth roll speed: 1584 m/min
- Fifth roll speed: 1773 m/min
- Sixth roll speed: 1632 m/min
- Winding speed: 1640 m/min
- Stretching ratio: 3.63 times (stretching ratio in a stretching temperature range from 100 to 245°C: 1.29 times)
- Fifth roll temperature: 200°C

The yarn formability of Comparative example 1 was poor, and the obtained filaments had fuzz pieces as many as 32 pieces/100, 000 m, being poor in surface appearance.

Further, the polyamide 56 filaments of Comparative Example 1 were used to produce an airbag fabric as described in Working Example 1, except that the number of warp yarns and the number of weft yarns of the water jet loom were adjusted to ensure that the number of warp yarns and the number of weft yarns of the airbag fabric obtained after scouring, drying and final setting could be 59 yarns/2.54 cm each. The number of warp yarns and the number of weft yarns of the adjusted water jet loom were 49 yarns/2.54 cm each. Since the filaments of Comparative Example 1 had much fuzz, the capability of smoothly undergoing the weaving process was poor. The results of Comparative Example 1 are shown in Table 1.

As can be seen from the comparison between Working Example 1 and Comparative Example 1, if the polymerization method preferred in the present invention is employed, the volatilization and cyclization of 1,5-pentamethylenediamine in heat polymerization can be inhibited, and the mole balance in the polymerization reactor can be kept. Therefore, polyamide 56 filaments with an Mw/Mn ratio of 3 or lower can be obtained. Hence, filaments small in both overall fineness and single fiber fineness, high in strength and 20% or lower in the shrinkage rate by boiling water treatment can be stably produced. It can also be seen that the filaments have high strength also after boiling water treatment. The reason is considered to be that since Mw/Mn is as low as 3 or lower, the molecular chains of polyamide 56 in the filaments are uniformly oriented in the spinning and stretching process, and that crystallization progresses rapidly in the heat treatment at the final roll, and therefore that many oriented dense crystal phases and many inter-tying molecules for connecting the crystal phases are formed in the filaments.

Therefore, in the comparison between the obtained airbag fabrics, the airbag fabric obtained in Working Example 1 was higher in the strength of component yarns, having high tensile strength and high tear tenacity. The airbag fabric of Comparative Example 1 was insufficient in tensile strength and tear tenacity owing to insufficient strength of component yarns, and in an inflation test, many holes were formed in the fabric. Further, the fuzz in the filaments used was a defect to raise the air permeability of the fabric, and the fabric was also poor in inflatability.

(Comparative Example 2)

The polyamide 56 filaments of Comparative Example 1 were used to produce an airbag fabric as described in Comparative Example 1, except that the number of warp yarns and the number of weft yarns of the woven fabric produced by the water jet loom were adjusted to 51 yarns/2.54 cm each, that the temperature of the hot water used for scouring was 50°C, and that the shrinkage of the woven fabric in the scouring, drying and final setting process was restricted to ensure that the shrinkage rates (in the warp weft directions) of the obtained airbag fabric by boiling water treatment could become 5% each. The results of Comparative Example 2 are shown in Table 1.

Since the airbag fabric of Comparative Example 2 was higher than 3% in the shrinkage rates of the fabric by boiling water treatment and was insufficient in the heat shrinkage of the woven fabric in the fabric production process, the stress at 10% elongation of the component yarns was kept higher than 2 cN/dtex. Therefore, the fabric was inferior to that of Working Example 1 in bending resistance, accommodation capability and impact absorbability. Further, since the fabric of Working Example 1 was higher in the strength of component yarns and higher also in the tensile strength and tear tenacity thereof, the fabric of Working Example 1 was more excellent also in inflatability.

[Table 1]

| | Item | Unit | Working Example 1 | Reference Example 1 | Comparative Example 1 | Comparative Example 2 |
|---|---|---|---|---|---|---|
| Filaments | Polymer used | - | N56 | N66 | N56 | N56 |
| | Relative viscosity in sulfuric acid | - | 3.82 | 3.81 | 3.60 | 3.60 |
| | Mw/Mn | - | 2.21 | 2.26 | 3.34 | 3.34 |
| | Overall fineness | dtex | 350 | 350 | 350 | 350 |
| | Number of filaments | - | 136 | 136 | 136 | 136 |
| | Single fiber fineness | dtex | 2.6 | 2.6 | 2.6 | 2.6 |
| | Strength | cN/dtex | 9.0 | 8.6 | 6.7 | 6.7 |
| | Elongation rate | % | 23 | 23 | 27 | 27 |
| | Shrinkage rate after having been subjected to boiling water treatment at 98°C for 30 minutes | % | 12.0 | 5.7 | 22.5 | 22.5 |
| | Strength after the boiling water treatment | cN/dtex | 7.9 | 8.0 | 4.4 | 4.4 |
| | Stress at 10% elongation after the boiling water treatment | cN/dtex | 0.8 | 1.9 | 0.8 | 0.8 |
| | Number of yarn breaking times | times/100 kg | 0 | 0 | 54 | 54 |
| Airbag fabric | Shrinkage rate of fabric by boiling water treatment (warp direction) | % | 0.3 | 0.3 | 0.3 | 5.0 |
| | Shrinkage rate of fabric by boiling water treatment (weft direction) | % | 0.3 | 0.3 | 0.3 | 5.0 |
| | Overall fineness of each component yarn (warp) | dtex | 391 | 369 | 427 | 408 |
| | Overall fineness of each component yarn (weft) | dtex | 391 | 369 | 427 | 408 |
| | Single fiber fineness in each component yarn (warp) | dtex | 2.9 | 2.7 | 3.1 | 3.0 |
| | Single fiber fineness in each component yarn (weft) | dtex | 2.9 | 2.7 | 3.1 | 3.0 |
| | Strength of component yarns (warp) | cN/dtex | 8.0 | 8.0 | 4.4 | 5.7 |
| | Strength of component yarns (weft) | cN/dtex | 8.0 | 8.1 | 4.5 | 5.6 |
| | Stress at 10% elongation of component yarns (warp) | cN/dtex | 1.0 | 2.2 | 1.0 | 2.2 |
| | Stress at 10% elongation of component yarns (weft) | cN/dtex | 1.0 | 2.1 | 1.0 | 2.1 |
| | Tensile strength (warp direction) | N/cm | 693 | 685 | 411 | 512 |
| | Tensile strength (weft direction) | N/cm | 701 | 691 | 420 | 505 |
| | Tear tenacity (warp direction) | N | 253 | 241 | 172 | 192 |
| | Tear tenacity (weft direction) | N | 245 | 267 | 162 | 186 |
| | Number of warp yarns | yarns/2.54 cm | 59 | 59 | 59 | 59 |
| | Number weft yarns | yarns/2.54 cm | 59 | 59 | 59 | 59 |
| | Cover factor | - | 2213 | 2150 | 2314 | 2262 |
| | Bending resistance (warp direction) | mm | 54 | 81 | 62 | 84 |
| | Bending resistance (weft direction) | mm | 53 | 78 | 61 | 82 |
| | Air permeability | $cc/cm^2/sec$ | 18 | 25 | 43 | 51 |
| | Accommodation capability | - | 80 | 100 | 89 | 108 |
| | Impact absorbability | - | 75 | 100 | 88 | 109 |
| | Inflatability | - | 100 | 98 | 65 | 74 |

(Working Example 2)

A polyamide 56 resin was obtained by heat polymerization as described in Working Example 1, except that the temperature in the polymerization reactor in the concentration step was 145°C. The obtained polyamide 56 resin was 2.75 in the relative viscosity in sulfuric acid, 0.41 in $[NH_2]/([NH_2] + [COOH])$ as an indicator of the balance between the amino end group concentration and the carboxyl end group concentration, 35 g/pellet in pellet size and 8% in the CV% of pellet sizes.

The polyamide 56 resin was subjected to solid phase polymerization as described in Working Example 1, and polyamide 56 filaments were produced as described in Working Example 1. Working Example 2 was excellent in yarn formability, and the obtained filaments had 0 fuzz piece/100, 000 m, having good surface appearance.

Further, the filaments of Working Example 2 were used to produce an airbag fabric as described in Working Example 1, except that the number of warp yarns and the number of weft yarns of the water jet loom were adjusted to ensure that the airbag fabric obtained after scouring, drying and final setting could have 59 yarns/2.54 cm each as warp yarns and weft yarns. The number of warp yarns and the number of weft yarns of the adjusted water jet loom were 52 yarns/2.54 cm each. The results of Working Example 2 are shown in Table 2.

(Working Example 3)

A polyamide 56 resin was obtained by heat polymerization as described in Working Example 1, except that while the aqueous solution containing 57 wt% of the equimolar salt of 1,5-pentamethylenediamine and adipic acid prepared in Preparation Example 5 was adjusted to a water temperature of 50°C, 1,5-pentamethylenediamine and water were added to the aqueous solution, to adjust the ratio of the number of moles of 1,5-pentamethylenediamine to the number of moles of adipic acid (number of moles of 1,5-pentamethylenediamine/number of moles of adipic acid) in the aqueous solution to 1.007 and the raw monomer concentration of the aqueous solution to 57 wt%.

The obtained polyamide 56 resin was 2.75 in the relative viscosity in sulfuric acid, 0.33 in $[NH_2]/([NH_2] + [COOH])$ as an indicator of the balance between the amino end group concentration and the carboxyl end group concentration, 35 g/pellet in pellet size and 8% in the CV% of pellet sizes.

The polyamide 56 resin was subject to solid phase polymerization as described in Working Example 1, and polyamide 56 filaments were produced as described in Working Example 1. Working Example 3 was excellent in yarn formability, and the obtained filaments had zero piece/100,000 m, having good surface appearance.

Further, the filaments of Working Example 3 were used to produce an airbag fabric as described in Working Example 1, except that the number of warp yarns and the number of weft yarns of the water jet loom were adjusted to ensure that the airbag fabric obtained after scouring, drying and final setting could have 59 yarns/2.54 cm each as warp yarns and weft yarns. The number of warp yarns and the number of weft yarns of the adjusted water jet loom were 52 yarns/2.54 cm each. The results of Working Example 3 are shown in Table 2.

(Working Example 4)

It was attempted to produce polyamide 56 filaments as described in Working Example 3, except that the heating rate in the solid phase polymerization was 19°C/hr, but since yarn swaying occurred on the fifth roll in the spinning, stretching and heat treatment process, to destabilize the yarn running, the temperature of the fifth roll was changed to 225°C. As a result, stable yarn formation became possible, and the yarn formability was good. Further, the obtained filaments had 0 fuzz piece/100, 000 m, having good surface appearance.

Furthermore, the filaments of Working Example 4 were used to produce an airbag fabric as described in Working Example 1, except that the number of warp yarns and the number of weft yarns of the water jet loom were adjusted to ensure that the airbag fabric obtained after scouring, drying and final setting could have 59 yarns/2.54 cm each as warp yarns and weft yarns. The number of warp yarns and the number of weft yarns of the adjusted water jet loom were 51 yarns/2.54 cm each. The results of Working Example 4 are shown in Table 2.

(Working Examples 5 and 6)

A polyamide 56 resin was produced as described in Working Example 3, except that the polyamide 56 resin obtained by heat polymerization in Working Example 3 was cut into pellets of 68 mg/pellet in pellet size and 8% in the CV% of pellet sizes in Working Example 5 or 8 mg/pellet in pellet size and 8% in the CV% of pellet sizes in Working Example 6, to be provided for solid phase polymerization.

Further, it was attempted to use the polyamide 56 resin for producing filaments as described in Working Example 3, but yarn swaying occurred on the fifth roll in the spinning, stretching and heat treatment process, to destabilize the yarn running in both Working Examples 5 and 6. Therefore, the temperature of the fifth roll was changed to 225°C. As a result, the film formability became good. Further, the filaments obtained in Working Example 5 had 0.2 fuzz piece/100, 000 m, and the filaments obtained in Working Example 6 had 0 fuzz piece/100,000 m, respectively having good surface appearance.

Further, the filaments of Working Examples 5 and 6 were used to produce airbag fabrics as described in Working Example 1, except that the number of warp yarns and the number of weft yarns of the water jet loom were adjusted to ensure that the airbag fabrics obtained after scouring, drying and final setting could have 59 yarns/2.54 cm each as warp yarns and weft yarns. The number of warp yarns and the number of weft yarns of the adjusted water jet loom was 51 yarns/2.54 cm each in both Working Examples 5 and 6. The results of Working Examples 5 and 6 are shown in Table 2.

(Comparative Example 3)

The aqueous solution containing 50 wt% of the equimolar salt of 1,5-pentamethylenediamine and adipic acid obtained in Preparation Example 3 was supplied into a heating medium-heated polymerization reactor with its atmosphere substituted by nitrogen beforehand, and the heating medium temperature was set at 280°C, to start heating. The pressure in the polymerization reactor was adjusted to 1.47 MPa, and the reaction mixture was heated to 270°C. Subsequently the pressure in the reactor was gradually released, and the pressure (gauge pressure) in the polymerization reactor was further reduced to -13.3 kPa, then at a predetermined stirring power, the polymerization reaction being stopped. The discharged strand was cooled with water and cut, to obtain a polyamide 56 resin with a relative viscosity in sulfuric acid of 2.75.

The obtained polyamide 56 resin was 0.18 in $[NH_2]/([NH_2] + [COOH])$ as an indicator of the balance between the amino end group concentration and the carboxyl end group concentration, 35 g/pellet in pellet size and 8% in the CV% of pellet sizes.

The obtained polyamide 56 resin was subjected to solid phase polymerization as described in Working Example 1, and subsequently it was attempted to produce polyamide 56 filaments as described in Working Example 1. However, since yarn breaking often occurred on the third and subsequent rolls, sampling could not be made. Therefore the speeds of the third and subsequent rolls were changed, while the temperature of the fifth roll was lowered to stabilize the yarn running, thereby allowing continuous sampling of filaments. The winding speed in this case was corrected to achieve a fiber tension of 0.08 cN/dtex between the sixth roll and the winder, and the discharged amount was corrected to achieve 350 dtex as the overall fineness of the obtained filaments. The roll speeds of Comparative Example 3 are shown below, and the results are shown in Table 2.

- First roll speed: 450 m/min
- Second roll speed: 495 m/min
- Third roll speed: 1469 m/min
- Fourth roll speed: 1689 m/min
- Fifth roll speed: 1892 m/min
- Sixth roll speed: 1740 m/min
- Winding speed: 1749 m/min
- Stretching ratio: 3.89 times (stretching ratio in a temperature range from 100 to 245°C: 1.29 times)
- Fifth roll temperature: 200°C

The film formability in Comparative Example 3 was poor, and the obtained filaments had fuzz pieces as many as 24 pieces/100, 000 m, having poor surface appearance.

Further, the polyamide 56 filaments of Comparative Example 3 were used to produce an airbag fabric as described in Working Example 1, except that the number of warp yarns and the number of weft yarns of the water jet loom were adjusted to ensure that the airbag fabric obtained after scouring, drying and final setting could have 59 yarns/2.54 cm each as warp yarns and weft yarns. The number of warp yarns and the number of weft yarns of the adjusted water jet loom were 49 yarns/2.54 cm each. Since the filaments of Comparative Example 3 had many fuzz pieces, the capability of smoothly undergoing the weaving process was poor. The results of Comparative Example 3 are shown in Table 2.

As can be seen from the comparison between Working Examples 1 to 6 and Comparative Example 3, if a preferred heat polymerization method is employed, a polyamide 56 resin with $[NH_2]/([NH_2] + [COOH])$ kept in a preferred range can be produced, and only if the polyamide 56 resin is further polymerized by a preferred solid phase polymerization method, to obtain a further polymerized polyamide 56 resin and this polyamide 56 resin is used for forming filaments, then the polyamide 56 filaments obtained can have a small Mw/Mn ratio.

Further, the polyamide 56 filaments small in Mw/Mn could have higher strength and low shrinkage rate achieved by boiling water treatment and also could have high strength after boiling water treatment. The reason is considered to be that if Mw/Mn is smaller, the polyamide 56 molecular chains can be uniformly and sufficiently oriented in the stretching process, while efficient crystal formation occurs in the heat treatment on the final roll. It can also be seen that filaments smaller in Mw/Mn provide filaments with higher strength also after boiling water treatment, and that since the component yarns of the airbag fabric have also high strength, the airbag fabric becomes high in tensile strength and tear tenacity and excellent in inflatability.

Further, the airbag fabrics of Working Examples 1 to 6 have sufficient mechanical properties and are lower in bending resistance and more excellent in accommodation capability and impact absorbability than the airbag fabric of Reference Example 1.

[Table 2]

| | Item | Unit | Working Example 1 | Working Example 2 | Working Example 3 | Working Example 4 | Working Example 5 | Working Example 6 | Comparative Example 3 |
|---|---|---|---|---|---|---|---|---|---|
| Filaments | Polymer used | – | N56 | N56 | N56 | N56 | N56 | N56 | N56 |
| | Relative viscosity in sulfuric acid | – | 3.82 | 3.84 | 3.83 | 3.80 | 3.80 | 3.80 | 3.72 |
| | Mw/Mn | – | 2.21 | 2.56 | 2.73 | 2.88 | 2.90 | 2.91 | 3.24 |
| | Overall fineness | dtex | 350 | 350 | 350 | 350 | 350 | 350 | 350 |
| | Number of filaments | – | 136 | 136 | 136 | 136 | 136 | 136 | 136 |
| | Single fiber fineness | dtex | 2.6 | 2.6 | 2.6 | 2.6 | 2.6 | 2.6 | 2.6 |
| | Strength | cN/dtex | 9.0 | 8.8 | 8.5 | 8.2 | 8.2 | 8.1 | 6.9 |
| | Elongation rate | % | 23 | 22 | 22 | 22 | 22 | 22 | 27 |
| | Shrinkage rate after having been subjected to boiling water treatment at 98°C for 30 minutes | % | 12.0 | 13.2 | 14.9 | 16.4 | 16.8 | 17.3 | 21.3 |
| | Strength after the boiling water treatment | cN/dtex | 7.9 | 7.6 | 7.2 | 6.9 | 6.8 | 6.7 | 4.6 |
| | Stress at 10% elongation after the boiling water treatment | cN/dtex | 0.8 | 0.8 | 0.8 | 0.8 | 0.8 | 0.8 | 0.8 |
| | Number of yarn breaking times | times/100 kg | 0 | 0 | 0 | 1 | 1 | 1 | 38 |
| Airbag fabric | Shrinkage rate of fabric by boiling water treatment (warp direction) | % | 0.3 | 0.3 | 0.3 | 0.3 | 0.3 | 0.3 | 0.3 |
| | Shrinkage rate of fabric by boiling water treatment (weft direction) | % | 0.3 | 0.3 | 0.3 | 0.3 | 0.3 | 0.3 | 0.3 |
| | Overall fineness of each component yarn (warp) | dtex | 391 | 395 | 401 | 406 | 408 | 409 | 423 |
| | Overall fineness of each component yarn (weft) | dtex | 391 | 395 | 401 | 406 | 408 | 409 | 423 |
| | Single fiber fineness in each component yarn (warp) | dtex | 2.9 | 2.9 | 2.9 | 3.0 | 3.0 | 3.0 | 3.1 |
| | Single fiber fineness in each component yarn (weft) | dtex | 2.9 | 2.9 | 2.9 | 3.0 | 3.0 | 3.0 | 3.1 |
| | Strength of component yarns (warp) | cN/dtex | 8.0 | 7.7 | 7.2 | 6.9 | 6.9 | 6.7 | 4.6 |
| | Strength of component yarns (weft) | cN/dtex | 8.0 | 7.6 | 7.3 | 6.9 | 6.9 | 6.7 | 4.7 |
| | Stress at 10% elongation of component yarns (warp) | cN/dtex | 1.0 | 1.0 | 1.0 | 1.0 | 1.0 | 1.0 | 1.0 |
| | Stress at 10% elongation of component yarns(weft) | cN/dtex | 1.0 | 1.0 | 1.0 | 1.0 | 1.0 | 1.0 | 1.0 |
| | Tensile strength (warp direction) | N/cm | 693 | 685 | 654 | 634 | 633 | 625 | 456 |
| | Tensile strength (weft direction) | N/cm | 701 | 688 | 658 | 633 | 633 | 623 | 461 |
| | Tear tenacity (warp direction) | N | 253 | 241 | 243 | 235 | 235 | 235 | 175 |
| | Tear tenacity (weft direction) | N | 245 | 245 | 237 | 231 | 231 | 231 | 168 |
| | Number of warp yarns | yarns/2.54 cm | 59 | 59 | 59 | 59 | 59 | 59 | 59 |
| | Number weft yarns | yarns/2.54 cm | 59 | 59 | 59 | 59 | 59 | 59 | 59 |
| | Cover factor | – | 2213 | 2225 | 2242 | 2256 | 2260 | 2265 | 2303 |
| | Bending resistance (warp direction) | mm | 54 | 55 | 56 | 57 | 56 | 57 | 61 |
| | Bending resistance (weft direction) | mm | 53 | 55 | 55 | 56 | 57 | 57 | 60 |
| | Air permeability | $cc/cm^2/sec$ | 18 | 23 | 21 | 20 | 21 | 21 | 45 |
| | Accommodation capability | – | 80 | 82 | 83 | 86 | 86 | 86 | 88 |
| | Impact absorbability | – | 75 | 77 | 80 | 84 | 84 | 84 | 87 |
| | Inflatability | – | 100 | 100 | 100 | 99 | 99 | 99 | 67 |

(Working Example 7)

When polyamide 56 filaments were produced as described in Working Example 1, at the time point when the temperature in the polymerization reactor reached 160°C in the solid phase polymerization, the polyamide 56 resin was taken out. The polyamide 56 resin was used to produce polyamide 65 filaments as described in Working Example 1, except that the speeds of the first and second rolls were adjusted to ensure that the obtained filaments could have an elongation rate of 23%. In this case, the speed of the second roll was 1.02 times the speed of the first roll. The yarn formability was excellent, and the filaments were as few fuzz pieces as 0.2 piece/100,000 m, having good surface appearance.

The filaments of Working Example 7 were used to produce an airbag fabric as described in Working Example 1, except that the number of warp yarns and the number of weft yarns of the water jet loom were adjusted to ensure that the airbag fabric obtained after scouring, drying and final setting could have 59 yarns/2.54 cm each as warp yarns and weft yarns. The number of warp yarns and the number of weft yarns of the adjusted water jet loom was 53 yarns/ 2.54 cm each. The capability of smoothly undergoing the weaving process was good. The results of Working Example 7 are shown in Table 3.

(Comparative Example 4)

In Working Example 1, the polyamide 56 resin obtained by heat polymerization was not subjected to solid phase polymerization, and vacuum-dried by a vacuum dryer at a temperature of 90°C in the dryer, and the dried polymer was dried till the water content became 300 rpm.

Further, said polymer was used to produce polyamide 56 filaments as described in Working Example 1. The yarn formability of Comparative Example 4 was inferior to that of Working Example 1, but did not have any problem practically. The number of fuzz pieces of the filaments was 0.6 pieces/100,000 m, an acceptable level.

Further, the polyamide 56 filaments of Comparative Example 4 were used to produce an airbag fabric as described in Working Example 1, except that the number of warp yarns and the number of weft yarns of the water jet loom were adjusted to ensure that the airbag fabric obtained after scouring, drying and final setting could have 59 yarns/2.54 cm each as warp yarns and weft yarns. The number of warp yarns and the number of weft yarns of the adjusted water jet loom were 53 yarns/2.54 cm each. The filaments of Comparative Example 4 had low strength and caused yarn breaking in the weaving process, being low in the capability of smoothly undergoing the process. The results of Comparative Example 4 are shown in Table 3.

As can be seen from the comparison between Working Examples 1 and 7 and Comparative Example 4, the filaments of this invention have high strength, since the relative viscosity in sulfuric acid is 3 or higher. The reason is considered to be that a high relative viscosity in sulfuric acid gives an effect that the interactions between the molecular chains increase to cause the molecular chains to be uniformly and highly oriented in the spinning and stretching process, and that crystallization can be achieved without allowing the final heated roll to relax the orientation.

Further, the following can be seen. Since the filaments of Working Examples 1 and 7 have high strength, they are excellent in the capability of smoothly undergoing the weaving process, and the filaments have sufficient strength still after boiling water treatment. Therefore the airbag fabric heat-shrunken in the production process is excellent in mechanical properties and excellent also in flexibility and impact absorbability. Since the filaments of Comparative Example 4 have low strength, they are poor in the capability of smoothly undergoing the weaving process, and also have low strength after boiling water treatment. Therefore, the airbag fabric is low in the strength of the component yarns thereof and insufficient in mechanical properties, hence being also inferior in inflatability.

[Table 3]

| | Item | Unit | Working Example 1 | Reference Example 7 | Comparative Example 4 |
|---|---|---|---|---|---|
| Filaments | Polymer used | — | N56 | N56 | N56 |
| | Relative viscosity in sulfuric acid | — | 3.82 | 3.30 | 2.71 |
| | Mw/Mn | — | 2.21 | 2.19 | 2.17 |
| | Overall fineness | dtex | 350 | 350 | 350 |
| | Number of filaments | — | 136 | 136 | 136 |
| | Single fiber fineness | dtex | 2.6 | 2.6 | 2.6 |
| | Strength | cN/dtex | 9.0 | 8.6 | 5.4 |
| | Elongation rate | % | 23 | 23 | 27 |
| | Shrinkage rate after having been subjected to boiling water treatment at 98°C for 30 minutes | % | 12.0 | 11.5 | 12.0 |
| | Strength after the boiling water treatment | cN/dtex | 7.9 | 7.6 | 4.8 |
| | Stress at 10% elongation after the boiling water treatment | cN/dtex | 0.8 | 0.8 | 0.7 |
| | Number of yarn breaking times | times/100 kg | 0 | 1 | 1 |
| Airbag fabric | Shrinkage rate of fabric by boiling water treatment (warp direction) | % | 0.3 | 0.3 | 0.3 |
| | Shrinkage rate of fabric by boiling water treatment (weft direction) | % | 0.3 | 0.3 | 0.3 |
| | Overall fineness of each component yarn (warp) | dtex | 391 | 389 | 391 |
| | Overall fineness of each component yarn (weft) | dtex | 391 | 389 | 391 |
| | Single fiber fineness in each component yarn (warp) | dtex | 2.9 | 2.9 | 2.9 |
| | Single fiber fineness in each component yarn (weft) | dtex | 2.9 | 2.9 | 2.9 |
| | Strength of component yarns (warp) | cN/dtex | 8.0 | 7.6 | 4.8 |
| | Strength of component yarns (weft) | cN/dtex | 8.0 | 7.6 | 4.8 |
| | Stress at 10% elongation of component yarns (warp) | cN/dtex | 1.0 | 1.0 | 0.9 |
| | Stress at 10% elongation of component yarns(weft) | cN/dtex | 1.0 | 1.1 | 0.9 |
| | Tensile strength (warp direction) | N/cm | 693 | 652 | 401 |
| | Tensile strength (weft direction) | N/cm | 701 | 661 | 411 |
| | Tear tenacity (warp direction) | N | 253 | 231 | 161 |
| | Tear tenacity (weft direction) | N | 245 | 239 | 165 |
| | Number of warp yarns | yarns/2.54 cm | 59 | 59 | 59 |
| | Number weft yarns | yarns/2.54 cm | 59 | 59 | 59 |
| | Cover factor | — | 2213 | 2208 | 2213 |
| | Bending resistance (warp direction) | mm | 54 | 56 | 54 |
| | Bending resistance (weft direction) | mm | 53 | 57 | 55 |
| | Air permeability | $cc/cm^2/sec$ | 18 | 22 | 44 |
| | Accommodation capability | — | 80 | 83 | 82 |
| | Impact absorbability | — | 75 | 78 | 77 |
| | Inflatability | — | 100 | 100 | 61 |

(Working Examples 8 and 9 and Comparative Example 5)

Polyamide 56 filaments of Working Examples 8 and 9 and Comparative Example 5 were produced as described in Working Example 1, except that the temperature of the fifth roll was changed. The temperatures of the fifth rolls of working Examples 8 and 9 and Comparative Example 5 are shown below. In all the examples, yarn formability was good, and the number of fuzz pieces was 0.2 piece/100,000 m, a level without any problem.

Working Example 8: 235°C

Working Example 9: 218°C

Comparative Example 5: 200°C

Further, the filaments of Working Examples 8 and 9 and Comparative Example 5 were used to produce airbag fabrics as described in Working Example 1, except that the number of warp yarns and the number of weft yarns of the water jet loom were adjusted to ensure that the airbag fabrics obtained after scouring, drying and final setting could have 59 yarns/2.54 cm each as warp yarns and weft yarns. The number of warp yarns and the number of weft yarns of the adjusted water jet loom were 55 yarns/2.54 cm each in Working Example 8, 52 yarns/2.54 cm each in Working Example 9, and 49 yarns/2.54 cm each in Comparative Example 5. In Working Examples 8 and 9, the capability of smoothly undergoing the weaving process was good. The results of Working Examples 8 and 9 are shown in Table 4.

As can be seen from the comparison between Working Examples 1, 8 and 9 and Comparative Example 5, if the polyamide 56 filaments are 20% or lower in the shrinkage rate by boiling water treatment, the filaments have high strength still after boiling water treatment. The reason is considered to be that since the amorphous chains existing in the filaments were constrained by crystal phases, the orientation degree of the amorphous chains could be kept high still after boiling water treatment. The airbag fabrics obtained from the filaments of Working Examples 1, 8 and 9 were high in the strength of the component yarns thereof and sufficient in mechanical properties, hence excellent in inflatability. Furthermore, since the component yarns were low in the stress at 10% elongation, the airbag fabrics were excellent also in flexibility and impact absorbability.

Since the filaments of Comparative Example 4 were high in the shrinkage rate by boiling water treatment, they had low strength still after boiling water treatment, and the heat-treated airbag fabric was also low in the strength of the component yarns thereof, and therefore insufficient in mechanical properties and inferior in inflatability.

[Table 4]

| | Item | Unit | Working Example 1 | Working Example 8 | Working Example 9 | Comparative Example 5 |
|---|---|---|---|---|---|---|
| Filaments | Polymer used | — | N56 | N56 | N56 | N56 |
| | Relative viscosity in sulfuric acid | — | 3.82 | 3.82 | 3.82 | 3.82 |
| | Mw/Mn | — | 2.21 | 2.21 | 2.21 | 2.21 |
| | Overall fineness | dtex | 350 | 350 | 350 | 350 |
| | Number of filaments | — | 136 | 136 | 136 | 136 |
| | Single fiber fineness | dtex | 2.6 | 2.6 | 2.6 | 2.6 |
| | Strength | cN/dtex | 9.0 | 9.1 | 8.7 | 7.2 |
| | Elongation rate | % | 23 | 22 | 24 | 27 |
| | Shrinkage rate after having been subjected to boiling water treatment at 98°C for 30 minutes | % | 12.0 | 9.0 | 14.7 | 22 |
| | Strength after the boiling water treatment | cN/dtex | 7.9 | 8.3 | 7.3 | 4.9 |
| | Stress at 10% elongation after the boiling water treatment | cN/dtex | 0.8 | 0.9 | 0.8 | 0.7 |
| | Number of yarn breaking times | times/100 kg | 0 | 1 | 1 | 1 |
| Airbag fabric | Shrinkage rate of fabric by boiling water treatment (warp direction) | % | 0.3 | 0.3 | 0.3 | 0.3 |
| | Shrinkage rate of fabric by boiling water treatment (weft direction) | % | 0.3 | 0.3 | 0.3 | 0.3 |
| | Overall fineness of each component yarn (warp) | dtex | 391 | 380 | 400 | 426 |
| | Overall fineness of each component yarn (weft) | dtex | 391 | 380 | 400 | 426 |
| | Single fiber fineness in each component yarn (warp) | dtex | 2.9 | 2.8 | 2.9 | 3.1 |
| | Single fiber fineness in each component yarn (weft) | dtex | 2.9 | 2.8 | 2.9 | 3.1 |
| | Strength of component yarns (warp) | cN/dtex | 8.0 | 8.3 | 7.4 | 4.8 |
| | Strength of component yarns (weft) | cN/dtex | 8.0 | 8.3 | 7.5 | 4.9 |
| | Stress at 10% elongation of component yarns (warp) | cN/dtex | 1.0 | 1.0 | 1.0 | 1.0 |
| | Stress at 10% elongation of component yarns (weft) | cN/dtex | 1.0 | 1.0 | 1.0 | 1.0 |
| | Tensile strength (warp direction) | N/cm | 693 | 693 | 654 | 456 |
| | Tensile strength (weft direction) | N/cm | 701 | 698 | 662 | 467 |
| | Tear tenacity (warp direction) | N | 253 | 235 | 221 | 167 |
| | Tear tenacity (weft direction) | N | 245 | 231 | 228 | 171 |
| | Number of warp yarns | yarns/2.54 cm | 59 | 59 | 59 | 59 |
| | Number weft yarns | yarns/2.54 cm | 59 | 59 | 59 | 59 |
| | Cover factor | — | 2213 | 2183 | 2240 | 2310 |
| | Bending resistance (warp direction) | mm | 54 | 52 | 55 | 61 |
| | Bending resistance (weft direction) | mm | 53 | 51 | 54 | 62 |
| | Air permeability | $cc/cm^2/sec$ | 18 | 21 | 22 | 18 |
| | Accommodation capability | — | 80 | 79 | 83 | 90 |
| | Impact absorbability | — | 75 | 75 | 81 | 88 |
| | Inflatability | — | 100 | 100 | 100 | 80 |

(Working Examples 10 and 11)

The woven fabric having 53 yarns/2.54 cm each as warp yarns and weft yarns and a cover factor of 1881 obtained in Working Example 1 was scoured, dried and finally set to obtain the airbag fabrics of Working Examples 10 and 11. In this case, the woven fabric of Working Example 10 was put into hot water containing 0.5 g/L of sodium dodecylbenzenesulfonate and 0.5 g/L of soda ash, to be scoured in a relaxed state, for being heat-shrunken (hot water temperature 70°C, treatment time 1 minute), and subsequently dried in a relaxed state at 130°C for 1 minute, and finally set at 180°C for 1 minute while being restricted in the shrinkage in the warp and weft directions of the woven fabric. The airbag fabric of Working Example 10 was 58 yarns/2.54 cm each as warp yarns and weft yarns and was 1.5% in the shrinkage rates (in warp and weft directions) of the fabric subjected to boiling water treatment at 98°C for 30 minutes.

In Working Example 11, scouring treatment was performed at a hot water temperature of 60°C for 1 minute, and the drying treatment was performed in a relaxed state at 130°C for 1 minute. The woven fabric was finally set at 150°C for 1 minute while being restricted in the shrinkage in the warp and weft directions thereof. The airbag fabric of Working Example 11 was 57 yarns/2.54 cm each as warp yarns and weft yarns and was 2.7% in the shrinkage rates (in the warp and weft directions) of the fabric subjected to boiling water treatment at 98°C for 30 minutes. The results of Working Examples 10 and 11 are shown in Table 5.

As can be seen from the comparison among Working Examples 1, 10 and 11, if the shrinkage rate of the airbag fabric of this invention by boiling water treatment is lower, the component yarns are lower in the stress at 10% elongation, and the airbag fabric is more flexible and more excellent in impact absorbability. The reason is considered to be that much water permeated the filaments while the component yarns constituting the fabric were treated with wet heat in the production process, to give an effect of adequately weakening the intermolecular hydrogen bond forces.

[Table 5]

| | Item | Unit | Working Example 1 | Working Example 10 | Working Example 11 |
|---|---|---|---|---|---|
| Filaments | Polymer used | – | N56 | N56 | N56 |
| | Relative viscosity in sulfuric acid | – | 3.82 | 3.82 | 3.82 |
| | Mw/Mn | – | 2.21 | 2.21 | 2.21 |
| | Overall fineness | dtex | 350 | 350 | 350 |
| | Number of filaments | – | 136 | 136 | 136 |
| | Single fiber fineness | dtex | 2.6 | 2.6 | 2.6 |
| | Strength | cN/dtex | 9.0 | 9.0 | 9.0 |
| | Elongation rate | % | 23 | 23 | 23 |
| | Shrinkage rate after having been subjected to boiling water treatment at 98°C for 30 minutes | % | 12.0 | 12.0 | 12.0 |
| | Strength after the boiling water treatment | cN/dtex | 7.9 | 7.9 | 7.9 |
| | Stress at 10% elongation after the boiling water treatment | cN/dtex | 0.8 | 0.8 | 0.8 |
| | Number of yarn breaking times | times/100 kg | 0 | 0 | 0 |
| Airbag fabric | Shrinkage rate of fabric by boiling water treatment (warp direction) | % | 0.3 | 1.5 | 2.7 |
| | Shrinkage rate of fabric by boiling water treatment (weft direction) | % | 0.3 | 1.5 | 2.7 |
| | Overall fineness of each component yarn (warp) | dtex | 391 | 386 | 382 |
| | Overall fineness of each component yarn (weft) | dtex | 391 | 386 | 382 |
| | Single fiber fineness in each component yarn (warp) | dtex | 2.9 | 2.8 | 2.8 |
| | Single fiber fineness in each component yarn (weft) | dtex | 2.9 | 2.8 | 2.8 |
| | Strength of component yarns (warp) | cN/dtex | 8.0 | 8.1 | 8.2 |
| | Strength of component yarns (weft) | cN/dtex | 8.0 | 8.1 | 8.2 |
| | Stress at 10% elongation of component yarns (warp) | cN/dtex | 1.0 | 1.4 | 1.9 |
| | Stress at 10% elongation of component yarns (weft) | cN/dtex | 1.0 | 1.4 | 1.9 |
| | Tensile strength (warp direction) | N/cm | 693 | 692 | 687 |
| | Tensile strength (weft direction) | N/cm | 701 | 690 | 690 |
| | Tear tenacity (warp direction) | N | 253 | 245 | 255 |
| | Tear tenacity (weft direction) | N | 245 | 241 | 248 |
| | Number of warp yarns | yarns/2.54 cm | 59 | 58 | 57 |
| | Number weft yarns | yarns/2.54 cm | 59 | 58 | 57 |
| | Cover factor | – | 2213 | 2163 | 2113 |
| | Bending resistance (warp direction) | mm | 54 | 62 | 69 |
| | Bending resistance (weft direction) | mm | 53 | 61 | 68 |
| | Air permeability | $cc/cm^2/sec$ | 18 | 23 | 25 |
| | Accommodation capability | – | 80 | 86 | 97 |
| | Impact absorbability | – | 75 | 92 | 99 |
| | Inflatability | – | 100 | 100 | 100 |

(Working Examples 12 and 13 and Comparative Example 6)

Polyamide 56 filaments of Working Examples 12 and 13 and Comparative Example 6 were produced as described in Working Example 1, except that the spinnerette used was changed. Further, the airbag fabrics of Working Examples 12 and 13 and Comparative Example 6 were produced as described in Working Example 1. The spinnerettes used in Working Examples 12 and 13 and Comparative Example 6 are shown below, and the results of Working Examples 12 and 13 and Comparative Example 6 are shown in Table 6.

- Spinnerette of Working Example 12: 256 holes, each with a diameter of 0.15 mm and a hole depth of 0.3 mm
- Spinnerette of Working Example 13: 80 holes, each with a hole diameter of 0.23 mm and a hole depth of 0.45 mm
- Spinnerette of Comparative Example 6: 48 holes, each with a hole diameter of 0.3 mm and a hole depth of 0.6 mm

As can be seen from the comparison between Working Examples 1, 12 and 13 and Comparative Example 6, if the polyamide 56 filaments have a single fiber fineness kept in the range of this invention, an airbag fabric excellent in mechanical properties, flexibility and impact absorbability in good balance can be obtained. The fabric of Comparative Example 6 had high strength but was insufficient in flexibility compared with the fabrics of working examples, being inferior in accommodation capability and impact absorbability.

[Table 6]

| | Item | Unit | Working Example 1 | Working Example 12 | Working Example 13 | Comparative Example 6 |
|---|---|---|---|---|---|---|
| Filaments | Polymer used | – | N56 | N56 | N56 | N56 |
| | Relative viscosity in sulfuric acid | – | 3.82 | 3.82 | 3.82 | 3.87 |
| | Mw/Mn | – | 2.21 | 2.25 | 2.23 | 2.23 |
| | Overall fineness | dtex | 350 | 350 | 350 | 350 |
| | Number of filaments | – | 136 | 256 | 80 | 48 |
| | Single fiber fineness | dtex | 2.6 | 1.4 | 4.4 | 7.3 |
| | Strength | cN/dtex | 9.0 | 8.7 | 9.0 | 9.1 |
| | Elongation rate | % | 23 | 22 | 22 | 22 |
| | Shrinkage rate after having been subjected to boiling water treatment at 98°C for 30 minutes | % | 12.0 | 12.2 | 12.0 | 12.3 |
| | Strength after the boiling water treatment | cN/dtex | 7.9 | 7.6 | 7.9 | 8.0 |
| | Stress at 10% elongation after the boiling water treatment | cN/dtex | 0.8 | 0.8 | 0.8 | 0.8 |
| | Number of yarn breaking times | times/100 kg | 0 | 0 | 0 | 1 |
| Airbag fabric | Shrinkage rate of fabric by boiling water treatment (warp direction) | % | 0.3 | 0.3 | 0.3 | 0.3 |
| | Shrinkage rate of fabric by boiling water treatment (weft direction) | % | 0.3 | 0.3 | 0.3 | 0.3 |
| | Overall fineness of each component yarn (warp) | dtex | 391 | 392 | 391 | 392 |
| | Overall fineness of each component yarn (weft) | dtex | 391 | 392 | 391 | 392 |
| | Single fiber fineness in each component yarn (warp) | dtex | 2.9 | 1.5 | 4.9 | 8.2 |
| | Single fiber fineness in each component yarn (weft) | dtex | 2.9 | 1.5 | 4.9 | 8.2 |
| | Strength of component yarns (warp) | cN/dtex | 8.0 | 7.7 | 8.0 | 8.0 |
| | Strength of component yarns (weft) | cN/dtex | 8.0 | 7.6 | 8.0 | 8.0 |
| | Stress at 10% elongation of component yarns (warp) | cN/dtex | 1.0 | 1.0 | 1.0 | 1.1 |
| | Stress at 10% elongation of component yarns(weft) | cN/dtex | 1.0 | 1.0 | 1.0 | 1.1 |
| | Tensile strength (warp direction) | N/cm | 693 | 665 | 690 | 685 |
| | Tensile strength (weft direction) | N/cm | 701 | 657 | 689 | 698 |
| | Tear tenacity (warp direction) | N | 253 | 221 | 253 | 249 |
| | Tear tenacity (weft direction) | N | 245 | 233 | 245 | 254 |
| | Number of warp yarns | yarns/2.54 cm | 59 | 59 | 59 | 59 |
| | Number weft yarns | yarns/2.54 cm | 59 | 59 | 59 | 59 |
| | Cover factor | – | 2213 | 2215 | 2213 | 2216 |
| | Bending resistance (warp direction) | mm | 54 | 42 | 68 | 93 |
| | Bending resistance (weft direction) | mm | 53 | 43 | 69 | 94 |
| | Air permeability | $cc/cm^2/sec$ | 18 | 16 | 20 | 33 |
| | Accommodation capability | – | 80 | 76 | 95 | 114 |
| | Impact absorbability | – | 75 | 73 | 94 | 119 |
| | Inflatability | – | 100 | 100 | 100 | 95 |

(Working Examples 14 and 15)

Polyamide 56 filaments of Working Examples 14 and 15 were produced as described in Working Example 1, except that the overall fineness of the obtained filaments was changed. In this case, the overall fineness of filaments was changed by adjusting the discharged amount. Further, the number of holes of the spinnerette was changed to make the single fiber fineness of filaments equal to that of Working Example 1. The overall fineness values and the numbers of holes of spinnerettes used in Working Examples 14 and 15 are shown below.

- Overall fineness of Working Example 14: 170 dtex
- Number of holes of spinnerette of Working Example 14: 65

- Overall fineness of Working Example 15: 605 dtex
- Number of holes of spinnerette of Working Example 15: 236

The filaments of Working Examples 14 and 15 were used to produce airbag fabrics as described in Working Example 1, except that the number of warp yarns and the number of weft yarns of the water jet loom were adjusted to ensure that the airbag fabric obtained after scouring, drying and final setting could have 85 yarns/2.54 cm each as warp yarns and weft yarns in Working Example 14, and 45 yarns/2.54 cm each in Working Example 15. The number of warp yarns and the number of weft yarns of the adjusted water jet loom were 77 yanrs/2.54 cm each in Working Example 14, and 41 yarns/2. 54 cm each. Further, the thickness of the fabric of Working Example 14 was 0.18 mm, and the thickness of the fabric of Working Example 15 was 0.43 mm. The results of Working Examples 14 and 15 are shown in Table 7.

As can be seen from the comparison between Working Examples 1 and Working Examples 14 and 15, if the overall fineness of polyamide 56 filaments is in the range of this invention, an airbag fabric excellent in mechanical properties, flexibility and impact absorbability in good balance can be obtained. The airbag fabric of Working Example 14 was small in thickness and good in flexibility and accommodation capability, having properties suitable for use as curtain airbags, etc. On the other hand, the airbag fabric of Working Example 15 was large in thickness and insufficient in flexibility, being inferior in accommodation capability compared with the airbag fabrics of other working examples, but applicable as knee airbags, etc.

[Table 7]

| | Item | Unit | Working Example 1 | Working Example 14 | Working Example 15 |
|---|---|---|---|---|---|
| Filaments | Polymer used | – | N56 | N56 | N56 |
| | Relative viscosity in sulfuric acid | – | 3.82 | 3.87 | 3.87 |
| | Mw/Mn | – | 2.21 | 2.23 | 2.23 |
| | Overall fineness | dtex | 350 | 170 | 605 |
| | Number of filaments | – | 136 | 65 | 236 |
| | Single fiber fineness | dtex | 2.6 | 2.6 | 2.6 |
| | Strength | cN/dtex | 9.0 | 8.3 | 8.7 |
| | Elongation rate | % | 23 | 22 | 22 |
| | Shrinkage rate after having been subjected to boiling water treatment at 98°C for 30 minutes | % | 12.0 | 12.0 | 12.0 |
| | Strength after the boiling water treatment | cN/dtex | 7.9 | 7.3 | 7.7 |
| | Stress at 10% elongation after the boiling water treatment | cN/dtex | 0.8 | 0.9 | 0.9 |
| | Number of yarn breaking times | times/100 kg | 0 | 1 | 1 |
| Airbag fabric | Shrinkage rate of fabric by boiling water treatment (warp direction) | % | 0.3 | 0.3 | 0.3 |
| | Shrinkage rate of fabric by boiling water treatment (weft direction) | % | 0.3 | 0.3 | 0.3 |
| | Overall fineness of each component yarn (warp) | dtex | 391 | 190 | 676 |
| | Overall fineness of each component yarn (weft) | dtex | 391 | 190 | 676 |
| | Single fiber fineness in each component yarn (warp) | dtex | 2.9 | 2.9 | 2.9 |
| | Single fiber fineness in each component yarn (weft) | dtex | 2.9 | 2.9 | 2.9 |
| | Strength of component yarns (warp) | cN/dtex | 8.0 | 7.3 | 7.7 |
| | Strength of component yarns (weft) | cN/dtex | 8.0 | 7.3 | 7.7 |
| | Stress at 10% elongation of component yarns (warp) | cN/dtex | 1.0 | 1.1 | 1.0 |
| | Stress at 10% elongation of component yarns(weft) | cN/dtex | 1.0 | 1.0 | 1.1 |
| | Tensile strength (warp direction) | N/cm | 693 | 417 | 767 |
| | Tensile strength (weft direction) | N/cm | 701 | 421 | 783 |
| | Tear tenacity (warp direction) | N | 253 | 165 | 214 |
| | Tear tenacity (weft direction) | N | 245 | 153 | 209 |
| | Number of warp yarns | yarns/2.54 cm | 59 | 85 | 45 |
| | Number weft yarns | yarns/2.54 cm | 59 | 85 | 45 |
| | Cover factor | – | 2213 | 2222 | 2219 |
| | Bending resistance (warp direction) | mm | 54 | 45 | 107 |
| | Bending resistance (weft direction) | mm | 53 | 47 | 102 |
| | Air permeability | $cc/cm^2/sec$ | 18 | 23 | 36 |
| | Accommodation capability | – | 80 | 70 | 127 |
| | Impact absorbability | – | 75 | 73 | 119 |
| | Inflatability | – | 100 | 73 | 93 |

[Industrial applicability]

Since the polyamide 56 filaments of this invention contain a polyamide 56 that is a biomass plastic, they are an environmentally friendly material. Further, since the filaments are excellent in mechanical properties, heat resistance, wear resistance and durability, they can be widely used for clothing and industrial applications and can also be used as fiber structures containing the filaments.

Further, said filaments can be heat-shrunken by such a means as wet heat treatment into filaments having high strength and low elastic modulus. If such filaments are woven into a woven fabric and the woven fabric is heat-treated by scouring and final setting, etc., then the woven fabric is superior in flexibility and impact absorbability to the woven fabric formed of conventional polyamide 66 filaments and also excellent in low air permeability, high strength, heat resistance and durability, being suitable for airbags.

## Claims

1. Polyamide 56 filaments **characterized by** having a relative viscosity in sulfuric acid of 3 to 8 (measured at a concentration of 0.25g/100ml of 98wt% sulfuric acid at 25°C), an Mw/Mn ratio of 1.5 to 3, a single fiber fineness of 0.1 to 7 dtex, a strength of 7 to 12 cN/dtex, a shrinkage rate of 5 to 20% after having been subjected to boiling water treatment at 98°C for 30 minutes, a strength of 5 to 11 cN/dtex after the boiling water treatment and a stress at 10% elongation of 0.3 to 1.5 cN/dtex after the boiling water treatment.

**2.** Polyamide 56 filaments, according to claim 1, which have an overall fineness of 200 to 600 dtex.

**3.** A fiber structure comprising the polyamide 56 filaments as set forth in claim 1 or 2.

**4.** An airbag fabric containing polyamide 56 filaments having a relative viscosity in sulfuric acid of 3 to 8 (measured at a concentration of 0.25g/100ml of 98wt% sulfuric acid at 25°C) and an Mw/Mn ratio of 1.5 to 3, the fabric having a shrinkage rate of 0 to 3% after having been subjected to boiling water treatment at 98°C for 30 minutes, an overall fineness of 200 to 600 dtex as each component yarn thereof, a single fiber fineness of 0.1 to 7 dtex in each component yarn thereof, a strength of 5 to 10 cN/dtex as each component yarn thereof, and a stress at 10% elongation of 0.3 to 2 cN/dtex as each component yarn thereof.

**5.** A process for producing polyamide 56 filaments comprising the steps of forming spun fibers with a relative viscosity in sulfuric acid of 3 to 8 (measured at a concentration of 0.25g/100ml of 98wt% sulfuric acid at 25°C) and an Mw/Mn ratio of 1.5 to 3, solidifying the spun fibers by cooling air, subsequently applying a water-free oil, taking up at 300 to 2000 m/min, subsequently stretching at such an stretching ratio as to ensure that the obtained filaments can have an elongation rate of 10 to 50%, heat-treating with the temperature of the final heat treatment roll kept at 210 to 250°C, subsequently relaxing at a relaxation ratio of 0.8 to 0.95, and subsequently winding.

**6.** A process for producing an airbag fabric comprising the step of applying wet heat treatment to the woven fabric containing the polyamide 56 filaments as set forth in claim 2, for heat-shrinking it.

**7.** A polyamide 56 resin **characterized by** having a relative viscosity in sulfuric acid of 3 to 8 (measured at a concentration of 0.25g/100ml of 98wt% sulfuric acid at 25°C) and an Mw/Mn ratio of 1.5 to 3.

**8.** Polyamide 56 resin pellets having a relative viscosity in sulfuric acid of 3 to 8 (measured at a concentration of 0.25g/100ml of 98wt% sulfuric acid at 25°C), an Mw/Mn ratio of 1.5 to 3, and a pellet size of 2 to 70 mg/pellet.

**9.** Polyamide 56 filaments comprising at least 90wt% of the polyamide 56 resin as set forth in claim 7.

**10.** Polyamide 56 filaments, according to claim 9, which have a single fiber fineness of 0.1 to 7 dtex, a shrinkage rate of 5 to 20% after having been subjected to boiling water treatment at 98°C for 30 minutes, and a strength of 5 to 11 cN/dtex after the boiling water treatment.

**11.** An airbag fabric, comprising the polyamide 56 filaments as set forth in claim 9 or 10.

**12.** A process for producing a polyamide 56 resin composed of 1,5-pentamethylenediamine and adipic acid, which is suitable for producing filaments as claimed in Claim 1, the process comprising the steps of subjecting raw materials with the ratio of the number of moles of 1,5-pentamethylenediamine to the number of moles of adipic acid kept in a range from 0.95 to 1.05, to pressure-heat polymerization in the presence of water, to produce pellets of a resin having the following properties (1) to (3), subsequently stirring said pellets with the temperature in the reactor kept in a range from 130 to 200°C while reducing the pressure to 133 Pa or lower, and performing solid phase polymerization for 1 to 48 hours.

(1) Relative viscosity in sulfuric acid: 2.9 or lower (measured at a concentration of 0.25g/100ml of 98wt% sulfuric acid at 25°C)
(2) $0.3 \leq [NH_2]/([NH_2] + [COOH]) \leq 0.7$
$[NH_2]$: Amino end group concentration in the polyamide 56 resin subjected to solid phase polymerization (eq/ton)
[COOH] : Carboxyl end group concentration in the polyamide 56 resin subjected to solid phase polymerization (eq/ton)
(3) Size of pellets: 2 to 70 mg/pellet

**13.** A process for producing a polyamide 56 resin, according to claim 12, wherein that 1,5-pentamethylenediamine is synthesized from a biomass-derived compound by one or more reactions selected from enzyme reaction, yeast reaction and fermentation reaction.

**14.** A process for producing a polyamide 56 resin, according to claim 13, wherein the biomass-derived compound is a glucose and/or lysine.

**Patentansprüche**

**1.** Polyamid-56-Filamente, die **dadurch gekennzeichnet sind, dass** sie eine relative Viskosität in Schwefelsäure von 3 bis 8 (gemessen bei einer Konzentration von 0,25 g/100 ml 98-Gew.-%iger Schwefelsäure bei 25 °C), ein Mw/Mn-Verhältnis von 1,5 bis 3, eine Einzelfaserfeinheit von 0,1 bis 7 dtex, eine Festigkeit von 7 bis 12 cN/dtex, eine Schrumpfungsrate von 5 bis 20 % nach Aussetzen gegenüber einer 30-minütigen Behandlung mit kochendem Wasser mit 98 °C, nach der Behandlung mit kochendem Wasser eine Festigkeit von 5 bis 11 cN/dtex und nach der Behandlung mit kochendem Wasser eine Spannung bei einer Dehnung von 10 % von 0,3 bis 1,5 cN/dtex aufweisen.

**2.** Polyamid-56-Filamente nach Anspruch 1, die eine Gesamtfeinheit von 200 bis 600 dtex aufweisen.

**3.** Faserstruktur, die Polyamid-56-Filamente nach Anspruch 1 oder 2 umfasst.

**4.** Airbaggewebe, das Polyamid-56-Filamente mit einer relativen Viskosität in Schwefelsäure von 3 bis 8 (gemessen bei einer Konzentration von 0,25 g/100 ml 98-Gew.-%iger Schwefelsäure bei 25 °C) und ein Mw/Mn-Verhältnis von 1,5 bis 3 umfasst, wobei das Gewebe eine Schrumpfungsrate von 0 bis 3 % nach Aussetzen gegenüber einer 30-minütigen Behandlung mit kochendem Wasser mit 98 °C, eine Gesamtfeinheit von 200 bis 600 dtex bezüglich der einzelnen Garnkomponenten davon, eine Einzelfaserfeinheit von 0,1 bis 7 dtex für jede Garnkomponente davon, eine Festigkeit von 5 bis 10 cN/dtex bezüglich der einzelnen Garnkomponenten davon und eine Spannung bei einer Dehnung von 10 % von 0,3 bis 2 cN/dtex bezüglich der einzelnen Garnkomponenten davon aufweist.

**5.** Verfahren zur Herstellung von Polyamid-56-Filamenten, das die Schritte des Ausbildens von gesponnenen Fasern mit einer relativen Viskosität in Schwefelsäure von 3 bis 8 (gemessen bei einer Konzentration von 0,25 g/100 ml 98-Gew.-%iger Schwefelsäure bei 25 °C) und einem Mw/Mn-Verhältnis von 1,5 bis 3, des Verfestigens der gesponnenen Fasern durch Kühlluft, des anschließenden Aufbringens eines wasserfreien Öls, des Aufnehmens mit 300 bis 2.000 m/min, des anschließenden Streckens mit einem Streckverhältnis, das sicherstellt, dass die erhaltenen Filamente eine Dehnungsrate von 10 bis 50 % aufweisen können, des Wärmebehandelns unter Halten der Endwärmebehandlungswalze bei 210 bis 250 °C, des anschließenden Entspannens bei einer Entspannungsrate von 0.8 bis 0,95 und des anschließenden Aufwickelns umfasst.

**6.** Verfahren zur Herstellung eines Airbaggewebes, das die Schritte des Anwendens einer Nasswärmebehandlung am Gewebe umfasst, das die Polyamid-56-Filamente nach Anspruch 2 umfasst, um dieses einer Wärmeschrumpfung zu unterziehen.

**7.** Polyamid-56-Harz, **dadurch gekennzeichnet, dass** es eine relative Viskosität in Schwefelsäure von 3 bis 8 (gemessen bei einer Konzentration von 0,25 g/100 ml 98-Gew.-%iger Schwefelsäure bei 25 °C) und ein Mw/Mn-Verhältnis von 1,5 bis 3 aufweist.

**8.** Polyamid-56-Harzpellets mit einer relativen Viskosität in Schwefelsäure von 3 bis 8 (gemessen bei einer Konzentration von 0,25 g/100 ml 98-Gew.-%iger Schwefelsäure bei 25 °C) und einem Mw/Mn-Verhältnis von 1,5 bis 3 sowie einer Pelletgröße von 2 bis 70 mg/Pellet.

**9.** Polyamid-56-Filamente, die zumindest 90 Gew.-% eines Polyamid-56-Harzes nach Anspruch 7 umfassen.

**10.** Polyamid-56-Filamente nach Anspruch 9 mit einer Einzelfaserfeinheit von 0,1 bis 7 dtex, einer Schrumpfungsrate von 5 bis 20 % nach Aussetzen gegenüber einer 30-minütigen Behandlung mit kochendem Wasser mit 98 °C und einer Festigkeit von 5 bis 11 cN/dtex nach der Behandlung mit kochendem Wasser.

**11.** Airbaggewebe, das Polyamid-56-Filamente nach Anspruch 9 oder 10 umfasst.

**12.** Verfahren zur Herstellung eines Polyamid-56-Harzes, das aus 1,5-Pentamethylendiamin und Adipinsäure besteht und zur Herstellung von Filamenten nach Anspruch 1 geeignet ist, wobei das Verfahren die Schritte des Durchführens einer Druck-Wärmepolymerisation mit einem Rohmaterial mit einem Verhältnis zwischen der Molanzahl von 1,5-Pentamethylendiamin und der Molanzahl von Adipinsäure im Bereich von 0,95 bis 1,05 in Gegenwart von Wasser zur Herstellung von Pellets aus einem Harz mit den folgenden Eigenschaften (1) bis (3), des anschließenden Rührens der Pellets unter Aufrechterhaltung einer Temperatur im Bereich von 130 bis 200 °C im Reaktor und Senkung des Drucks auf 133 Pa oder weniger sowie des Durchführens einer 1 bis 48 Stunden dauernden Festphasenpolymerisation umfasst:

(1) Relative Viskosität in Schwefelsäure: 2,9 oder niedriger (gemessen bei einer Konzentration von 0,25 g/100 ml 98-Gew.-%iger Schwefelsäure bei 25 °C);
(2) $0,3 \leq [NH_2] / ([NH_2] + [COOH]) \leq 0,7$
$[NH_2]$: Aminoendgruppenkonzentration im Polyamid-56-Harz, das einer Festphasenpolymerisation ausgesetzt wird (Äquiv./Tonne)
[COOH]: Carboxylendgrupppenkonzentration im Polyamid-56-Harz, das einer Festphasenpolymerisation ausgesetzt wird (Äquiv./Tonne)
(3) Größe der Pellets: 2 bis 70 mg/Pellet.

**13.** Verfahren zur Herstellung eines Polyamid-56-Harzes nach Anspruch 12, worin das 1,5-Pentamethylendiamin mittels einer oder mehrerer, aus Enzymreaktion, Hefereaktion und Fermentationsreaktion ausgewählter Reaktionen aus einer von Biomasse stammenden Verbindung synthetisiert wird.

**14.** Verfahren zur Herstellung eines Polyamid-56-Harzes nach Anspruch 13, wobei die aus Biomasse stammende Verbindung eine Glucose und/oder Lysin ist/sind.

## Revendications

**1.** Filaments en polyamide 56 **caractérisés en ce qu'**ils ont une viscosité relative dans l'acide sulfurique de 3 à 8 (mesurée à une concentration de 0,25 g/100 ml d'acide sulfurique à 98 % en poids à 25°C), un rapport Mw/Mn de 1,5 à 3, une finesse de fibre isolée de 0,1 à 7 dtex, une résistance de 7 à 12 cN/dtex, un taux de retrait de 5 à 20 % après qu'ils ont été soumis à un traitement dans de l'eau bouillante à 98°C pendant 30 minutes, une résistance de 5 à 11 cN/dtex après le traitement à l'eau bouillante et une contrainte à un allongement de 10 % de 0,3 à 1,5 cN/dtex après le traitement à l'eau bouillante.

**2.** Filaments en polyamide 56 selon la revendication 1, qui ont une finesse globale de 200 à 600 dtex.

**3.** Structure fibreuse comprenant les filaments en polyamide 56 tels qu'indiqués dans la revendication 1 ou 2.

**4.** Etoffe pour coussin de sécurité gonflable contenant des filaments en polyamide 56 ayant une viscosité relative dans l'acide sulfurique de 3 à 8 (mesurée à une concentration de 0,25 g/100 ml d'acide sulfurique à 98 % en poids à 25°C), un rapport Mw/Mn de 1,5 à 3, l'étoffe ayant un taux de retrait de 0 à 3 % après qu'elle a été soumise à un traitement dans de l'eau bouillante à 98°C pendant 30 minutes, une finesse globale de 200 à 600 dtex pour chaque fil constitutif de celle-ci, une finesse de fibre isolée de 0,1 à 7 dtex dans chaque fil constitutif de celle-ci, une résistance de 5 à 10 cN/dtex pour chaque fil constitutif de celle-ci, et une contrainte à un allongement de 10 % de 0,3 à 2 cN/dtex pour chaque fil constitutif de celle-ci.

**5.** Procédé pour produire des filaments en polyamide 56 comprenant les étapes consistant à former des fibres filées ayant une viscosité relative dans l'acide sulfurique de 3 à 8 (mesurée à une concentration de 0,25 g/100 ml d'acide sulfurique à 98 % en poids à 25°C) et un rapport Mw/Mn de 1,5 à 3, à solidifier les fibres filées avec de l'air de refroidissement, ensuite à appliquer une huile anhydre, à enrouler à 300 à 2000 m/min, ensuite à étirer à un rapport d'étirage tel qu'il assure que les filaments obtenus puissent avoir un taux d'allongement de 10 à 50 %, à traiter à la chaleur en maintenant la température du rouleau de traitement thermique final à 210-250°C, ensuite à relaxer à un taux de relaxation de 0,8 à 0,95, et ensuite à enrouler.

**6.** Procédé pour produire une étoffe pour coussin de sécurité gonflable, comprenant l'étape consistant à appliquer un traitement à la chaleur humide à l'étoffe tissée contenant les filaments en polyamide 56 tels que présentés dans la revendication 2, pour qu'elle subisse un retrait thermique.

**7.** Résine de polyamide 56 **caractérisée en ce qu'**elle a une viscosité relative dans l'acide sulfurique de 3 à 8 (mesurée à une concentration de 0,25 g/100 ml d'acide sulfurique à 98 % en poids à 25°C) et un rapport Mw/Mn de 1,5 à 3.

**8.** Pastilles en résine de polyamide 56 ayant une viscosité relative dans l'acide sulfurique de 3 à 8 (mesurée à une concentration de 0,25 g/100 ml d'acide sulfurique à 98 % en poids à 25°C), un rapport Mw/Mn de 1,5 à 3, et une taille de pastille de 2 à 70 mg/pastille.

**9.** Filaments en polyamide 56 comprenant au moins 90 % en poids de la résine de polyamide 56 telle qu'indiquée dans la revendication 7.

**10.** Filaments en polyamide 56 selon la revendication 9, qui ont une finesse de fibre isolée de 0,1 à 7 dtex, un taux de retrait de 5 à 20 % après qu'ils ont été soumis à un traitement dans de l'eau bouillante à 98°C pendant 30 minutes, et une résistance de 5 à 11 cN/dtex après le traitement à l'eau bouillante.

**11.** Etoffe pour coussin de sécurité gonflable comprenant les filaments en polyamide 56 tels qu'indiqués dans la revendication 9 ou 10.

**12.** Procédé pour produire une résine de polyamide 56 composée de 1,5-pentaméthylènediamine et d'acide adipique, qui convient pour la production de filaments tels que revendiqués dans la revendication 1, le procédé comprenant les étapes consistant à soumettre les matières premières, ayant un rapport du nombre de moles de 1,5-pentaméthylènediamine au nombre de moles de l'acide adipique maintenu dans la plage allant de 0,95 à 1,05, à une polymérisation par application de chaleur et de pression en présence d'eau, pour produire des pastilles d'une résine ayant les propriétés (1) à (3) suivantes, ensuite à agiter lesdites pastilles, la température dans le réacteur étant maintenue dans la plage allant de 130 à 200°C cependant que la pression est réduite à 133 Pa ou moins, et à mettre en oeuvre une polymérisation en phase solide pendant 1 à 48 heures :

(1) viscosité relative dans l'acide sulfurique : 2,9 ou moins (mesurée à une concentration de 0,25 g/100 ml d'acide sulfurique à 98 % en poids à 25°C)
(2) $0,3 \leq [NH_2] / ([NH_2] + [COOH]) \leq 0,7$
$[NH_2]$ : concentration de groupes terminaux amino dans la résine de polyamide 56 soumise à une polymérisation en phase solide (éq/tonne)
[COOH] : concentration de groupes terminaux carboxyle dans la résine de polyamide 56 soumise à une polymérisation en phase solide (éq/tonne)
(3) taille des pastilles : 2 à 70 mg/pastille.

**13.** Procédé pour produire une résine de polyamide 56 selon la revendication 12, dans lequel la 1,5-pentaméthylènediamine est synthétisée à partir d'un composé dérivé d'une biomasse par une ou plusieurs réactions choisies parmi une réaction enzymatique, une réaction utilisant une levure, et une réaction de fermentation.

**14.** Procédé pour produire une résine de polyamide 56 selon la revendication 13, dans lequel le composé dérivé d'une biomasse est le glucose et/ou la lysine.

Fig.1

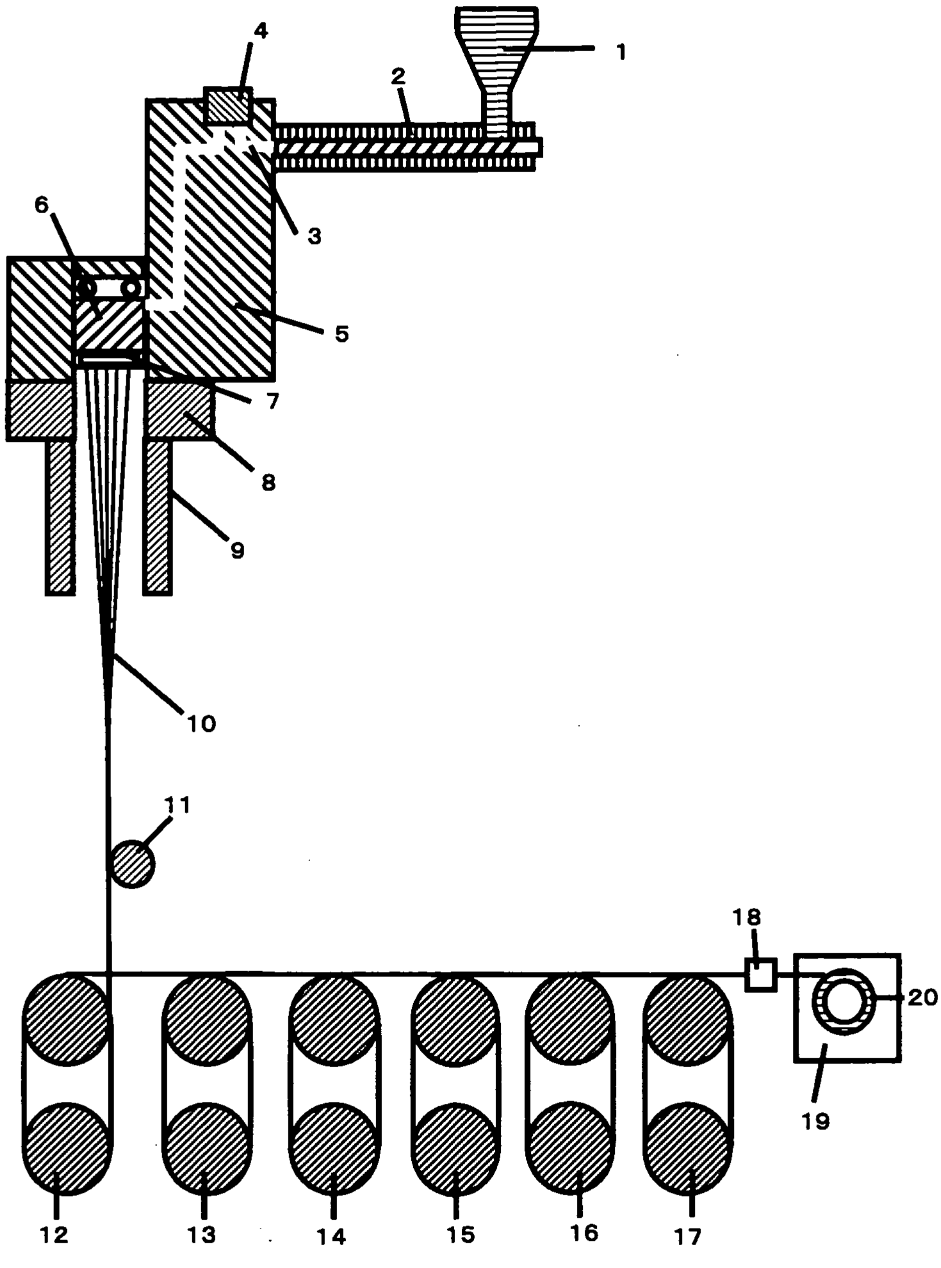

Fig.2

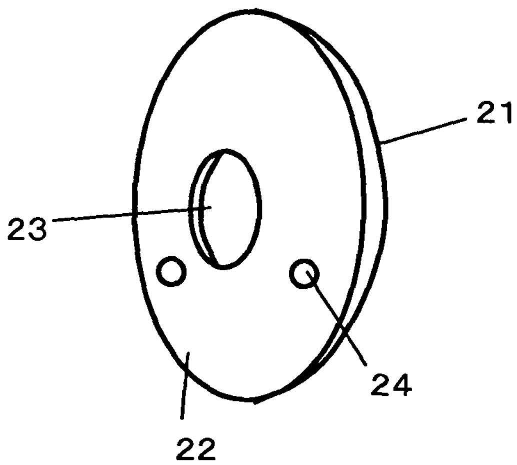

Fig.3

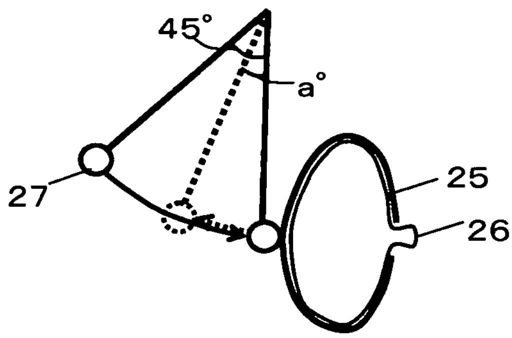

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2950954 B
- JP 3180524 B
- JP 2003292612 A
- JP 2004075932 A
- JP 2006144163 A
- JP 202223771 A
- JP 2004000114 A
- JP 2004208646 A
- JP 2004290091 A
- JP 2004298034 A
- JP 2002223770 A
- JP 2004222569 A


### Non-patent literature cited in the description


- *J. Polym. Sci.,* 1947, vol. 2, 306
- *J. Polym. Sci.,* 1961, vol. 50, 87
- *Macromolecules,* 1998, vol. 30, 8540
- **KENJI SODA ; HARUO MISONO ; SEIKAGAKU JIKKEN KOZA.** *Lectures of Biochemical Experiments,* 1976, vol. 11-jo, 179-191